(19) Europäisches Patentamt
European Patent Office
Office européen des brevets

(11) **EP 2 770 605 B1**

(12) **EUROPÄISCHE PATENTSCHRIFT**

(45) Veröffentlichungstag und Bekanntmachung des Hinweises auf die Patenterteilung:
**01.02.2017 Patentblatt 2017/05**

(51) Int Cl.:
*H02J 7/00* (2006.01)   *H02J 13/00* (2006.01)

(21) Anmeldenummer: **14156661.2**

(22) Anmeldetag: **25.02.2014**

(54) **Energieversorgungseinrichtung mit Batterieüberwachung und Batterieüberwachungsverfahren**

Power supply device with battery monitoring and battery monitoring method

Dispositif d'alimentation en énergie avec surveillance de la batterie et procédé de surveillance de la batterie

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: 25.02.2013   DE 202013100811 U
18.11.2013   DE 102013112698
17.01.2014   DE 102014100511
24.02.2014   DE 102014102366

(43) Veröffentlichungstag der Anmeldung:
**27.08.2014   Patentblatt 2014/35**

(73) Patentinhaber: **RP-Technik GmbH**
**63110 Rodgau (DE)**

(72) Erfinder:
• **Pasedag, Roland**
**63322 Rödermark (DE)**

• **Pasedag, Reinald**
**63110 Rodgau (DE)**
• **Ranostaj, Frank, Dr. phil. nat.**
**60437 Frankfurt am Main (DE)**
• **Sezmener, Erol**
**60488 Frankfurt am Main (DE)**
• **Eichler, Martin, Dr. phil. nat.**
**61350 Bad Homburg (DE)**
• **Harms, Matthias**
**63500 Seligenstadt (DE)**

(74) Vertreter: **Cremer, Christian**
**Cremer & Cremer**
**Patentanwälte**
**St.-Barbara-Straße 16**
**89077 Ulm (DE)**

(56) Entgegenhaltungen:
WO-A1-96/41408          US-A1- 2012 116 699
US-A1- 2013 002 208

## Beschreibung

Die vorliegende Erfindung betrifft eine Energieversorgungseinrichtung, die zum Beispiel mit einem Batterieschrank ausgestattet einen Teil einer Notlichtbeleuchtungsanlage darstellen kann. Die Energieversorgungseinrichtung umfasst neben dem Batterieschrank oder Batteriegestell, meist in einem eigenen - mitunter entfernten - Batterieraum, eine zentrale Überwachungselektronik und eine zentrale Steuerungselektronik. Häufig sind Überwachungselektronik und Steuerungselektronik zu einer Einheit integriert.

Die vorliegende Erfindung betrifft also eine Energieversorgungseinrichtung nach dem Oberbegriff des Patentanspruchs 1 und ein Betriebsverfahren nach dem Oberbegriff des Patentanspruchs 20.

## Technischer Hintergrund

Energieversorgungseinrichtungen werden in zahlreichen Anwendungsgebieten verwendet, unter anderem als unterbrechungsfreie Spannungsversorgungseinrichtungen, ein ganz besonderer, sicherheitsrelevanter Anwendungsfall ergibt sich aus dem Anwendungsgebiet der zentralisierten Versorgung von Notlichtbeleuchtung.

Notlichtbeleuchtungsanlagen sollen in den Zuständen eine ausreichende Beleuchtung eines dem öffentlichen Verkehr zugänglichen Gebäudes sicherstellen, in denen - aus welchem Grund auch immer - die reguläre Netzversorgung, d. h. also die reguläre Wechselspannungsversorgung, z. B. das 230 V-Netz, als gestört gilt. Notlichtbeleuchtungsanlagen haben häufig eine Vorrangschaltung, solange irgendwo noch eine Netzversorgung in den Komponenten der Notlichtbeleuchtungsanlage auffindbar ist, wird die Netzversorgung an die Dauerlichtleuchten oder an die Bereitschaftslichtleuchten weitergeleitet. Greift die Vorrangschaltung nicht mehr sicher auf irgendeine Art von Netzspannung zurück, so muss die Energieversorgung mithilfe der Einrichtung über eine gewisse Zeit, die in Normen wie der in weiten Teilen Europas gültigen EN 50171:2001, insbesondere unter Punkt 3.20 mit z. B. 3 Stunden bzw. 1 Stunde je nach Leistungsbedarf bestimmt sind, sichergestellt sein. Weitere einschlägige Bestimmungen zur Auslegung der Notlichtbeleuchtungsanlagen und insbesondere zur Auslegung der Energiespeicher, die den jeweiligen Notlichtbeleuchtungsplanern, die in den verschiedenen Staaten tätig sind, bekannt sein müssen, lassen sich z. B. der für Deutschland erlassenen (Vor-)Norm DIN VDE 0108 entnehmen. In anderen Staaten sind vergleichbare Normen in Kraft getreten, z. B. die ÖVE /ÖNORM E-8002-Reihe für die Republik Österreich. Das bedeutet, dass die Energiespeicher wie Akkumulatoren, Batterien oder Brennstoffzellen eine ausreichende Kapazität zur Verfügung stellen müssen. Häufig werden die Energieversorgungseinrichtungen daher schlichtweg für die Anzahl der anschließbaren Verbraucher der Notlichtbeleuchtungsanlage, wie z. B. Dauerlichtleuchten, Bereitschaftslichtleuchten und Fluchtwegsbeleuchtung, überdimensioniert.

Wie Notlichtbeleuchtungsanlagen mit zentralisiert angeordneten Batterien und Akkumulatoren generell funktionieren, lässt sich unter anderem den Beschreibungen der EP 2 081 415 B1 (Anmelder: RP-Technik e. K.; Anmeldetag: 09.01.2008), der DE 10 2008 017 533 B3 (Anmelder: RP-Technik e. K.; Anmeldetag: 03.04.2008), der DE 10 2007 062 957 A1 (Anmelder: RP-Technik e. K.; Anmeldetag: 21.12.2007) und der AT 506 780 B1 (Anmelder: RP-Technik e. K.; Prioritätstag: 21.12.2007) entnehmen, die durch diese Referenzen als vollinhaltlich in Bezug auf die Beschreibung von vorteilhaften Zentral- und Gruppenbatteriesystemen, von Energieversorgungseinrichtungen und unterbrechungsfreien Stromversorgungssystemen in die vorliegende Beschreibung als inkorporiert gelten. Für solche Anlagen ist die nachfolgend beschriebene Erfindung geeignet.

In den Zeiten, in denen von einer ungestörten Netzversorgung ausgegangen werden kann, werden die Energiespeicherpakete wie Akkumulatoren bzw. Sekundärzellenblöcke entweder aufgeladen oder erhalten eine permanente Dauerladung bzw. Erhaltungsladung.

## Bisherige Lösungsvorschläge

Trotz des Vorhaltens von ausreichenden Reserven gibt es bei einzelnen Notlichtbeleuchtungsanlagenkonzeptionen den Wunsch, zusätzlich den Zustand der Energiespeicherpakete grob einschätzen zu können. Hierzu sind bisher schon unterschiedliche Überlegungen vorgestellt worden. Die DE 198 36 141 C1 (Patentinhaberin: CEAG Sicherheitstechnik GmbH; Anmeldetag: 10.08.1998) schlägt vor, neben einer Mittenanzapfung zusätzlich die Temperatur der Energiespeicher zu überwachen. Von einem ähnlichen Ansatz startend berichtet die EP 0 980 131 B1 (Patentinhaberin: CEAG Notlichtsysteme GmbH; Prioritätstag: 10.08.1998), dass eine Vergleicherschaltung zusätzlich vorzuhalten ist, sodass über eine Taktung einer Fühlerleitung in Abhängigkeit eines Differenzwertes Überlastungen des Batteriesatzes überwacht werden können. In beiden Patenten wird davon berichtet, dass eine spezielle Fühlerleitung, die vorzugsweise wenigstens zweipolig sein soll, vorhanden sein muss, über die die Messwerte wie Differenzwerte abgeleitet von verschiedenen Spannungen untereinander in getakteter Weise übertragen werden.

Weitere Überwachungsschaltungsmöglichkeiten werden in der US 2009 140 870 A1 (Anmelderin: O2Micro Inc.; Anmeldetag: 12.11.2008) und der US 2008 129 522 A1 (Anmelderin: O2Micro Inc.; Anmeldetag: 30.11.2007) vorgestellt. Es sollen Messwerte eines Batteriesystems wie ein Spannungswert oder ein Temperaturwert über einen Schwellwertdiskriminator ggf. an einen Hf-Oszillator weitergeleitet werden. Eine Detektionsschaltung kann bei unerwünschten Messwerten dann eine An- oder Abkoppelung des Batteriesystems von den weiterführenden Versorgungsleitungen erzeugen.

In der CN 101 349 738 A (Anmelderin: Univ. Fujian; Prioritätstag: 27.08.2008) werden Überwachungsschaltungen für Batterien mit einem hochauflösenden Analog-Digital-Konverter vorgeschlagen, die über Schalter geführt analoge Signale einlesen können. Hierbei geht es um eine möglichst exakte Erfassung der Messwerte der Batterien. Demgegenüber wird eine primitivere Maßnahme in der JP 2000 123 883 A (Anmelderin: NGK Insulators LTD et. al.; Anmeldetag: 09.10.1998) vorgestellt, bei der einfach nur auf Voltmeter zurückgegriffen werden soll.

Eine komplette Einheit, die für eine Serienschaltung von Batterien eine Ladungs- und Entladungssteuerung und -überwachung übernehmen soll, wird in der US 2003 175 560 A1 (Erfinder: Hun-June Kim et. al.; Prioritätstag: 18.05.2002) beschrieben. In der dargelegten Schaltung wird ein Anschluss mit fünf verschiedenen Kontakten beschrieben, über die eine Kommunikation mit einem Hostgerät aufgenommen werden kann. Mit den Anschlüssen C, D und S wird der Kommunikationsbus bezeichnet. Zusätzlich gibt es Anschlüsse für die positive und die negative Spannung des Batteriepacks. Es sind daher fünf Kabel zwischen Hostgerät und dem Batteriepack zu verlegen.

Die US 2012 116 699 A1 (Anmelderin: International Business Machines Corporation; Prioritätstag: 09.11.2010) sieht Vorteile einer Überwachung eines größeren Batteriearrays in der kabelungebundenen Übertragung der Messdaten mittels Funk. Zur Analyse einzelner Zellen soll ein spezieller ACU-Chip geschaffen werden, der Strom, Spannung und eine Temperatur einer Einzelzelle messen soll. Falls ein ACU-Chip Messwerte außerhalb eines Spezifikationsrahmens sieht, soll im so angenommenen Fehlerfall die einzelne Zelle kurzgeschlossen werden (siehe Abs. [0034]).

Am Markt angeboten wird zudem ein Funk-basiertes System von dem schweizerischen Unternehmen Nextys aus CH-6572 Quartino, das unter der Bezeichnung "Battmaster" vertrieben wird. Dieses kommerziell erhältliche Produkt basiert auf einer Zentraleinheit für das Datensammeln, die über Funk von bis zu 1024 Datenaufnahmeeinheiten empfangene Messdaten über die Spannung, über die Temperatur und über den Innenwiderstand von einzelnen Batterien bis zu fünf Jahre lang mitschreiben kann.

In einem Werbekatalog mit der Bezeichnung "BACS" wird eine Batterieüberwachung vorgestellt, die an einem Batteriestrang als zusätzlicher Batteriedeckel auf die Polseite der Batterie aufgesetzt werden kann. Mit solchen Batterieüberwachungen sollen die Batterien eines Batteriestrangs auf dem gleichen Ladeniveau gehalten werden können. Die Batterieüberwachungsmodule lassen sich über gesonderte Adern an einen Computer mit Software anschließen.

Weitere Systeme dieser Art werden in der US 2008 094 068 A1 und in der EP 2 434 583 A1 beschrieben.

Eine Steuerung und Überwachung von aufladbaren Batterien wird in der Patentanmeldung US 2013/0 002 208 A1 (Anmelder: L. Rozenboim; innerer Prioritätstag: 02.07.2011) beschrieben. Ein Überwachungsgerät bzw. Datensammelgerät soll an jede Zelle in einer Batteriezellenanordnung anschließbar sein. Die Zellenspannung wird erfasst und als ein hochfrequentes AC-Signal über die DC-Stromleitungen gesendet. Auch eine Temperaturerfassung wird erwähnt. Außerdem wird ein entsprechendes Kommunikationsverfahren vorgestellt. Das Gerät umfasst als eine wesentliche Komponente eine Rogowsky-Spule, mit der die Hochfrequenzsignale auf die Leitungen gekoppelt werden. Zur Datenaufnahme an den Zellen dient ein niederpreisiger Mikrocontroller, der für die Durchführung von Messungen, Digitalisierung und Übertragungen eingesetzt ist. Eine Zusammenfassung von Daten kann vom Mikrokontroller periodisch in kurzen Pulszügen übertragen werden, sodass die Leitungen die meiste Zeit frei von Hochfrequenzsignalen bleiben sollen. Insbesondere um eine Gefahr von Kollisionen der Übertragungen von den einzelnen Zellen so gering wie möglich zu halten, wird vorgeschlagen, die Übertragung in randomisierten Zeitabständen vorzunehmen.

Aus dem Bereich der mobilen, fahrenden Systeme mit elektrischen Energiequellen sind auch zahlreiche Batterieüberwachungssysteme bekannt, die in der Regel die Besonderheiten von metallischen Fahrzeugrahmen nutzen und berücksichtigen können. Hierbei arbeiten diese Systeme häufig mit Bezugnahme auf die Fahrzeugmasse, die häufig durch den Fahrzeugrahmen gebildet wird. Auch sind in solchen Systemen die zu verkabelnden Wege zwischen Sendern und Empfängern als recht kurz in absoluter Länge anzusehen. Häufig müssen nur wenige Meter von einem Sender zu einem Empfänger zurückgelegt werden. Die Störquellen in dem Fahrzeug sind schon bei der Fahrzeugauslegung, spätestens in der ersten Versuchsphase bekannt, und können bei der Kabelführung, bei der Signalgestaltung, der Signalstärke und bei der Kopplung der Sender und Empfänger berücksichtigt werden. Ein Signalstörabstand kann während der Entwicklung vieler Fahrzeuge einmal festgelegt werden, der dann bei jedem Fahrzeug des gleichen Typs eingehalten werden kann.

Die DE 43 06 185 C2 (Patentinhaberin: Leuze electronic GmbH + Co; Anmeldetag: 27.02.1993) widmet sich einem prinzipiellen Schaltungsentwurf für mit Starkstromleitungen ausgestattete, flexible Fertigungssysteme bzw. von Fabrikanlagen, z. B. zur Überwachung und Steuerung von Fließbandanlagen. Ein Teil der Busleitungen soll durch eine berührungslose Übertragungsstrecke für Datenübertragungen ersetzt werden. Die berührungslosen Übertragungsstrecken sind deswegen notwendig, weil die Übertragung zum Datenaustausch zwischen den mobilen Systemen, genauer fahrerlosen Transportfahrzeugen, auf denen eine bestimmte Anzahl von Sensoren und Aktuatoren installiert ist, und einem ortsfest installierten Teilsystem des Feldbussystems, das die Steuereinheit umfassen kann, bestimmt ist. Mit anderen Worten, auf einem sich bewegenden, fahrerlosen, mit einer separaten Stromversorgung ausgestatteten Transportfahrzeug angeordnete Sensoren oder Aktuatoren sollen gem. der DE 43 06 185 C2 auf optischem Wege an eine ortsfeste Steuereinheit anbindbar sein. Optische Strecken lassen sich in der Regel nur innerhalb eines Sichtbereichs realisieren.

Sowohl die DE 601 28 601 T2 (Patentinhaberin: Eaton Power Quality Corp.; Prioritätstag: 29.03.2000) als auch die DE 696 29 470 T2 (Patentinhaberin: Amerigon, Inc.; Prioritätstag: 28.06.1995) sind zumindest passagenweise, wenn nicht sogar über viele Absätze hinweg in einem unverständlichen Deutsch verfasst. Werden die den Übersetzungen zugrundeliegenden EP-Patente EP 1 462 813 B1 (Patentinhaberin: Eaton Power Quality Corporation) und EP 0 832 391 B1 (Patentinhaberin: Amerigon, Inc.) durchgelesen, so ist zu erkennen, dass weitere Beschreibungen von Batterieüberwachungsschaltungen in den Dokumenten vorzufinden sind. Die EP 1 462 813 B1 schlägt vor, an einer Mittenanzapfung zwischen zwei Batteriepaketen eine Spannung zu überwachen. Die Batteriepakete sollen modulartig in einem Batterieschrank einsteckbar sein, der als unterbrechungsfreie Stromversorgung nutzbar ist. Ein einziger Mikrokontroller soll an einer so prominenten Stelle wie einer Kopfleiste des Batterieschrankes angeordnet werden, über den ein Display ansteuerbar ist. Das Prinzipschaltbild zeigt eine einzige Analogmessleitung, über die alle Batterien überwachbar sein sollen, indem unter Zuhilfenahme eines Schieberegisters die jeweilige zumessende Batteriemittenanzapfung über einen in die jeweilige Batteriemittenanzapfung eingebauten MOS-FET freigeschaltet wird. Durch den gesamten Batterieschrank hindurch sind also, wie sich z. B. bei systemischen Betrachtung auch aus der EP 0 980 131 B1 ergibt, gesonderte Fühlerleitungen, die in der einen Patentschrift parallel und in der anderen Patentschrift in Serie verschaltet sind, bis zu der Steuereinheit vorzuhalten. Bei so abgeschlossenen Systemen wie einem modularen Batterieschrank, in dessen Einschubsfächern nur herstellerspezifische Module mit ganz bestimmt angeordneten Steckverbindungen befestigbar sind, trägt das Vorhalten von zusätzlichen Fühlerleitungen vermutlich nur in den Fällen zu einer geringen Anzahl an (Wartungs-)Fehlern bei, die bei der Wartung auf falsch verdrahtete Fühlerleitungen zurückzuführen sind, in denen durch den Typ der Module, die Art der Tauschmöglichkeiten und die proprietären Steckbelegungen sowieso nur ganze Einschubmodule austauschbar sind, nicht aber auf Batterieniveau Wartungen vorgenommen werden können.

Aus der WO 96/041 408 A1 (Anmelderin: National Digital Electronics, Inc.; Prioritätstag: 07.06.1995) ist ein Telemetrie- und Steuersystem bekannt, das für eine Pulszug-Kommunikation in Automobilen verwendbar sein soll. Die Kommunikation, nämlich Übertragung und Empfang, soll über bereits vorhandene Stromkreise zwischen Geräten an verschiedenen Orten erfolgen. Die gepulsten Signale ähneln hierbei dem Umgebungsrauschen, das üblicherweise auf den Stromkreisen, z. B. durch die Motorzündung, vorhanden ist. Damit soll es möglich sein, den Zustand verschiedener Module durch Einstecken einer tragbaren Hauptüberwachungseinheit in eine Anzündersteckdose des Automobils durch eine Zwei-Wege-Kommunikation abzufragen. Weiterhin wird eine Überwachung der Autobatterie als eine Anwendungsmöglichkeit erläutert.

Die EP 0 832 391 B1 beschreibt ein Energiemanagementsystem (EMS), das mit mehreren Batteriecontrolmodulen (BCM) aufzubauen ist, wobei ein Batteriecontrolmodul mit einem Kontroller ausgestattet sein soll. Weiterhin gehört zu dem Energiemanagementsystem eine weitere Controleinheit, die Daten zu und von jedem Batteriecontrolmodul über eine Radiofrequenz übertragen bzw. empfangen können soll. Die hochfrequenten Signale im Bereich von 4,5 MHz für die Datenübertragung werden durch einen Frequenzfilter geschickt, der als Überlagerungsempfänger arbeiten soll, um anschließend von einem FM-Demodulator aufbereitet an einen POCSAG-Decoder weitergeleitet zu werden. Alle Batteriecontrolmodule empfangen also einheitlich und erst durch die Auswertung der im POCSAG-Format vorhandenen Informationen durch alle Kontroller können bis zu sechs unterschiedliche Befehle übertragen werden. Wird folglich ein Befehl von der Controleinheit losgeschickt, so fühlt sich zunächst jeder Kontroller angesprochen. Jeder Kontroller bearbeitet das empfangene POCSAG-Signal und prüft mittels Mustervergleich, ob er tatsächlich adressiert worden ist. Das Ergebnis eines solchen Batterieüberwachungskonzeptes ist, dass sämtliche Kontroller der Batteriecontrolmodule zeitgleich und permanent allesamt die gleiche Arbeit absolvieren.

Die mobilen Systeme können in der Regel nicht auf das Anwendungsgebiet Notlichtbeleuchtungsanlage übertragen werden, weil viele Gegebenheiten, die im Fahrzeug vorzufinden sind und auch von entsprechenden Batterieüberwachungen vorteilhafterweise daher genutzt werden, nicht mit den einschlägigen Normen für Notlichtbeleuchtungsanlagen wie insbesondere der DIN VDE 0100-510 aus der 60364-Reihe in Einklang zu bringen sind. Erschwerend kommt hinzu, dass jede einzelne Notlichtbeleuchtungsanlage im Endeffekt als Unikat zu betrachten ist, das aber auf standardisierte Komponenten zurückgreifen können sollte.

Trotz der zum Teil nicht besonders alltagstauglichen Kommunikationslösungen für das Anwendungsgebiet der Notlichtbeleuchtungsanlagen, insbesondere der Zentralbatterieanlagen, und ihrer erhöhten Wartungsintervalle, Wartungsumfänge und Eingriffstiefe in die Energieversorgungseinrichtung können die zuvor zitierten Druckschriften als Erklärungen in Bezug auf die zu messenden Signale, die Art der Messungen, die Häufigkeit der Kommunikation und die Art der Überwachung herangezogen werden. Die zuvor genannten Druckschriften gelten in Bezug auf die Messungen, die Signalaufbereitung, die Signalberechnung und die Art der Überwachung durch ihre Benennungen als vollinhaltlich in vorliegende Erfindungsbeschreibung inkorporiert. Die Zitate der Druckschriften ersetzen eine erneute Vorstellung bzw. Erörterung der oben angesprochen Offenbarungsumfänge im Zusammenhang mit nachfolgender Erfindungsbeschreibung und treten an ihre Stelle.

**Zielsetzung**

In Notstromversorgungsanlagen, die insbesondere in Notlichtbeleuchtungsanlagen Verwendung finden, unterliegen die Akkumulatoren bzw. Sekundärzellenblöcke einer regelmäßigen Wartung und einem häufigeren Austausch. Die sogenannten Batterieschränke sind häufig mit einer sehr großen Anzahl von Akkumulatoren ausgestattet, z. B. mit jeweils 18 in Reihe verschalteten Akkumulatorenblöcken. Hierbei werden die Akkumulatoren gelegentlich irgendwie von dem Wartungspersonal eingebaut. Das Ergebnis ist teilweise, dass der Betreiber der Sicherheitsbeleuchtungsanlage von gänzlich falschen Ladezuständen, Restlebensdauern und Schädigungen der Akkumulatoren ausgeht, weil nach dem Austausch der Akkumulatoren eine ordnungsgemäße Beschaltung der Akkumulatoren nicht immer gewährleistet ist und eine Abstimmung mit bzw. Umprogrammierung der Überwachungssoftware häufig unterbleibt.

In Notstromversorgungsanlagen lassen sich die unterschiedlichsten Batterietypen vorfinden. Insbesondere bei Fremdsystemen ist dem Wartungs- und Reparaturpersonal vor dem ersten Besuch selten bekannt, welche Batterien sie in der aufzusuchenden Notstromversorgungsanlage vorfinden werden. So ist es bekannt, dass es Anlagen mit Sekundärzellenblöcken gibt, die aus Bleibatterien aufgebaut sind. Genauso lassen sich Notstromversorgungsanlagen mit $LiFePO_4$-Akkumulatorenblöcken und mit NiMh-Akkumulatorblöcken aufbauen. Wie allgemein bekannt ist, weichen die Blockspannungen der unterschiedlichen Batterietypen, der Sekundärzellenblöcke, voneinander ab. Auch sind je nach Notstromversorgungsanlage die Notstrom(-Gleich-)spannungen von Anlagentyp zu Anlagentyp unterschiedlich, sie liegen aber untereinander in einem vergleichbaren Spannungsband.

Es besteht also ein Wunsch, Energieversorgungseinrichtungen, insbesondere für Notlichtversorgungsanlagen, in ihrer Zuverlässigkeit weiter zu steigern, wobei ein geringer Material- und Installationsaufwand besonders zu begrüßen ist.

**Erfindungsbeschreibung**

Die erfindungsgemäße Aufgabe wird durch eine Energieversorgungseinrichtung nach Hauptanspruch gelöst. Ein vorteilhaftes Betriebsverfahren für entsprechend ausgestattete Energieversorgungseinrichtungen lässt sich Anspruch 20 entnehmen. Vorteilhafte Weiterbildungen lassen sich den abhängigen Ansprüchen entnehmen.

Ist die Energieversorgungseinrichtung eine Zentralbatterieanlage oder eine Gruppenbatterieanlage, so umfasst die Energieversorgungseinrichtung eine Primärseite und eine Sekundärseite. An der Primärseite wird in der Regel die Netzspannung eines Energieversorgers angeschlossen. An der Sekundärseite werden Unterverteiler und/oder Verbraucher wie Notlichtlampen angeschlossen. Die Energieversorgungseinrichtung greift auf mehrere elektrochemische Energiespeicherpakete wie Bleiakkumulatoren zurück, die untereinander verbunden sind. Somit bleibt durch Parallel- und/oder Serienschaltung der Energiespeicherpakete wenigstens über eine Mindestzeit eine Energieversorgung (z. B. 1 h oder z. B. sogar 3 h) auf der Sekundärseite bzw. aufgrund der Ladungskapazität der Energiespeicherpakete erhalten, obwohl eine einzelne Zelle oder ein einzelnes Energiespeicherpaket aus der Gruppe von Energiespeicherpaketen, die auch als Array bzw. Batterie-Array bezeichnet werden kann, schon ausgefallen sein könnte. Die Energieversorgungseinrichtung hat in einer besonders vorteilhaften Ausgestaltung neben einem Schrank für Energiespeicherpakete eine weitere Abteilung, in der eine Elektronik wie eine Überwachungselektronik und/oder eine Steuerungselektronik angeordnet ist.

Als Teil der Elektronik oder zusätzlich zu dieser ist zum einen eine Überwachungselektronik und zum anderen eine oder mehrere Messelektronik(en) vorgesehen. Jedem einzelnen Energiespeicherpaket, zumindest jedoch einer hohen Zahl von Energiespeicherpaketen, was häufig durch einzelne Sekundärzellenblöcke realisiert ist, ist eine individuelle Messelektronik zugeordnet. Die Messelektronik ist ohne weitergehende Kommunikationsleitungen finalisiert. Die Messelektronik weist keine Zusatzleitungen auf. Die Messelektronik (als Einheit, also insgesamt in Bezug auf ihre Schnittstellen nach außen,) kommt mit zwei oder drei Adern (Plus, Minus und ggf. eine Schirmung wie Erde) aus, nämlich den Adern, die an den Energiespeicherpaketen bzw. an dem Batterie-Array vorhanden sind. Weitere Leitungen oder Adern für die Messsignale der Messelektronik sind nicht zu verdrahten. Der Betriebszustand des Energiespeicherpaketes wird ohne die Verwendung weiterer Leitungen an die zentrale Elektronik der Energieversorgungseinrichtung transferiert. Es kann auch gesagt werden, der Betriebszustand wird zusatzleitungslos von der Messelektronik an die Überwachungselektronik bzw. die Steuerungselektronik weitergereicht.

Die Energieversorgungseinrichtung liefert elektrische Energie aus mehreren, untereinander verschalteten Energiespeicherpaketen wie Akkumulatorenpaketen oder Sekundärzellenpaketen. Die Energiespeicherpakete sind in - zumindest teilweise - Serienschaltung verschaltet. Die Energiespeicherpakete stellen eine Gleichspannung, insbesondere an einer Sekundärseite, zur Verfügung. Erkennt die Überwachungselektronik und/oder die Steuerungselektronik einen Fehlerfall, insbesondere an der Sekundärseite oder in dem Bereich der Sekundärseite, so stellt die Notstromversorgungsanlage Strom aus den Energiespeicherpaketen dem Bereich der Sekundärseite zur Verfügung. So kann in einer Ausgestaltung mittels Spannungswächterschaltungen überprüft werden, ob alle Endstromkreise der Sekundärseite mit einer ausreichenden Spannung versorgt sind. Reagiert eine der Spannungswächterschaltungen, so wird eine kontinuierliche Energieversorgung dadurch sichergestellt, dass statt der Netzspannung elektrische Energie aus den Energiespeicherpaketen zur Verfügung gestellt wird. Es ist also vorteilhaft, wenn die Energieversorgungseinrichtung zumindest Eingänge für den Anschluss von Spannungswächterschaltungen aufweist. Eine Notstromversorgungsanlage kann die Versorgung vorrangig zu versorgender Endstromkreise in einer Gebäudeinstallation sicherstellen.

Die Energieversorgungseinrichtung ist mit einer Gruppe von Bauteilen und Baueinheiten ausgestattet, die insgesamt eine Batterieüberwachung bilden. Je nach Ausgestaltung kann die Energieversorgungseinrichtung als Zentralbatterieanlage, in einer weiteren Ausgestaltung als ein unterbrechungsfreies Stromversorgungssystem betrieben werden. Als zusätzliches Ausstattungsmerkmal hat die Energieversorgungseinrichtung eine Batterieüberwachung. Mit Hilfe der Batterieüberwachung lassen sich zumindest einige, vorzugsweise alle der Energiespeicherpakete überwachen.

Die Energiespeicherpakete sind zu einem Array, vereinfacht auch als Batteriearray zu bezeichnen, zusammengeschlossen. Zu einem Energieleitungsanschluss werden die Energiespeicherpakete elektrisch zusammengeführt. Andere übliche Begriffe für eine solche Konfiguration der Zusammenführung sind die Bezeichnungen "Rail" oder "Powerbar" oder "Stromschiene" für den Energieleitungsanschluss, der zumindest teilweise in der Energieversorgungseinrichtung angeordnet ist bzw. in dieser steckt. Also sind mehrere elektrochemische Energiespeicherpakete miteinander verbunden. Einzelne dieser Energiespeicherpakete stellen den Abschluss in Bezug auf den Pluspol oder in Bezug auf den Minuspol dar. Jedes dieser Energiespeicherpakete hat wenigstens zwei Energieanschlüsse, z. B. in der Form von Polen. Jedes einzelne Energiespeicherpaket ist entweder mit einem weiteren Energiespeicherpaket über einen der beiden Pole verbunden oder es ist zu dem Energieleitungsanschluss durchverbunden. Die Energiespeicherpakete sind unmittelbar von einem zum nächsten, elektrisch benachbart anzusehenden Energiespeicherpaket durchverbunden. Jedes einzelne Energiespeicherpaket kann als einzelne Position in einer Matrix von Energiespeicherpaketen betrachtet werden, was vergleichbar mit einem Array ist. Der Pol des ersten Energiespeicherpaketes führt auf den Pol eines benachbarten Energiespeicherpaketes, wenn das Energiespeicherpaket mit seinem Pol als mittleres Energiespeicherpaket zu betrachten ist. Das erste und das letzte Energiespeicherpaket in einer Reihenschaltung sind jeweils mit einem Pol auf den Energieleitungsanschluss geführt. Es lassen sich eine Vielzahl gleichartiger oder gleich aufgebauter Akkumulatoren zu einem größeren Verbund zusammenfassen.

Als Energiespeicherpakete eignen sich elektrochemische Energiewandler. So können Bleiakkumulatoren mit einer erfindungsgemäßen Batterieüberwachung ausgestattet werden.

Auch können Akkumulatoren auf Cadmium-Basis wie NiCd-Akkumulatoren mit einer erfindungsgemäßen Batterieüberwachung versehen werden. Es hat sich gezeigt, dass NiMH-Akkumulatoren vergleichbar zu überwachen sind, somit die Batterieüberwachung an einem Array aus NiMH-Akkumulatoren eingesetzt werden kann. Li-Ion-Akkumulatoren, d. h. Lithium-Polymer-Akkumulatoren, Lithium-Cobaltdioxid-Akkumulatoren ($LiCoO_2$), Lithium-Titanat-Akkumulatoren, Lithium-Luft-Akkumulatoren, Lithium-Mangan-Akkumulatoren, Lithium-Eisenphosphat-Akkumulator ($LiFePO_4$) und Zinn-Schwefel-Lithium-Ionen-Akkumulatoren, können anstelle der zuvor benannten Akkumulatoren zusammen mit einer erfindungsgemäßen Batterieüberwachung verwendet werden. Weiterhin lässt sich die erfindungsgemäße Batterieüberwachung an Natrium-Schwefel-Akkumulatoren, an Nickel-Eisen-Akkumulatoren, an Nickel-Lithium-Akkumulatoren, an Nickel-Wasserstoff-Akkumulatoren, an Nickel-Zink-Akkumulatoren, an Silber-Zink-Akkumulatoren, an STAIR-Zellen, an Vanadium-Redox-Akkumulatoren, an Zink-Brom-Akkumulatoren, an Zink-Luft-Akkumulatoren, an Zellulose-Polypyrrol-Zellen und an Brennstoffzellen, z. B. an Polymerelektrolytmembranbrennstoffzellen, anbringen. Auch können ähnlich funktionierende Energiespeicherpakete mit einer erfindungsgemäßen Batterieüberwachung ausgestattet werden. Die erfindungsgemäße Batterieüberwachung hat ein sehr breites Einsatzgebiet.

Die Batterieüberwachung setzt sich aus mehreren einzelnen Bauteilen oder Baugruppen zusammen. Eine Baugruppe ist der Art nach eine Überwachungselektronik. Teil der Überwachungselektronik ist ein Empfänger, der Signale von separiert angeordneten Messelektroniken empfangen kann. Mehrere von der Überwachungselektronik räumlich entfernt angeordnete Messelektroniken dienen zur Überwachung des ihnen jeweils zugeordneten Energiespeicherpaketes. Hierbei ist es vorteilhaft, wenn jeweils nur eine einzige Messelektronik jeweils zur Messung wenigstens einer Messinformation eines einzigen Energiespeicherpaketes vorhanden ist. Mit anderen Worten, vorteilhaft ist eine unmittelbare Zuordnung einer Messelektronik nur zu einem Energiespeicherpaket. Die Messinformation erteilt Auskunft über den Zustand des Energiespeicherpaketes, z. B. über den Ladungszustand, z. B. über den aktuellen Spannungswert, z. B. über die Betriebstemperatur. Wenn wenigstens zwei Energiespeicherpakete als Teil der Energieversorgungseinrichtung vorhanden sind, ist jeweils eine Messeinrichtung nur einem Energiespeicherpaket zugeordnet, und eine andere Messeinrichtung ist dem zweiten Energiespeicherpaket zugeordnet. Bei mehr als zwei Energiespeicherpaketen in dem Array kann, muss aber nicht jedes Energiespeicherpaket mit einer eigenen Messeinrichtung ausgestattet sein.

Zu einer Messelektronik gehören mehrere Baugruppen. So umfasst eine Messelektronik jeweils ihre eigene Messeinrichtung. Mit anderen Worten, jede Messelektronik hat eine Messeinrichtung. Weiterhin ist es vorteilhaft, wenn die Messelektronik mit einem Sender ausgestattet ist. Über den Sender können Daten einer Messung der Messeinrichtung übertragen werden. Auch Schaltungsteile zur Aufbereitung, Stabilisierung oder Anpassung der Spannung von den Polen des Energiespeicherpaketes für die Messelektronik können Teil der Messelektronik sein.

Wie zuvor schon festgehalten, ist die Überwachungselektronik mit einem Empfänger ausgestattet. Der Empfänger hat einen Demodulator. Der Empfänger ist unmittelbar an jenen Leitungen, die zu dem Energieleitungsanschluss führen, angeschlossen. Zwischen den, vorzugsweise zwei Leitungen, die an dem Energieleitungsanschluss angeschlossen sind, hängt der Demodulator, der Daten bzw. Signale von den Leitungen aufnehmen kann. Die Leitungen selbst können insbesondere elektrisch aus der Energieversorgungseinrichtung herausführen. Innerhalb der Energieversorgungseinrichtung werden Signale generiert, nämlich von den Messelektroniken, die von dem Demodulator bzw. dem Empfänger der Überwachungselektronik aufgenommen werden. Sind entsprechende Filter in den Leitungen vorhanden, insbesondere elektrisch nachgeschaltet hinter einem Anschlusspunkt für den Empfänger, so bleiben die Signale mit ihrem größten Energieanteil innerhalb der Energieversorgungseinrichtung.

Wenn jeweils eine Messeinrichtung nur an jeweils einem Energiespeicherpaket vorhanden ist, kann das Energiespeicherpaket mit einer Messeinrichtung ausgestattet den Monteuren einer Energieversorgungseinrichtung ausgehändigt werden. Zusätzliche Verdrahtungen entfallen. Die Messeinrichtung ist über einen Anschluss elektrisch an dem Energiespeicherpaket angeschlossen. Eine permanente Verdrahtung zwischen Energiespeicherpaket und Messeinrichtung kann hergestellt bleiben. Eine Fehlerursache der falschen Verdrahtung zwischen Energiespeicherpaket und Messeinrichtung ist vermieden.

Der Anschluss, an dem eine Messung mittels der Messeinrichtung durchführbar ist, bildet für die jeweilige Messeinrichtung jeweils einen Messpunkt. Jedes Energiespeicherpaket, das eine eigene Messeinrichtung aufweist, hat einen Messpunkt. In einem solchen Energiespeicherpaket ist der Messpunkt vorhanden, an dem z. B. eine elektrische Spannung messbar ist. Zusätzlich oder auch nur alternativ können solche Messpunkte zur Strommessung herangezogen werden. Aus dem Spannungs- und Stromverlauf können Rückschlüsse auf den "Gesundheitszustand" des überwachten Energiespeicherpaketes gezogen werden.

Aus der gemessenen Spannung kann ein Zustand, wie ein Ladezustand, des Energiespeicherpakets bestimmt werden. Die gemessene Spannung wird mit einer Nominalspannung und einer Tiefentladungsschwelle des Energiespeicherpakts verglichen. Es kann beispielsweise durch den Vergleich der gemessen Spannung mit einer Sollspannung festgestellt werden, ob das Energiespeicherpaket tiefentladen oder vollkommen geladen ist oder ob es einen Fehler, wie einen Kurzschluss, aufweist.

Jede Messelektronik sollte ihren eigenen Mikrokontroller aufweisen. Wird bei der Beschreibung der Erfindung von Mikrokontrollern gesprochen, so verstehen sich darunter auch entsprechend ausgestattete Mikroprozessoren und elektronische Berechnungseinheiten. Dadurch ist es möglich, die Messelektronik mit einer gewissen Intelligenz auf der einen Seite und mit einer gewissen Individualität auf der anderen Seite auszustatten. Der Mikrokontroller kann als Herz der Messelektronik angesehen werden. Werden Mikrokontroller verwendet, die mit einem Speicher wie einem PROM ausgestattet sind, so kann jede Messelektronik, obwohl sie der Bauart nach identisch zu einer zweiten Messelektronik der Energieversorgungseinrichtung ist, wiederum auf das zu überwachende Energiespeicherpaket individualisiert werden. Die Messelektronik erhält eine eindeutige Zuordnung durch das Programm des Mikrokontrollers, insbesondere durch eine Seriennummer, die dem Mikrokontroller bekannt ist. Als Speicher für die Mikrokontroller können Speicher unterschiedlichster Speichertechnologie verwendet werden. Besonders vorteilhaft sind die zu dieser Gattung der PROMs zählenden Flash-EEPROMs, welche zudem elektrisch löschbar sind, denn in diesen kann auch noch nachträglich ein Programm in verbesserter Weise eingespeichert werden. Besonders vorteilhaft sind also Speicher, die als Flash-EEPROMs ausgestaltet sind. Speicher wie Flash-EEPROMs können derart verwendet werden, dass Speicherinhalte, z. B. Werte in dem Speicher oder Programmcodes in dem Speicher, elektrisch löschbar sind. Befindet sich ein Programm des Mikrokontrollers in einem elektrisch löschbaren Speicher wie einem Flash-EEPROM, so kann das Programm in diesem Speicher nachträglich erneut eingespielt werden, z. B., wenn das Programm in Teilen oder vollständig verbessert worden ist. Der Speicher kann so unterschiedliche Versionen nach und nach beinhalten.

Auch kann der Mikrokontroller generelle Steuerungs- und Überwachungsaufgaben für die gesamte Messelektronik übernehmen. Die Sender der Messelektroniken lassen sich z. B. mit Hilfe des jeweiligen Mikrokontrollers steuern. Zu jedem Sender gehört ein Mikrokontroller. Zumindest einer der in der Batterieüberwachung vorhandenen Sender steht unmittelbar mit den Energieleitungen und damit mit dem Energieleitungsanschluss in Verbindung. Die Messelektronik umfasst einen steuerbaren Modulator. Der steuerbare Modulator kann als Teil des Senders angesehen werden. Der Modulator kann seine Informationen, z. B. das Messergebnis, als Signal auf den Energieleitungen aufprägen. Zur Aufprägung ist der Modulator mit dem Energieleitungsanschluss elektrisch verbunden.

Zur besseren Anbindung des Modulators an den Energieleitungsanschluss ist eine Einheit vorhanden, durch die ein Aufmodulieren eines Signals auf dem Energieleitungsanschluss ausführbar ist. Besonders vorteilhaft ist es, wenn die Einheit aufgrund ihrer Struktur eine gewisse Entkopplung zwischen Modulator und Energieleitungen sicherstellt. Solche Einheiten können z. B. galvanische Entkopplungsglieder, Spulen, Kondensatoren oder sonstige Filter sein, deren Filtermittenfrequenz auf die Frequenz des aufgeprägten Signals bzw. des aufzuprägenden Signals abgestimmt sind.

Das Signal kann sich aus mehreren Teilinformationen zusammensetzen. Das Signal kann z. B. in sich verschiedene Messergebnisse der Messelektronik eingeschlossen haben. Eine von der Messelektronik ermittelte Information lässt sich in das Signal hineinkodieren. Das Signal ist über den Energieleitungsanschluss übertragbar. Der Energieleitungsanschluss hat eine Gleichspannung. Auf dem Energieleitungsanschluss sind auch zusätzliche Spannungsverläufe aufgeprägt, die sich aus dem Signal bilden. Durch den Verlauf des Signals ergibt sich eine Kodierung. In das Signal sind die von der Messelektronik gemessenen Informationen eingebunden. Das Signal überträgt die Informationen, die von der Messelektronik stammen.

Der Demodulator, der in dem Empfänger vorhanden ist, also einen Teil der Überwachungselektronik darstellt, ist auf die zu erwartenden Signale abgestimmt. Der Demodulator ist derart gestaltet, dass er einen Empfang der Signale durchführen kann. Die Signale, die auf den Energieleitungen aufmoduliert sind, können von dem Demodulator empfangen und wieder ent-kodiert (bzw. dekodiert) werden.

Der Empfänger kann auf die unterschiedlichsten Modulatoren reagieren. Dadurch können die von den verschiedenen Messelektroniken stammenden Informationen empfangen und dekodiert werden. In der einfachsten Ausführung würde ein Empfänger das Signal einer Messelektronik empfangen. Der Empfänger ist aber so gestaltet, dass er mehrere Signale von verschiedenen Messelektroniken empfangen kann. Der Empfänger ist für den Empfang und die Verarbeitung von verschiedenen Messelektroniken ausgelegt, unabhängig davon, ob tatsächlich mehrere Messelektroniken vorhanden sind. Eine freie Skalierbarkeit und eine Modulierbarkeit der tatsächlich verwendeten Energiespeicherpakete lassen sich so erreichen. Unproblematisch können einzelne Energiespeicherpakete gegen artgleiche Energiespeicherpakete mit Messelektroniken ausgetauscht werden. Der Empfänger ist so ausgelegt, dass er mit einer nahezu beliebigen Anzahl Modulierer zusammenarbeiten kann. So können in einer ersten Konfiguration 18 Energiespeicherpakete mit Modulatoren an der Überwachungselektronik angeschlossen sein. Wird eine größere Leistung oder eine längere Notbetriebsdauer gewünscht, können an den gleichen Demodulator 36 Modulatoren oder auch 50 Modulatoren angeschlossen werden. Für kleinere Systeme als 18 Energiespeicherpakete genügen 4 oder 5 Modulatoren.

Die zuvor dargelegte Energieversorgungseinrichtung kann mit einem vorteilhaften Betriebsverfahren betrieben werden. Das nachfolgend vorgestellte Betriebsverfahren zeigt darüber hinaus zusätzliche erfinderische Aspekte.

Das Betriebsverfahren setzt sich aus einem System mit einer verteilt ablaufenden Bearbeitungsweise zusammen. Die Batterieüberwachungseinrichtung umfasst mehrere Komponenten, die an unterschiedlichen Stellen in der Energieversorgungseinrichtung vorhanden sind. Hierbei ist es besonders vorteilhaft, wenn die Energieversorgungseinrichtung so gestaltet ist, wie zuvor beschrieben. Die Batterieüberwachungseinrichtung hat an verschiedenen Stellen in der Energieversorgungseinrichtung Baugruppen. Die Baugruppen übernehmen unterschiedliche, insbesondere softwaremäßig gesteuerte Aufgaben. Mit anderen Worten, es handelt sich um ein verteiltes System, in dem mehrere Mikrokontroller oder Mikroprozessoren vorhanden sein können.

Für eine größere Spannung sind wenigstens zwei Energiespeicherpakete in Serie verschaltet. Wird stattdessen ein größerer Strom gewünscht oder soll über einen längeren Zeitraum eine Notstromversorgung sichergestellt werden, so werden zwei Energiespeicherpakete parallel zueinander verschaltet. Wenigstens zwei der Energiespeicherpakete haben jeweils eine Messelektronik. Eine einzige Messelektronik ist nur einem einzigen Energiespeicherpaket zugeordnet. Teil einer Messelektronik ist eine Messeinrichtung. Jede einzelne Messelektronik hat somit jeweils ihre, nur für sie bestimmte Messeinrichtung. Weiterhin ist jeweils in einer Messelektronik ein Sender vorhanden.

Ein Sender kann ein von ihm über seinen Modulator zur Verfügung gestelltes Datenpaket aussenden. Der Sender überträgt die Information leitungsgebunden. Als Leitungen werden die Energieleitungen der Energieversorgungseinrichtung verwendet. Die Datenpakete sind zeitlich begrenzt. Ein Datenpaket ist in einer endlichen Zeit, in der Regel innerhalb eines Zeitfensters, das weniger als 100 ms beträgt, aussendbar. Eine Übertragung von Informationen werden leitungsgebunden über (die gleichen) Energieleitungen durch jeden Sender der Batterieüberwachungseinrichtung durchgeführt. Die Sender sind an den Energieleitungen angeschlossen. Die Informationen werden wiederholt in aufeinanderfolgenden, zeitlich begrenzten Datenpaketen ausgesendet.

Die Datenrate, mit der die Datenpakete gesendet werden, liegt vorteilhafterweise unterhalb einer Taktrate eines Mikroprozessors, der Teil der Messelektronik ist. In der Messelektronik ist also ein Mikroprozessor integriert. Der Mikroprozessor kann wiederum Teil eines Mikrokontrollers sein. Besonders vorteilhaft ist es, wenn die Datenrate in Abhängigkeit eines Ladezustands des Energiespeicherpaketes, das der Mikrokontroller überwacht, angepasst wird. Steht mehr Energie zur Verfügung, weil das Energiespeicherpaket nahezu, d. h. z. B. zu wenigstens 80 % oder 85 %, oder tatsächlich vollständig aufgeladen ist, kann häufiger und auch mehr übertragen werden. Wird die Phase der Vollladung des Energiespeicherpaketes verlassen, so kann die Datenrate abgesenkt werden. Es kann mit längeren Pausen (z. B. im ms-Bereich) zwischen der Übertragung zweier Datenpakete zugewartet werden, was jeweils als Datenübertragungspause bezeichnet werden kann. Eine längere Pause zwischen der Übertragung zweier Datenpakete reduziert die Stromaufnahme des Senders. Die Stromaufnahme der gesamten Messelektronik wird bei Unterschreiten einer Schwellspannung des Energiespeicherpakets, wenn eine Spannung unterhalb der Nominalspannung des Energiespeicherpaketes liegt, abgesenkt.

Wenn Phasen erhöhter Belastung für das Energiespeicherpaket durchlaufen werden, z. B. aufgrund von Teilschädigungen, eines Memoryeffekts oder besonders starker Entladungen, kann das Senden von Datenpaketen weiter reduziert werden. In Phasen besonders erhöhter Belastung des Energiespeicherpaketes, wie im Fall einer Tiefentladung des Energiespeicherpaketes, kann das Senden so weit pausiert werden, dass von einem Aussetzen bzw. einer Unterbrechung der Übertragung gesprochen werden kann. Die Messelektronik trägt somit nicht zur weiteren Entladung bei, die andernfalls das Energiespeicherpaket schädigen würde. Die Messelektronik kann in bestimmten (Betriebs-) Phasen auch nur teilweise abgeschaltet werden. Beispiele hierfür sind: das Abschalten einer optischen Zustandsindikation, das zeitweilige Abschalten von Messwerterfassungseinheiten und/oder das zeitweilige Absenken eines Taktgenerators des Mikroprozessors.

Sowohl die Energieversorgungseinrichtung aufgrund der in ihr vorhandenen Batterieüberwachung wie auch das dazugehörige Betriebsverfahren steigern die Zuverlässigkeit der Energieversorgungseinrichtung. Die Gefahr für Schädigungen und Fehlverdrahtungen ist reduziert.

Vorteilhafte Weiterbildungen lassen sich den nachfolgenden Erklärungen entnehmen, die für sich eigenständige erfinderische Aspekte zeitigen können.

Vorteilhaft ist es, wenn die Sendespannung, die für die Signalisierung der Datenpakete selbst verwendet wird, unter der halben Nominalspannung liegt. Hieraus resultieren geringere Ströme und somit eine geringere Verlustleistungswärme im Vergleich zur Aufprägung eines Nominalspannungswertes, was letztlich zu einer niedrigeren Betriebstemperatur und in Folge zu einer erhöhten Zuverlässigkeit führt. Die Nominalspannung ergibt sich aus der Verschaltung der Energiespeicherpakete. Werden z. B. drei jeweils mit 12 Volt Nominalspannung ausgestattete Energiespeicherpakete in Reihe verschaltet, so ist die Nominalspannung der Energieversorgungseinrichtung 36 Volt. Beträgt die Sendespannung nur 1/3 der Nominalspannung, so lässt sich die Verlustleistungswärme merklich reduzieren, noch besser ist eine Sendespannung, die 1/5 der Nominalspannung beträgt. Die Sendespannung wird vorteilhafterweise mit einem großen Abstand von dieser Nominalspannung in einem Spannungsband im mV-Bereich betrieben; eine Sendespannung also unter einem Volt. Die Sendespannung ist durch einen Wechselspannungsanteil bestimmt. Die Sendespannung kann auf unterschiedliche Weisen gemessen werden: die Sendespannung kann als Spitzen-Spitzen-Wert in Form einer Differenz zwischen minimaler und maximaler Spannung während des Versendens eines Datenpakets gemessen werden, die Sendespannung kann als Effektivwert durch die Wurzel eines zeitlichen Mittels der quadrierten Abweichung vom Mittelwert gemessen werden.

Das Signal der Messelektronik lässt sich auf den gleichen Leitungen übertragen, über die die Energie in der Energieversorgungseinrichtung zur Verfügung gestellt wird. Das Auswertesignal der Messelektronik wird vorteilhafterweise in ein Datentelegramm einer Powerline-Kommunikation eingebettet. Die Powerline-Kommunikation arbeitet mit einer Trägerfrequenz. Mit Hilfe der Trägerfrequenz wird auf den Energieversorgungsleitungen das Signal, eine Repräsentation des Datenpakets, von der Messelektronik übertragen. Die Energieleitungen werden als Datenleitungen zur Übertragung innerhalb der Energieversorgungseinrichtung, insbesondere in der Ausgestaltung als Zentralbatterieversorgung, benutzt. Die Übertragung erfolgt zwischen der Messelektronik und der Überwachungselektronik. Hierbei wird vorteilhafterweise eine mittlere Frequenz zur Übertragung gewählt. Z. B. kann eine Übertragung mit einer Trägerfrequenz von ca. 140 kHz oder 150 kHz gewählt werden, bei der Energiespeicherpakete wie Bleiakkumulatoren eine ausreichend hohe Impedanz aufweisen, um das zu übertragende Signal ungehindert auf den Leitungen zu übertragen. In Abhängigkeit des Typs des Energiespeicherpaketes können auch höhere oder niedrigere Frequenzen gewählt werden. Ein brauchbares Frequenzband erstreckt sich von 10 kHz bis in einen dreistelligen MHz-Bereich hinein. So kann eine Trägerfrequenz zwischen 10 kHz und 90 MHz unproblematisch gewählt werden. Vorteilhaft ist es, wenn die Impedanz des Energiespeicherpaketes bzw. der Energiespeicherpakete berücksichtigt wird. Je höher die Trägerfrequenz liegt, desto ungedämpfter gelangen die Signale durch die Energiespeicherpakete. Als eine günstige Grenzfrequenz hat sich in Laborversuchen gezeigt, dass 140 kHz gewählt werden können. Verständlicherweise ist das Signal mit einer ausreichenden Stärke auszustatten. Z. B. ein Signal mit 100 mV Amplitude lässt sich bei einer Trägerfrequenz von mehr als 200 kHz ungehindert von der Messelektronik zu der Überwachungselektronik bzw. der Steuerungselektronik übertragen. Durch diese Maßnahme reduziert sich der Verkabelungsaufwand bei dem Austausch einzelner, nicht mehr leistungskonformer Energiespeicherpakete. Folglich ist auch die Fehleranfälligkeit im Zusammenhang mit Wartungsvorgängen reduziert.

Als eine Art der Signalübertragung bietet sich ein Aufmodulieren einer Wechselspannung an. Die Wechselspannung kann als frequenzmoduliertes Signal auf den Energieversorgungsleitungen aufgeprägt werden. Alternativ können auch amplitudenmodulierte Signale übertragen werden. Einen besonderen Einfluss haben die Stärke des Signals sowie die Frequenz des Signals. Ausreichend starke Signale können schon bei Amplituden von 1 µV festgestellt werden. Liegt die Standardamplitude bei wenigstens 1 mV, so dürfte unter allen regulären Betriebsbedingungen ein Signal erhältlich sein.

Die Zuverlässigkeit, insbesondere die Betriebssicherheit der Messelektronik kann gesteigert werden, wenn die Elektronikbauteile der Messelektronik für ein Spannungsniveau ausgelegt sind, die unterhalb der Nominalspannung des Energiespeicherpaketes angesiedelt ist. Beträgt das Spannungsniveau weniger als 100 % der Nominalspannung, so kann selbst noch in Fällen der Spannungsreduktion ein zuverlässiger Betrieb sichergestellt werden. Für eine Spannungsanpassung kann eine Spannungsherabsetzungsstufe wie ein Spannungsquerregler vorhanden sein. Die Messelektronik kann mit einer Spannungsherabsetzungsstufe ausgestattet sein. An der Spannungsherabsetzungsstufe kann ein Versorgungsspannungspin des Mikrokontrollers angeschlossen sein. Aus der Spannungsherabsetzungsstufe bezieht der Mikrokontroller der Messelektronik seine Versorgungsspannung. Die Versorgungsspannung lässt sich so zuverlässig über lange Betriebszeiten, selbst wenn schon eine Spannungsreduktion des Energiespeicherpaketes eingesetzt haben sollte, aufrechterhalten.

Idealerweise ist in der Energieversorgungseinrichtung jeweils ein Modulator zu jedem vorhandenen Energiespeicherpaket zugeordnet. Der Modulator kann an den Energieanschlüssen des Energiespeicherpaketes angeschlossen sein. Die Energieanschlüsse sind häufig als Pole herausgeführt. So kann der Modulator an dem Plus- und an dem Minuspol seines Energiespeicherpaketes angeschlossen sein.

Für eine mechanisch besonders stabile Verbindung zwischen den Polen und den Energieleitungen können Schraubverbinder als elektrische Kontaktierungsflächen der Pole vorgesehen sein.

Ein größeres Auswertespektrum bzw. die Weiterführung von Messinformationen kann mithilfe von üblichen Kommunikationsschnittstellen, die in der Überwachungselektronik integriert sind, sichergestellt werden. So lässt sich die Überwachungselektronik an ferngesteuerte Rechner anbinden. Als übliche Schnittstellen sind solche Schnittstellen wie eine serielle Schnittstelle, insbesondere nach dem USB- oder Ethernet-Standard, anzusehen. Hierbei ist es besonders vorteilhaft, wenn solche Kommunikationsschnittstellen vorhanden sind, die (auch) als Schnittstellen zur Fernüberwachung genutzt werden können, z. B. mittels eines Mobilfunknetzes, wie ein digitales Mobilfunknetz gemäß dem Standard des "Global System for Communication", bekannt unter dem Kürzel GSM, oder deren erweiterte Nachfolger "Universal Mobile Telecommunications System" und "Long Term Evolution" mit den Akronymen UMTS und LTE, also über eine Handy-Verbindung, oder über ein lokales Netzwerk in Gestalt einer strukturierten Verkabelung zur Datenübertragung, bekannt unter der Abkürzung LAN, wobei z. B. ein Ethernet-Standard zum Einsatz kommen kann. Diese Schnittstellen leiten also die Messinformationen aus der Energieversorgungseinrichtung heraus. Energieversorgungseinrichtungen sind in abgeschlossenen Räumen aufstellbar bzw. häufig für geschlossene Räume bestimmt. Eine Energieversorgungseinrichtung weist z. B. oft eine Gestalt von einem Schrank oder einem Gestell auf. Der Schrank oder das Gestell bieten idealerweise einen Berührungsschutz. Die Messinformationen sind zur Herausleitung in einer Ausgestaltung in Spannungspegeln kodiert, deren maximaler Spannungswert unterhalb einer möglichen Gefährdungsschwelle liegt. Ein zusätzlicher Berührungsschutz für optionale, offenliegende Anschlusspunkte, die für die Weiterführung von Messinformationen vorgesehen sein können, ist in solchen Fällen nicht einmal mehr erforderlich.

Die Überwachungselektronik sollte in einer besonders vorteilhaften Weiterbildung zusätzlich einen Speicher enthalten. In dem Speicher können Daten zu einzelnen Betriebszuständen abgelegt werden. Solche Daten sollten insbesondere Abweichungen von vorbestimmten Betriebsbedingungen sein. Treten Abweichungen auf, so können die Abweichungen vermerkt werden. Das Alterungsverhalten, Ausfallwahrscheinlichkeiten und tatsächlich schon eingetretene Schädigungen lassen sich so im Nachhinein nachvollziehen. Die Daten können als historische Daten vorgehalten werden.

Die Spannung des zu messenden Energiespeicherpakets befindet sich z. B. dann innerhalb eines zulässigen Toleranzbereichs, wenn die Spannung sich oberhalb einer Tiefentladungsschwelle bewegt. Wird gleichzeitig zu dem Spannungswert auch ein Temperaturwert für das Energiespeicherpaket ermittelt, so kann der Temperaturwert nach einer Energieflussrichtung unterteilt werden. Der Energiefluss kann dadurch bestimmt werden, ob das Energiespeicherpaket in einer Ladephase oder in einer Endladephase betrieben wird. Liegt die Temperatur während der Endladephase, also die Entladetemperatur zwischen -15 °C und +50 °C, so kann von einem einwandfreien Betrieb ausgegangen werden. Liegt die Temperatur während der Phase einer Aufladung des Energiespeicherpakets, also die Ladetemperatur zwischen -10 °C und +50 °C, so kann von einem einwandfreien Betrieb ausgegangen werden. Werden Energiespeicherpakete verwendet, die bei höheren Temperaturen als z. B. Raumtemperatur ein stärkeres Alterungsverhalten aufweisen, kann die obere Schwelle von +50 °C natürlich auf +25 °C herabgesetzt werden. Eine Tiefentladeschwelle kann abhängig von der Temperatur in einem Bereich von -10 mV/°C/Zelle bis -30 mV/°C/Zelle angesiedelt werden. Mit Anstieg der negativen Schwelle geht die Temperatur entsprechend hoch. Ein maximaler Spannungswert kann z. B. bei 14,8 V angesiedelt werden.

Besonders aussagekräftige Signale sind ein Energiespeicherpaketspannungswert und ein Energiespeicherpakettemperaturwert. Als Messergebnis können Signale zu einer Temperatur und Signale zu einer Spannung zur Verfügung gestellt werden. Das Auswertesignal kann aus mehreren Datenpaketen zusammengestellt werden. In einer Ausgestaltung gehen in das Auswertesignal ein Energiespeicherspannungswert und ein Energiespeichertemperaturwert ein. Es lässt sich also ermitteln, auf welchem Spannungswert sich das Energiespeicherpaket befindet. Ungewöhnliche Hitzeentwicklungen, z. B. durch zu hohe oder zu geringe Innenwiderstände einzelner Zweige des Energiespeicherarrays, lassen sich mit dem Energiespeichertemperaturwert erheben. Auch kann eine Säurekonzentration eines Energiespeicherpaketes mittels eines pH-Sensors gemessen werden. Wie eingehender noch weiter unten erklärt, kann das Ansprechen eines Sicherheitsventils eines Energiespeicherpakets abgefragt bzw. gemessen werden. Die Messelektronik ist günstigerweise so gestaltet, dass sie Eingänge für die Messung mehrerer solcher Werte hat.

Eine weitere Messstelle, auch für Temperaturwerte, stellen die Pole dar. Insbesondere Schraubverbinder, die als Pole an den Energiespeicherpaketen eingesetzt werden, können anhand ihrer Temperatur überwacht werden. Der Innenwiderstand der Pole sollte möglichst gering sein, damit keine unnötige Verlustenergie an den Polen in Wärme umgesetzt wird. Die Pole, insbesondere die Schraubverbinder, werden wenigstens teilweise durch Metallflächen oder sonstige Materialien mit guten elektrischen Leitfähigkeiten gebildet. Ein niedriger Innenwiderstand liegt im mOhm-Bereich oder sogar nur im µOhm-Bereich, also in einem Bereich z. B. kleiner als 10 mOhm. An den Polen können einzelne Temperatursensoren platziert sein. In einer Ausgestaltung kann an jedem Pol des Arrays von Energiespeicherpaketen jeweils ein Temperatursensor vorgesehen sein. In einer anderen Ausgestaltung kann pro Energiespeicherpaket ein Temperatursensor an einem der beiden Pole des Energiespeicherpakets angeschlossen werden. Eine unmittelbare thermische Kontaktierung des Temperatursensors an dem Pol ist dienlich. Der Mikrokontroller verarbeitet den Messwert von dem Temperatursensor, der an einem Pol, insbesondere an einem Schraubverbinder, angeschlossen ist. Misst der Temperatursensor eine Temperatur oberhalb eines Grenzwertes, so kann der Mikrokontroller von einem Verschlechtern, eventuell sogar von dem Lösen einer Verbindung zwischen Pol und daran angeschlossener Energieleitung ausgehen. Ein sich abzeichnender Fehlerfall wird an die Überwachungselektronik, insbesondere an den Empfänger der Überwachungselektronik, von dem Mikrokontroller gemeldet.

Ein Messwert, der eine qualitative und eine quantitative Aussage über ein Energiespeicherpaket treffen kann, ist der Innenwiderstand des Energiespeicherpakets. Der Innenwiderstand eines Energiespeicherpakets kann als differentieller Widerstand gemessen bzw. bestimmt werden. Der Widerstand des Energiespeicherpakets, auch als Innenwiderstand des Energiespeicherpakets zu bezeichnen, kann indirekt gemessen und anschließend bestimmt werden. In regelmäßigen zeitlichen Abständen, also nach festgelegten Intervallen, z. B. im Sekundenbereich, werden die Spannung des Energiespeicherpakets und ein fließender Strom in oder aus dem Energiespeicherpaket gemessen. Die Messwerte werden mit früheren Messwerten in eine Beziehung gesetzt. Es können Differenzen zwischen Messwerten unterschiedlicher Zeitpunkte gebildet werden. So ist es möglich, Spannungen eines Energiespeicherpakets bei unterschiedlichen elektrischen Strömen in oder aus dem Energiespeicherpaket zu messen. Der Innenwiderstand des Energiespeicherpakets lässt sich unter Beachtung möglichst einheitlicher Ladezustände und Temperaturen bestimmen. Dies, die Bestimmung eines Innenwiderstands, kann während einer Ladephase des Energiespeicherpakets erfolgen. Die Ladephase kann im Rahmen eines Kurztests eingelegt werden. Der elektrische Strom zum Laden des Energiespeicherpakets wird aufgeprägt. Es wird die Spannung des Energiespeicherpakets gemessen. Der Messvorgang wird mehrfach wiederholt. Es werden Differenzwerte auf Basis von Messwerten zu unterschiedlichen Zeitpunkten ermittelt. Die Temperaturwerte des Energiespeicherpakets werden kontrolliert. Die Überwachungselektronik kann den elektrischen Strom messen. Die Überwachungseinheit kann den Innenwiderstand errechnen und qualitativ bewerten. Die Überwachungselektronik kann eine Aussage zur Qualität des Energiespeicherpakets durch einen Vergleich des Innenwiderstandes eines Energiespeicherpakets, insbesondere einer Batterie, mit den Innenwiderständen anderer Energiespeichersysteme oder insbesondere weiterer Batterien treffen. Die Überwachungselektronik kann auch einen Vergleich des Innenwiderstands mit vorgebbaren Grenzwerten zur Qualitätsbeurteilung erstellen.

Ein so genanntes Charge-Balancing kann mitunter innerhalb eines Array beachtlich sein. Das Charge-Balancing zwischen den Energiespeicherpaketen wird in einer Ausgestaltung beachtet. Mehrere Energiespeicherpakete, die zu einem Array zusammengeschlossen sind, können unterschiedliches Entladeverhalten aufweisen. Das Entladeverhalten kann z. B. von den Temperaturen innerhalb eines Batterieschranks abhängen. Zu einem Array zusammengeschlossene Energiespeicherpakete können untereinander aufgrund unterschiedlicher Temperaturen, hervorgerufen von der Position des Energiespeicherpakets im Batterieschrank, unterschiedliche Ladungszustände aufweisen. Ein Array mit Energiespeicherpaketen mit unterschiedlichen Ladungszuständen birgt das Risiko einer Überladung oder einer zu geringen Ladung einzelner Energiespeicherpakete. Eine Überladung führt zu einer vorzeitigen Alterung des überladenen Energiespeicherpakets. Auch eine zu geringe Ladung kann zu einer vorzeitigen Alterung führen. Wird der von einem Energiespeicherpaket bezogene elektrische Strom spannungsabhängig, insbesondere progressiv-spannungsabhängig, eingestellt, so können ladungsabhängige Alterungen einzelner Energiespeicherpakete in einem Array verringert, eventuell sogar fast komplett unterbunden werden. Soll eine Erhaltungsladung in das Energiespeicherpaket fließen, wird ein vergleichsweise geringer Strom, z. B. nur 10 % eines regulären Ladestroms, an ein Energiespeicherpaket geliefert. Energiespeicherpakete, die eine höhere Spannung als andere Energiespeicherpakete im Array haben, leiten den größeren Anteil der Erhaltungsladung ab. Energiespeicherpakete, die eine niedrigere Spannung als andere Energiespeicherpakete im Array haben, leiten die Erhaltungsladung nur zu einem kleineren Anteil ab. Ladungsunterschiede gleichen sich aus. Noch zuverlässiger wird das Verfahren durch eine temperaturabhängige Führung einer Ladespannung in Übereinstimmung mit einer progressiv gestalteten Spannungs-Strom-Kennlinie.

Zur Steigerung der Zuverlässigkeit der Energieversorgungseinheit sollte die Tiefentladung von irgendeinem der Energiespeicherpakete vermieden werden. Der Zustand der Tiefentladung kündigt sich in der Regel an. Eine solche Annäherung an einen Tiefentladungszustand lässt sich z. B. anhand von Spannungen der Energiespeicherpakete ablesen. Unterschreiten z. B. (nominell als) 12 Volt-Bleibatterien (bezeichnete Bleibatterien) eine Spannung von 13,6-Volt, so wird von einer Annäherung an einen Tiefentladungspunkt ausgegangen. Zur Lebensdauerverlängerung können die Module, Komponenten und Bauteilgruppen der Energieversorgungseinheit, die vorteilhafterweise zwar vorhanden sind, aber normungsgemäß nicht erforderlich sind, vorzeitig, bei Unterschreitung eines Grenzwertes, der sich aus den ausgewählten Energiespeicherpaketen ergibt, abgeschaltet werden. Dadurch wird der Gesamtstromverbrauch gesenkt. Werden rechtzeitig Gegenmaßnahmen ergriffen, kann der Beschädigung vorgebeugt werden. Besonders vorteilhaft ist es, wenn die Datenrate an den Ladezustand angepasst wird. Eine langsamere Übertragung bzw. eine Übertragung mit geringerer Häufigkeit kann in Zuständen geringerer Restladung des Energiespeicherpaketes durch den Mikrokontroller gewählt werden.

Um die Belastung für die mit einer Messelektronik ausgestatteten Energiespeicherpakete möglichst gering zu halten, ist es vorteilhaft, wenn ein Zustandswechsel in zumindest einer der Messelektroniken durchführbar ist. Dies kann z. B. anhand eines Zeitgebers gesteuert werden, der einen Einfluss auf die Messelektronik nehmen kann. Der Zeitgeber kann z. B. mit einer periodischen Regelmäßigkeit ablaufen. Wenn der Zeitgeber einen Zustandswechsel auslöst, gelangt die Messelektronik in eine Messpause. Wird durch den Zeitgeber ein weiterer Zustandswechsel ausgelöst, so gelangt die Messelektronik wieder in einen Messvorgang.

Zusätzlich vorteilhaft ist es, wenn zu der Messelektronik ein Speicher dazugehört, in dem eine bestimmte, insbesondere vorbestimmbare Zahl abgelegt ist, z. B. permanent eingeschrieben bleibt. Der Speicher kann z. B. mit einer Energiespeicheridentifikation ausgestattet sein. Der Zeitgeber arbeitet mit dem Wert in dem Speicher. In einer Ausgestaltung kann der Mikrokontroller, der z. B. den Zeitgeber beinhaltet, oder sogar der Zeitgeber unmittelbar z. B. anhand der Zahl im Speicher berechnen, wie lange die einzelnen Pausen zwischen den Messungen, die sogenannten Messpausen, sein sollen.

Für eine zuverlässige Funktion ist es wichtig, Beschädigung der Messelektronik während eines vorherigen Transports, einer vorhergehenden Installation und während des Betriebs zu vermeiden. Das Risiko einer Beschädigung bei Transport und Installation kann durch eine Anordnung der Messelektronik im Gehäuse des Energiespeicherpakets minimiert werden, da dadurch keine Angriffspunkte für eine Krafteinwirkung auf die Messelektronik geboten werden. Eine Beschädigung durch meist saure Elektrolyten eines Energiespeicherpakets wird dabei durch einen Verguss der Messelektronik ausgeschlossen. Hierbei sollte jedem Energiespeicherpaket eine eigene Messelektronik zugeordnet sein, so können zudem Verdrahtungsfehler weiter reduziert werden.

Es ist besonders vorteilhaft, wenn der Empfänger mehrere Schaltungskomponenten umfasst. Der Empfänger kann eine Niedervoltschaltung haben, die ein Zeitdiskretisierungsglied und ein Digitalisierungsglied umfasst. Vorzugsweise wird das Signal als gleichspannungsreduziertes Signal dem Digitalisierungsglied dargeboten. Dies erlaubt die Verwendung integrierter Schaltungen. Wenn mehrere Energiespeicherpakete in Serie verschaltet sind, ist das Spannungsniveau in der Energieversorgungseinrichtung ein Vielfaches höher als das Signal, das von dem Empfänger zu verarbeiten ist. Daher wird mithilfe eines Hochpassfilters oder, vorteilhaft, eines Bandpassfilters das Spannungsniveau auf das Niveau der Niedervoltschaltung angepasst. Das Zeitdiskretisierungsglied kann vor dem Digitalisierungsglied als sogenannte Abtast-Halte-Schaltung oder hinter dem Digitalisierungsglied als digitales Latch angeordnet sein. In beiden Fällen lässt es sich aus einer Reihenschaltung von einem MOS-FET und Kondensator realisieren, wobei die Diskretisierung durch einen alternierenden Spannungspegel am Gate des MOS-FETs erfolgt, wobei der Spannungspegel den MOS-FET leiten bzw. sperren lässt. Das Digitalisierungsglied wandelt das Signal so um, dass es in einem digitalen Rechenwerk verarbeitet werden kann. Es kann durch einen AD-Wandler realisiert werden, so dass das Signal mehrstufig erfasst wird.

Das Signal kann störbehaftet sein. Die Störung kann das Signal sogar überwiegen. In Versuchen hat es sich gezeigt, dass Signale auf Energieleitungen in Notlichtbeleuchtungsanlagen günstig mithilfe eines Goertzel-Algorithmus aus den Störungen wieder herausgerechnet werden können. Daher ist es vorteilhaft, wenn der Empfänger einen Schaltungsteil umfasst, der als Rechenstufe Verknüpfungen zwischen zu unterschiedlichen (diskreten) Zeitpunkten erfassten und digitalisierten Signalen erstellt. Signale werden z. B. als Signalspannungen an Kontaktierungen von Energieleitungen erfasst. Auf einer Energieleitung liegt ein Potenzial vor, aus dem, z. B. bezogen auf Massepotenzial, eine Potenzialdifferenz berechenbar ist. Eine Signalspannung ist, insbesondere als eine Differenz aus den Potenzialen von zwei Energieleitungen, durch einen Subtrahierer aus den (elektrischen) Potenzialen bestimmbar. Eine Signalspannung ist durch ein Digitalisierungsglied in ein digitalisiertes Signal umformbar. Digitalisierte Signale können auch als Signalwerte bezeichnet werden. Eine Verknüpfung kann durch eine, insbesondere mehrfache, Gewichtung, z. B. Multiplikation eines Signals oder Signalwerts mit einem Faktor, der insbesondere dem Zeitpunkt oder einem Zeitabstand zu der Erfassung des Signals zugeordnet ist, und anschließende Addition erfolgen. Für eine besonders schnelle Addition, erfolgt die Addition in einer Additionseinheit, die vorzugsweise in der Rechenstufe vorliegt. Auf gleicher Stufe wie die Rechenstufe kann ein Speicher für Signalwerte vorgesehen sein. Der Speicher hält mehrere Signale für die Verknüpfung bereit, die, vorzugsweise nach Durchlauf des Digitalisierungsglieds, für die Gewichtung, die Addition und insbesondere die Speicherung von Signalwerten bereitstehen. Durch gewichtete Additionen von zumindest einigen Signalwerten ist der Goertzel-Algorithmus in Grundzügen ermöglicht. Das Signal kann also durch das Digitalisierungsglied geführt bzw. geleitet werden. Anschließend kann das Signal, wenn es nun digitalisiert vorliegt, in die Stufe geleitet bzw. geführt werden, in der die Berechnung nach dem Goertzel-Algorithmus stattfindet.

Das Auswertesignal, das Auskunft über den Zustand eines oder mehrerer dezidierter Energiespeicherpakete gibt, umfasst ein Signal, einen Identifikationsmerker oder Identifikator. Über den Identifikationsmerker kann eine Energiespeicheridentifikation erfolgen. Die Energiespeicheridentifikation sollte vorteilhafterweise visuell erfassbar sein wie z. B. durch eine Seriennummer, die auf jedem Energiespeicherpaket gut sichtbar angebracht ist. Somit kann anhand einer Ausgabe des Identifikationsmerkers an eine Anzeigeeinheit im Servicefall ein defektes Energiespeicherpaket leicht anhand der sichtbar angebrachten Seriennummer identifiziert und das Energiespeicherpaket kann dann ausgewechselt werden.

Besonders vorteilhaft ist es, wenn der Identifikator den mechanisch-physischen Gegebenheiten im Batterieschrank entspricht. Das bedeutet, die zu übermittelnden Daten, die von der Messelektronik zu der Steuerungselektronik übertragen werden, können in Übereinstimmung mit der räumlichen Anordnung der Energiespeicher aufgelöst werden. Die Energiespeicherpakete werden vorteilhaft in einzelnen Fächern oder auf Fachböden aufgestellt, die ein Teil des Batterieschrankes sind. Die Daten sollten mit einzelnen Fächern des Batterieschrankes korrespondieren, sodass Daten der Energiespeicheridentifikation Informationen über die Speicherkapazität in dem Batterieschrank geben. Entsprechen die aufbereiteten Daten der Reihenfolge der angeordneten Energiespeicherpakete, so ist eine weitere Fehlerursache, nämlich das Verwechseln, welches Energiespeicherpaket tatsächlich zu tauschen ist, aufgrund von abweichender Messdatenaufbereitung zur räumlichen Anordnung, eliminiert. Der Identifikator bzw. die Energiespeicheridentifikation kann zusätzlich in dem Speicher des Mikrokontrollers gehalten werden. Der Mikrokontroller kann eine Routine umfassen, die als ein Bestimmungsglied arbeitet. Mithilfe des Bestimmungsgliedes kann ein Übertragungskanal für den Sender eingestellt werden. Die Bestimmung des Übertragungskanals aus den Daten des Identifikators heraus ermöglicht die Vergabe von jeweils einem eigenen Übertragungskanal für jeden Sender. So kann anhand eines im Mikrokontroller intrinsisch vorhandenen Datums bzw. Datensatzes, worin zum Beispiel eine Serien- oder Produktionsnummer einkodiert ist, einer von grundsätzlich mehreren zur Verfügung stehenden Übertragungskanälen bestimmt werden. Der Mikrokontroller kann eine Datenübertragung auf einem Übertragungskanal festlegen, bei dem keine oder nur eine geringe Beeinflussung durch Daten aus einem anderen Sender, gesteuert von einem anderen Mikrokontroller, auftreten können. Je nach Wert in dem intrinsisch vorhandenem Datum oder Datensatz errechnet sich der Übertragungskanal für den Sender des Mikrokontrollers, der diesen Datensatz aufweist. Besonders sicher wird die Datenübertragung, wenn eine gegenseitige Datenbeeinflussung möglichst weit reduziert wird. Zur Reduktion der Datenbeeinflussung können die Trennböden und die Trennstege der einzelnen Batteriefächer gleichzeitig Schirmungen darstellen, sodass die Batteriefächer gegeneinander und zur Umwelt hin geschirmt sind.

Energieversorgungssysteme arbeiten häufig mit Spannungen in einem Spannungsniveau, das oberhalb von 200 Volt liegt, z. B. von 216 Volt. Folglich werden viele Energiespeicherpakete zu einem Array zusammengeschaltet. Vorteilhafterweise sind alle Energiespeicherpakete jeweils mit einer Messelektronik ausgestattet. Um eine Vielzahl von Übertragungskanälen von den Messelektroniken zu dem Empfänger über nur einen Energieleitungsanschluss zu ermöglichen, wird mit Datenübertragungen, ähnlich eines Multiplexverfahrens, gearbeitet. Als Multiplexverfahren stehen sowohl ein Zeitmultiplexverfahren, ein Frequenzmultiplexverfahren, ein Codemultiplexverfahren und Mischformen daraus zur Verfügung. In gemultiplexter Art werden einzelne Datenpakete übertragen. Besonders vorteilhaft ist es, wenn Übertragungskanäle zur Verfügung stehen, die voneinander beabstandet sind. Die Übertragungskanäle können aufgrund der Trägerfrequenz beabstandet sein. Die Übertragungskanäle können aufgrund einer Zeitverschachtelung beabstandet sein. Der Identifikator kann zudem in die Berechnung des Übertragungskanals bzw. der Bestimmung des Übertragungskanals eingehen. Mit einer Vielzahl beabstandeter Übertragungskanäle ist weder eine separate Vorrichtung zum Multiplexen noch eine zentrale Vorrichtung zur Vergabe der Übertragungskanäle, noch eine senderseitige Kollisionserkennung der Datenübertragung erforderlich, wenn eine besonders einfache elektronische Ausführungsform gewünscht ist. Weiterhin trägt diese Vereinfachung sogar zur Steigerung der Zuverlässigkeit des Gesamtsystems bei, weil aufgrund der reduzierten Komponentenanzahl Störungen, hervorgerufen von einzelnen Komponenten, minimiert werden.

In einer vorteilhaften Ausgestaltung eines Verfahrens zur Überwachung mittels einer Batterieüberwachungseinrichtung wird der Zeitpunkt der Versendung von Datenpaketen, insbesondere eines jeden Datenpakets, das versendet werden soll, also mindestens eines ersten und eines zweiten Datenpakets, durch jede Messelektronik selbständig gesteuert. Die Messelektronik legt ohne äußere Einflüsse selbst fest, es kann auch gesagt werden, sie legt autonom fest, wann ein Datenpaket versendet wird. Die Messelektronik kann dazu vorteilhafterweise auf einen autark laufenden Zeitgeber zurückgreifen. Der Zeitgeber hat eine stabile, nicht von außen beeinflussbare Taktfrequenz, die zum Beispiel einer Resonanzfrequenz eines Quarzoszillators entsprechen kann. Außerdem kann die Messelektronik gespeicherte Betriebsparameter, wie die Energiespeicheridentifikation oder Messergebnisse zur Festlegung eines Sendezeitpunkts, verwenden. Weil äußere Einflüsse den Sendezeitpunkt nicht beeinflussen, kann die Datenübertragung als stabil bezeichnet werden.

Damit die Wahrscheinlichkeit verringert wird, dass mehrere Sender gleichzeitig senden, ist es von Vorteil, wenn das Senden der Datenpakete durch mindestens eine Messelektronik in sich verändernden Zeitabständen erfolgt. Die Zeitabstände können auch als Datenübertragungspausen bezeichnet werden. Während den Datenübertragungspausen, insbesondere einer Messelektronik, findet kein Sendevorgang statt. Die Dauer der Datenübertragungspausen kann mit einer mittleren Pausenlänge als eine typische Zeitdauer einer Sendepause bestimmt werden, wobei eine (konkret realisierte) Datenübertragungspause von der mittleren Pausenlänge um eine bestimmbare Zeitdauer, insbesondere sowohl in das Positive, also längerwerdend, als auch in das Negative, also kürzerwerdend, abweichen kann. Wird eine Häufigkeit der verschiedenen Pausendauern der Datenübertragung über die Pausendauer (auf der x-Achse) in einem Diagramm graphisch aufgetragen, so können die Zeitabstände beispielsweise einer Gaußverteilung mit einer Varianz um die mittlere Pausenläge folgen. In einem bestimmten Bereich, d. h. in einem Bereich mit einer in der Messelektronik hinterlegten Ober- und Untergrenze, können Datenübertragungspausen, die auch als Zeitintervallgrößen zwischen einer Datenübertragung und einer auf die Übertragung nächstfolgende weitere Datenübertragung bezeichnet werden können, auch gleichverteilt sein. Selbstverständlich können auch andere statistische Verteilungen verwendet werden, so kann die Verteilung der Datenübertragungspausen um eine mittlere Pausenlänge herum einer Fisher- bzw. einer Fisher-Snedecor-Verteilung folgen. Die Messelektronik kann beispielsweise einen Pseudozufallszahlengenerator verwenden, dessen Ergebnis als ein Faktor in die Bestimmung der Zeitabstände zwischen dem Senden zweier Datenpakete eingeht.

Die Informationen, die in den Datenpaketen enthalten sind, werden aussagekräftiger, wenn mehrwertige Messgrößen übertragen werden. Jede Messelektronik zeichnet vorteilhafterweise eine mehrwertige Information auf. Zumindest eine Messgröße sollte von der Messelektronik gemessen werden können. Eine mehrwertige Messgröße ist besonders vorteilhaft. Eine Messgröße, die sich aus mehreren Einzelmesswerten zusammensetzt, bietet umfassende Informationen. Die Messgröße setzt sich vorteilhafterweise aus mehreren Einzelmesswerten zusammen. Eine Messgröße kann mit einer weiteren Information, wie eine Kennung oder eine Skalierung der Messstelle, verbunden sein. In einer Ausgestaltung kann ein zeitlicher Mittelwert einer Messgröße berechnet werden. Der berechnete Mittelwert lässt sich mit der aktuellen Messung als eine mehrwertige Messgröße in ein Verhältnis setzen. So kann eine Differenzmessgröße zu einem Referenzwert gebildet werden. Es kann mit Grenzwerten operiert werden, anhand denen die mehrwertige Messgröße eingestuft wird. Es kann auch eine Änderungsrate einer Messgröße durch Bilden einer Ableitung auf Basis der Variable "Zeit" berechnet werden. In einer vorteilhaften Ausbildung ist der aktuelle Messwert ein erster Bestandteil der mehrwertigen Messgröße und der zeitliche Mittelwert ist ein zweiter Bestandteil der mehrwertigen Messgröße. Mittels der Messeinrichtung an dem elektrisch angebundenen Energiespeicherpaket werden Informationen wie mindestens ein mehrwertiger Spannungswert und/oder ein mehrwertiger Temperaturwert aufgezeichnet.

In einem vorteilhaften Betriebsverfahren sind von jeder Messelektronik übertragene Datenpakete mit der Energiespeicheridentifikation versehen. Die Messelektronik kennt die Energiespeicheridentifikation aus ihrem Speicher. Ein Datenpaket kann mehrteilig aufbereitet sein, von denen ein Teil die Energiespeicheridentifikation als Bestandteil des übertragenen Datenpakets ist. Die Energiespeicheridentifikation sollte vorzugsweise eine eindeutige Kennzeichnung jedes Energiespeicherpakets darstellen, die insbesondere mit zugeordneten Datenpaketen kombiniert wird. Zur eindeutigen Identifikation ist jede Energiespeicheridentifikation nur einmal vergeben. Jedes Energiespeicherpaket weist nur einen solchen Code oder Bezeichner zur Identifikation auf, der eindeutig zuordnenbar ist. Besonders vorteilhaft ist es, wenn die Energiespeicheridentifikation als Information identisch zu einer oder zumindest angelehnt an eine außen am jeweiligen Energiespeicherpaket angebrachten Kennzeichnung ist. Die Kennzeichnung sollte so zugänglich sein, dass sie ohne Demontageschritte lesbar ist. Die Kennzeichnung kann eine Seriennummer, eine Positionsmarkierung oder eine Kapazitätsangabe sowie einen Herstellungszeitpunkt umfassen. Durch eine eindeutige Kennzeichnung und deren Verwendung sind Fehlerzustände einzelnen Energiespeicherpaketen zuordnenbar. Die Überwachungseinrichtung ist in einer solchen Ausgestaltung mit einem Algorithmus ausgestattet, der auswertet, welches Energiespeicherpaket fehlerbehaftet ist. In einem Fehlerfall kann die Überwachungseinrichtung ein akustisches Alarmsignal einschalten. Besonders günstig ist es, wenn ein Visualisierungsprogramm den Standort eines betroffenen Energiespeicherpakets anzeigt.

Vorteilhafterweise wird ein Datenpaket durch ein Hochfrequenzsignal gesendet, das wenigstens eine Redundanzinformation aufweist. Redundanz besagt nach einer geeigneten Definition, dass wenigstens eine Information innerhalb oder zu dem Datenpaket zumindest zweifach übertragen wird. Bei einer mehrfachen Übertragung von Information kann die Information auch abgewandelt übertragen werden. Zur Datenübertragung eines Datenpakets kann eine Manchester-Codierung wie z. B. ein Manchester-II-Code oder ein inverser Manchester-Code oder ein differentieller Manchester-Code genutzt werden. Die benutzte Codierung kann neben der Länge und der Form, ob z. B. binäre oder hexadezimale Zahlenräume für die Daten zur Verfügung stehen, insbesondere auch die Datenstruktur oder die zeitliche Abfolge der Daten für das Übertragungsprotokoll des Datenpakets einstellen oder bestimmen. Das Übertragungsprotokoll kann festlegen, an welcher mindestens einen Stelle des Datenpakets eine Information wiederholt, mehrfach oder zumindest zurückrechenbar gesendet wird. Durch die Redundanzinformation ist die Überwachungselektronik in der Lage, ein Bit auch dann noch zu erkennen oder die übertragene Information als unbrauchbar zu verwerfen, wenn ein Teil der redundant übertragenen Information verloren geht. Dadurch wird die Zuverlässigkeit des Betriebsverfahrens noch gesteigert.

Ein weiterer vorteilhafter Aspekt des Betriebsverfahrens besteht darin, dass die Messelektronik während einer Normalbetriebsphase Datenpakete mit einer Rate versendet, die einen Mindestwert einhält. Mit anderen Worten, wenigstens ein Datenpaket wird pro vorgebbarer Zeiteinheit versendet. Die vorgegebene Zeiteinheit wird zumindest in der Normalbetriebsphase mit keinem Datenpaket überschritten, bzw. es wird nicht weniger häufig als einmal pro Zeiteinheit ein Datenpaket übertragen. Als Normalbetriebsphase ist z. B. eine Phase des zu überwachenden Energiespeicherpakets zu verstehen, in der das Energiespeicherpaket eine Spannung oberhalb einer Tiefentladungsschwelle bereitstellen kann und insbesondere die Messelektronik keinen Fehler feststellt. Als Normalbetriebsphase wird - in einer weiteren Ausgestaltung - auch eine Betriebsphase verstanden, in der das Energiespeicherpaket, z. B. mit einem von einem öffentlichen Versorgungsnetz bereitgestellten Strom, geladen wird. Die Messelektronik muss mindestens so viele Datenpakete pro Zeiteinheit versenden, dass die Mindestrate in einem zeitlichen Mittelwert erfüllt ist. Es kann auch gesagt werden, dass eine Maximaldauer einer Datenübertragungspause existiert, die im Normalbetrieb nicht überschritten wird. Im Falle einer Tiefentladung oder eines Fehlers in einem Energiespeicherpaket kann die mittlere Mindestrate unterschritten werden. Ein Senden kann auch gänzlich ausgesetzt werden oder ausfallen. Die Messelektronik kann in einem Fehlerfall seltener senden als die Mindestrate. Eine Abweichung von der mittleren Mindestrate ist bis zu einer Grenzrate tolerierbar. Die Grenzrate kann auch als Schwellwert bezeichnet werden. Die Abweichung von der Vorgabe kann von der Messelektronik bzw. von der Überwachungselektronik als Unregelmäßigkeit identifiziert werden.

Nach einem weiteren nützlichen Aspekt zur Verbesserung des Betriebsverfahrens kann ein Empfänger, nach einem Empfang von Datenpaketen, die Datenpakete z. B. anhand einer Prüfsumme als verwertbar bewerten oder als unbrauchbar verwerfen. Der Empfänger prüft dabei auch die durch das Übertragungsprotokoll vorgegebene Länge, in einer weiteren Konfiguration mindestens ein weiteres Merkmal des Datenpakets, und verwirft ein Datenpaket, das z. B. keine redundante Information enthält oder das dem (von dem Empfänger wie der Überwachungselektronik erwarteten) Protokoll nicht entspricht. Die Prüfsumme kann als eine Form einer redundanten Information und als Teil des Datenpakets übertragen werden. Werden Datenpakete verworfen, so liegt eine verringerte mittlere Mindestrate vor. Falls der Empfänger Datenpakete mit einer geringeren Rate als ein Schwellwert der Mindestrate empfängt oder falls alle in einem Zeitraum, der dem Schwellwert der Mindestrate entspricht, empfangenen Datenpakete als fehlerhaft verworfen werden, liegt eine Unregelmäßigkeit der Betriebsphase, mit anderen Worten ein Fehlbetrieb vor. Bei einem Fehlbetrieb liegt eine Störung der Batterieüberwachungseinrichtung vor. Die Überwachungselektronik registriert und meldet den entsprechenden Sender als gestört. Der Schwellwert kann z. B. 1/10 der Mindestrate betragen. In diesem Fall würde ein Energiespeicherpaket als fehlerhaft bewertet, das in einem Zeitraum, in dem die Überwachungselektronik mindestens zehnmal ein Datenpaket hätte empfangen müssen, kein einziges verwertbares Datenpaket bzw. Signal gesendet hat. Die Überwachungselektronik gibt ein Warn- oder Alarmsignal aus, wenn der Schwellwert der Mindestrate unterschritten wird.

Ganz besonders interessante Aspekte seien nachfolgend hervorgehoben.

Der Modulator in der Energieversorgungseinrichtung kann einen Übertrager für eine Kommunikationsaufschaltung auf einer der Energieversorgungsleitungen umfassen. Der Übertrager kann als gleichspannungsentkoppelndes Bauteil ausgestaltet sein, z. B. als Spulenübertrager. Eine besonders günstige Bauform des Spulenübertragers ist ein Ferritring um einen Batteriepol, wobei der Ferritring zudem Kern einer Spule ist, die von einem signalabhängigen Strom durchflossen wird. Der Demodulator sollte zu dem Modulator korrespondieren. Der Demodulator kann auch als inversabbildendes Empfangsteil bezeichnet werden. Ein Empfänger gehört zu dem Demodulator. Mit anderen Worten, Empfänger und Demodulator sind Teil der Überwachungselektronik. Durch die Verwendung von wechselspannungsübertragenden Bauteilen wird der Gleichspannungsanteil auf den Energieleitungen nicht in Schaltungsbereiche der Messeinrichtung, noch der Überwachungselektronik eingeleitet. Dies ermöglicht insbesondere die vorteilhafte Betriebsweise der ladungszustandsangepassten Datenrate.

Die Energieversorgungseinrichtung hat vorteilhafterweise eine zweite Messeinrichtung, die Teil der ersten Messelektronik ist. Die zweite Messeinrichtung kann an den Energieanschlüssen angeschlossen sein. Mit den Messungen der zweiten Messeinrichtung kann z. B. ein Zustand des Energiespeicherpaketes bestimmbar sein, z. B. die Restladung, die interne Energiespeichertemperatur oder ein Ladungszustand des Energiespeicherpaketes.

Bauteile der Messelektronik können Ferritkerne oder Ferritringe sein. In diesem Fall umfasst die Messelektronik also auch Ferritkerne. Die Ferritkerne befinden sich an wenigstens einem der Pole wie Minuspol und Pluspol des Energiespeichers, vorteilhaft sind sie an beiden Polen angeschlossen. Durch die Ferritringe wird die Impedanz des Strompfades über die Energiespeicher für wechselfrequente Ströme erhöht. Mit Hilfe der Ferritkerne bzw. -ringe lässt sich so das Auswertesignal vor den Polen filtern. Die Ferritkerne dienen als Signalfilter. Die Signalübertragungen finden mit ausreichend starken Signalen überwiegend zwischen Messelektronik und Überwachungselektronik statt.

Die einwandfreie Funktionstüchtigkeit der Batterieüberwachung kann dadurch angezeigt werden, dass die Messelektronik über wenigstens ein Anzeigeelement verfügt. Über die Anzeigeeinheit kann z. B. signalisiert werden, dass sich das Energiespeicherpaket innerhalb eines Toleranzbereichs der Spannung befindet. Anhand der Häufigkeit des Aufleuchtens einer LED kann z. B. ein Rückschluss auf den Ladungszustand des Energiespeicherpaketes gezogen werden. Zur Signalisierung eines gerade in dem Moment andauernden Messvorganges oder dessen Ergebnis kann die Messelektronik über eine Anzeigeeinheit verfügen, wie z. B. ein zusätzliches LED- oder LCD-Display, anhand der der Betriebszustand numerisch oder alphanumerisch ablesbar ist

Die Messelektronik kann ebenfalls mit einem Speicher ausgestattet sein, der insbesondere zur Aufnahme weiterer Daten - neben dem Wert für die Messpause - bestimmt ist. In einem solchen Speicher, der also unmittelbar an der Messquelle angeordnet ist, können einzelne oder alle Messwerte gespeichert werden. Eine nachträgliche Fehlerfallanalyse, wenn z. B. das Energiespeicherpaket aus einer Energieversorgungseinrichtung entnommen sein sollte, lässt sich anhand der Werte in dem Speicher durchführen. Sollte die Übertragung zwischen Sender und Empfänger schwierig oder einmal gestört sein, so können auch noch zeitversetzt die Daten übertragen werden, wenn ein Speicher vorhanden ist.

Die höherfrequenten Signale, verglichen mit den standardmäßig zur Verfügung stehenden Spannungen für die Energieversorgung, können zu Störungen an oder in dem Mikrokontroller führen. Dies kann dadurch reduziert werden, dass ein Dämpfungselement wie ein Filter vorhanden ist. Das Dämpfungselement lässt zwar Energie an den Mikrokontroller, das Dämpfungselement regelt oder filtert die Signale auf den Energieleitungen so weit weg, dass von einer Dauergleichspannung an dem Mikrokontroller, genauer an den Versorgungsspannungspins des Mikrokontrollers ausgegangen werden kann.

In einer ersten Ausgestaltung werden die Informationen über den Zustand der Energiespeicherpakete über die Energieversorgungsleitungen übertragen. In einer weiteren Ausgestaltung werden Informationen zusätzlich von diesen Leitungen leitungsungebunden, also z. B. über Funk oder visuell, d. h. beispielhaft über optische Strecken, übertragen. Mischformen können zusätzlich die Funktionssicherheit steigern.

Die Energieversorgungseinrichtung hat idealerweise weiterhin wenigstens eine Ladevorrichtung. Mit der Ladevorrichtung lässt sich der Ladestrom für die Energiespeicherpakete einstellen. In Abhängigkeit des Auswertesignals wird die Ladevorrichtung gesteuert. Vorteilhaft ist es, wenn die Ladevorrichtung zentral in der Energieversorgungseinheit angeordnet ist. Über die Ladevorrichtung wird ein maximaler Ladestrom in einer Ladephase der Energieversorgungseinrichtung eingestellt. Durch den Ladestrom und durch die Ladespannung kann Einfluss auf die Aufladung des Energiespeicherpaketes genommen werden. Die Ladespannung kann z. B. um eine Zellspannung gegenüber der Nennspannung abgesenkt werden, wenn zu erwarten ist, dass eine gewisse Schädigung einzelner Zellen des Energiespeicherpaketes des Arrays eintreten wird oder sogar schon Schädigungen vorliegen könnten. Die Energiespeicherpakete werden nur in dem Maße aufgeladen, wie sie nicht beschädigt werden. Sind Ausfälle zu beobachten, wird die Ladespannung reduziert. Durch die jeweilige Überwachung, vorzugsweise aller Energiespeicherpakete, lässt sich eine erhebliche Abweichung der Spannung oder der Temperatur einzelner Energiespeicherpakete anhand von Schwellwerten, die in der Größenordnung einer Zellspannung bzw. von mehreren Kelvin liegen, feststellen, und es kann aus einer Überschreitung der Schwellwerte eine gegebene Schädigung gefolgert werden.

Die Energieversorgungseinrichtung kann als eine zentralisiert angeordnete Batterieanlage eingesetzt werden, die in der Fachwelt auch in Anlehnung an die Normen mit Schlagworten wie CPS-System oder LPS-System bezeichnet wird.

Die Sicherheit und Fehlerfreiheit kann noch weiter gesteigert werden, wenn zwischen den Energiespeicherpaketen und den übrigen Komponenten der Energieversorgungseinrichtung kurzschlusssichere Kabel verbaut sind. Als kurzschlusssicher werden solche Kabel bezeichnet, die in Übereinstimmung mit einschlägigen Normenvorgaben entsprechende Kurzschlussströme entweder aufnehmen können oder zumindest keine weitergehenden Schädigungen zulassen. Des Weiteren eignet sich zum Beispiel ein NYM-Kabel, sofern es entsprechend einadrig z. B. nach DIN VDE 0250 - Teil 204 isoliert ist.

Die Empfangssicherheit wird darüber hinaus dadurch gesteigert, dass mehrere Überwachungselektroniken in einem Energieversorgungssystem vorhanden sind. So lässt sich eine strangweise Batterieversorgung realisieren.

Die Datenübertragungspause kann eine Mindestdauer währen. Die Mindestdauer entspricht der Untergrenze eines Zeitabstands zwischen zwei Sendevorgängen. Mit anderen Worten: die Mindestdauer ist das vorgegebene Zeitintervall zwischen dem Ende eines ersten Sendevorgangs und dem Beginn des folgenden, insbesondere zweiten Sendevorgans. Es ist von Vorteil, wenn in einem Zeitraum, der mindestens dreifach solange andauert wie eine Zeitspanne, die das Senden bzw. eine Übertragung eines Datenpaketes benötigt, kein Sendevorgang stattfindet. Eine Zeitspanne erstreckt sich vom Beginn eines Sendevorgangs bis zum Abschluss dieses Sendevorgangs. Ein Datenpaket weist eine vorbestimmbare Länge und Form auf. Es kann auch gesagt werden, die Datenstruktur ist in einem Datenpaket bekannt. In der Datenstruktur kann eine Konfiguration der Energieversorgungseinrichtung abgebildet sein. Die Sendedauer eines Datenpakets ist durch ein Übertragungsprotokoll, das die Länge und Form des Datenpakets enthält, festlegbar. Das Senden eines Datenpakets benötigt in einer Ausgestaltung des Übertragungsverfahrens in der Größenordnung von 160 ns ($\pm$ 50 ns). In dieser Ausgestaltung dauert die Datenübertragungspause z. B. mindestens 480 ns. Die mittlere Zeitdauer eines Datenpakets kann mehr als 160 ns betragen. Durch Einhaltung einer Mindestpause wird der Überwachungselektronik, selbst wenn nur kleine Prozessoren wie Mikrokontroller verwendet werden soll, ausreichend Zeit zur Verarbeitung der Datenpakete.

Nach einem weiteren vorteilhaften Aspekt eines erfindungsgemäßen Betriebsverfahrens wird auf einem Energieleitungsanschluss eines Energiespeicherpaketes ein zu übertragendes Datenpaket aufgebracht. Das Datenpaket kann mittels Energieleitungen übertragen werden. Die Datenpakete werden unmittelbar aus dem Sender zur Verfügung gestellt. Zu dem Sender wird ein Modulator zugeordnet. Mittels Modulator kann das Datenpaket auf das Spannungsniveau des Energieleitungsanschlusses angepasst werden. Der Modulator kann auch die Aufgabe übernehmen, eine Struktur oder einen Verlauf in zeitlicher Hinsicht auszubilden. Über den Sender werden die Datenpakete zur Übertragung gebracht. Die Energieleitungen verlaufen über einzelne Energieleitungsanschlüsse. Die Energieleitungen sind mit dem Energieleitungsanschluss direkt verknüpft. Die Energieleitung ist elektrisch mit dem Sender verbunden. Insbesondere bei Parallelschaltung vieler Energiespeicherpakete können alle Sender und ihre Modulatoren die Daten übertragen. Es ist besonders günstig, wenn nur wenige elektrische Schaltungselemente wie Kondensatoren oder Spulen als Bauteile zwischen dem Energieleitungsanschluss und dem Sender vorzusehen sind. Der elektrische Widerstand oder auch Leitwert, der zwischen einem Sender und einem Energieleitungsanschluss vorzufinden ist, entspricht dem Widerstand bzw. dem Leitwert in der verbindenden Energieleitung, insbesondere also einem Widerstand oder einem Leitwert eines Kupferkabels. Ein geringer elektrischer Widerstand, das bedeutet in einem Wertebereich unterhalb von 1 Ohm, ist für eine möglichst gute Übertragungsqualität der Datenpakete wünschenswert.

Weiter ist es von Vorteil, wenn jede Messelektronik einen, insbesondere mehrfach überschreibbaren, jedoch mit längerfristig erhaltbaren Werten beschreibbaren, Speicher, insbesondere einen batteriegestützten "Random-Access-Memory" ("RAM") aufweist. Die Messelektronik kann in dem Speicher abrufbare Informationen, z. B. in elektrischer oder in magnetischer Form, ablegen. Die gespeicherten Informationen können beispielsweise Messgrößen sein, die mittels der Messeinrichtung erfasst werden. Im Speicher kann ein Messprotokoll abgelegt werden, das sich bei Bedarf oder auf Wunsch einer zur Auslesung autorisierten Stelle auslesen lässt. Besonders vorteilhaft ist es, wenn nach dem Auslesen der Speicher neu beschrieben werden kann. Ein besonders gut entwickeltes System sieht so aus, dass die Messelektronik auch selbst auf die Daten im Speicher zugreifen kann. Die Informationen aus dem Speicher können von der Messelektronik zur Berechnung mehrwertiger Messgrößen verwendet werden.

Jede einzelne Messelektronik kann aus den Messgrößen, insbesondere den Messwerten oder auch Speicherwerten, auf welche die Messelektronik Zugriff hat, einen vorhandenen Fehlerzustand des Energiespeicherpakets identifizieren. Mögliche Fehlerzustände sind beispielweise Unterschreitungen einer Tiefentladungsschwelle eines Energiespeicherpakets, Überschreitungen von Solltemperaturen innerhalb oder an der Oberfläche eines Energiespeicherpakets, ein zu hoher oder ein zu niedriger pH-Wert innerhalb eines Energiespeicherpakets, insbesondere der flüssigen Elektrolyten und/oder das Erreichen des Endes der Lebensdauer eines Energiespeicherpakets. Die Messelektronik hat beispielsweise Zugriff auf Daten, die mittels der Messeinrichtung gewonnenen Messgrößen entsprechen, also die aktuelle Spannung und Temperatur des Energiespeicherpakets. Genauso kann in einer besonders günstigen Ausgestaltung die Messelektronik auf in mindestens einem Speicher abgelegte Informationen zurückgreifen. Die Messelektronik kann aus verfügbaren Messgrößen zusätzlich eine Übersicht über ein Betriebsverhalten des Energiespeicherpakets, z. B. in Form einer Statistik, insbesondere über einen Überwachungszeitraum hinweg, erstellen. Die Messelektronik kann so gestaltet sein, dass sie Langzeitüberwachungsdaten eines Energiespeicherpakets sammelt. Das Verhalten eines Energiespeicherpakets ist - je nach eingestelltem Algorithmus - über Wochen, Monate oder Jahre hinweg statistisch auswertbar. Damit können unter anderem grundsätzlich schon eingetretene Alterungsprozesse in der Batterieüberwachungseinrichtung bzw. den Energiespeicherpaketen mit Hilfe der Messeinrichtungen leichter erkannt werden.

Weiter ist es vorteilhaft, wenn jede Messelektronik den abgeleiteten Fehlerzustand oder die abgeleitete Statistik in einem, insbesondere für die Fehlerarchivierung zugeordneten, Speicher ablegt. Das von der Messelektronik erstellte Protokoll kann neben Messwerten auch Fehlereinträge oder Alarmmeldungen sowie Einträge über Lade- und Entladevorgänge enthalten. Fehlereinträge sind Einträge, die beim Auftreten eines Fehlerfalls in ein Protokoll der Messelektronik geschrieben werden. Vorzugsweise ein vollständiges bzw. gesamtes Protokoll aller Messwerte, zumindest aber von außergewöhnlichen Ereignissen, ist im Speicher abrufbar vorhanden. Wird das Protokoll ausgelesen, lässt sich ein möglicher Fehler erkennen. Vorteilhaft ist es aber auch, das normale Betriebsverhalten eines Energiespeicherpakets nachvollziehen zu können. Im Fehlerfall bietet das Protokoll eine Entscheidungshilfe, ob ein Weiterbetrieb oder sogar eine Wiederbelebung des Energiespeicherpakets möglich oder auch wirtschaftlich sinnvoll ist.

Zur Verbesserung des Betriebs der Batterieüberwachungseinrichtung kann günstigerweise ein Filter zum Einsatz kommen. Als Filter eignet sich z. B. ein Filter, der einen metallischen Ring umfasst, ein sogenannter Ferritring. Mit solchen Filtern lassen sich hochfrequenzmäßige Trennungen zwischen Abschnitten von Energieleitungen herstellen. Der Filter ist z. B. so dimensionierbar, dass er nur für Signalverläufe und Spannungen in Frequenzbereichen mit Frequenzen unterhalb einer Grenzfrequenz elektrisch leitend ist. Wird die Übertragungsfunktion des Filters mathematisch dargestellt, so ist ein besonders vorteilhafter Filter so aufgebaut, dass der Filter wenigstens einen mathematischen Pol an einer Frequenz aufweist. D. h., bei einer bestimmten Frequenz, die z. B. der Resonanzfrequenz des Filters entsprechen kann, geht die Absorption bzw. die Impedanz des Filters gegen unendlich. In einer weiteren Ausgestaltung kann der Filter auch als Tiefpass ausgestaltet sein. In diesem Fall wirkt der Filter als Tiefpass. Ein Tiefpass sperrt die Signale auf einem elektrischen Leiter, wie die Energieleitung, mit Frequenzen, z. B. in Wechselspannungen, die höher als eine Grenzfrequenz sind. In einer Ausführung wächst die Impedanz mit der Frequenz monoton steigend an. Der (theoretische) mathematische Pol liegt - in einem solchen Fall - bei einer Frequenz von unendlich. Der Filter kann also auch einen Ferritkern umfassen. Mit Hilfe des Filters können Störsignale unterdrückt und ein Signal/Rausch-Verhältnis der Signale für die zu übertragenden Datenpakete verbessert werden.

Die Auswertung der Messergebnisse kann durch die Bildung von einem Wert $U_d$ erfolgen. $U_d$ setzt sich aus zwei Spannungswerten zusammen. Einer dieser Spannungswerte ist in einer bevorzugten Ausgestaltung eine Spannung zwischen dem Minuspol und dem Pluspol eines mehrere Energiespeicherpakete umfassenden Energiespeicherstrangs. Der weitere Spannungswert wird als Spannung zwischen einem Mittenabgriff und dem Minuspol gemessen ($U_s$). Überschreitet eine Differenz dieser beiden Spannungssignale einen festgesetzten Threshold-Wert, so wird von einem Fehlerfall ausgegangen. Die Auswertung erfolgt vorteilhaft nicht nur in einer Visualisierungssoftware, sondern in der Steuerungselektronik. Über die Visualisierungssoftware lässt sich ein Abbild der Energiespeicherpakete und deren Zustände anzeigen, z. B. in Tabellenform, als Blockdiagramme oder durch räumlich verteilte Farbskalen, die der räumlichen Anordnung der Energiespeicherpakete entsprechen.

Zur weiteren Steigerung der Zuverlässigkeit kann in wenigstens einer der Elektroniken wie z. B. der Überwachungselektronik oder der Steuerungselektronik bzw. in einem Zentralrechner ein Zyklenverlauf und/oder ein Temperaturverlauf archiviert werden. Es wird ein Speicher vorgehalten, der für die Archivierung der Zyklenentwicklung zuständig ist. Ein Zyklus ergibt sich aus der Ladung und Entladung der Energiespeicherpakete, insbesondere feststellbar anhand von Spannungsgradienten. Wenigstens eine Information wird als Zykleninformation abgelegt. Mit Hilfe der Zyklenarchivierung und der Zyklenspeicherung kann auf das Alterungsverhalten des überwachten Energiespeicherpaketes geschlossen werden. Jede Batterie hat eine gewisse Lebensdauer, auf die Temperatureinflüsse und Ladeverfahren einen Einfluss haben. Wird der Ladezustand oder die Zyklenentwicklung zusätzlich optisch angezeigt, so ist eine doppelte Überprüfung möglich. Durch eine optische Signalisierung wie z. B. mit einer LED-Anzeigeneinheit lässt sich ein aktueller Zustand des Energiespeicherpaketes unmittelbar an dem Energiespeicherpaket entnehmen. Das Wartungspersonal hat somit eine Gegenprüfungsmöglichkeit.

Beispielhaft soll die Auswirkung durch eine Zyklenführung erklärt werden. Normungsgemäß wird festgelegt, dass in Notlichtbeleuchtungsanlagen des Typs CPS (nach EN 50171) die Batterien Standzeiten von mehr als 10 Jahren überstehen müssen. Als Temperaturgrenze wird jedoch eine Maximaltemperatur von 20 °C bestimmt. Die Batterieschränke sind häufig so schlecht durchlüftet, dass die Temperaturen höher liegen. Versuche haben gezeigt, dass sich die Lebensdauer bei einer permanenten Batterieumgebungstemperatur von etwas mehr als 25 °C um bis zu 2,5 Jahren bei Zehn-Jahres-Batterien reduziert. Hat der Batterieschrank eine permanente Temperatur von mehr als 40 °C, so beträgt die Lebensdauer mancher Batterietypen nur noch gute 3 Jahre. Stellt das Wartungspersonal anhand der Zyklenüberwachung fest, dass eine immer wieder auftretende Temperaturüberschreitung stattfindet, so kann rechtzeitig vor dem Ableben der Energiespeicherpakete mit Gegenmaßnahmen für eine Lebensverlängerung gesorgt werden. Die Datenarchivierung trägt ebenfalls zur Zuverlässigkeitssteigerung bei.

Es gibt Energiespeicherpakete wie Sekundärzellenblöcke, die jeweils ein Sicherheitsventil aufweisen. Das Sicherheitsventil soll unerwünschte Zersetzungsgasbildungen in dem Energiespeicherpaket in die Umgebung abgeben können. Dadurch wird ein Überdruck in dem Energiespeicherpaket verhindert. Die Sicherheitsventile lassen sich mit einer elektrischen Zustandserhebung ausstatten. In dem Fall ist zumindest ein Energiespeicherpaket mit einem elektrisch überwachbaren Sicherheitsventil ausgestattet. Über das Sicherheitsventil können Ladungsgase aus dem Energiespeicherpaket nach außen austreten. Als Ladungsgase werden u. a. die Gase bezeichnet, die sich bei einer Überladung eines Akkumulators in diesem bilden. Wird die Zustandserhebung des Sicherheitsventils in einer Prüfschleife eingebunden, kann eine Überwachungselektronik, vorzugsweise die in dem Batterieschrank vorhandene Überwachungselektronik, das Ansprechen eines Sicherheitsventils detektieren. Eine Zustandserhebung bzw. eine Überwachung kann mithilfe einer Reißdrahtschleife erfolgen. Ein Öffnen eines Sicherheitsventils kann elektrisch durch eine Unterbrechung der Reißdrahtschleife festgestellt werden. Über einen Deckel oder eine Abströmöffnung wird die Reißdrahtschleife geführt. Die Reißdrahtschleife liegt somit über einer Ausgangsöffnung des Sicherheitsventils. Das Ansprechen des Sicherheitsventils kann durch die darüberliegende Reißdrahtschleife detektiert werden. Hieraus wird abgeleitet, dass ein schwerwiegender Fehler eingetreten ist.

An Stelle einer Reißdrahtschleife oder zusätzlich zu der Reißdrahtschleife kann eine Kontrolle auf Verschmutzung und Dichtigkeit vorgesehen sein. Eine Kontrolle auf Verschmutzung und/oder Dichtigkeit kann mittels einer Elektrode durchgeführt werden, die mit der Messelektronik verbunden ist. Eine Elektrode zur Messung einer Verschmutzung oder einer Dichtigkeit kann auf einer Oberfläche des Energiespeicherpakets angeordnet werden. Die Elektrode ist hochohmig gestaltet. Tritt eine Verschmutzung auf, sinkt der Widerstand der Elektrode gegenüber einem Pol. Mit sinkendem Widerstand der Elektrode zur Messung einer Verschmutzung realisiert der Mikrokontroller eine Verschmutzung. Die Elektrode kann unter einer Abdeckung oder einem zweiten Gehäuse angeordnet sein. Die Elektrode kann gegen (unbeabsichtigtes) Berühren durch das Wartungspersonal geschützt sein. Als Schutz gegen Berührung kann ein Überzug, ein Gehäuse oder eine Abdeckung vorgesehen sein. Eine zufällige Berührung bleibt unterbunden. Trotzdem ist die Elektrode dafür bestimmt, einen Verschmutzungskontakt anhand eines Widerstandes messbar zu machen.

Eine Verschmutzung eines Energiespeicherpakets oder eines Batterieschranks kann optisch ermittelt werden. Hierfür können eine oder mehrere Kameras vorgesehen sein. Die Kamera arbeitet mit dem Mikrokontroller eines Energiespeicherpakets zusammen.

Eine vorteilhafte Weiterbildung kann auch dadurch erzielt werden, dass die Energie, die die Messelektronik benötigt, von dem Empfänger zur Verfügung gestellt wird. Die Energie kann z. B. in Form einer hochfrequenten Spannung über die Energieversorgungsleitungen aufgeprägt an die Messelektronik, insbesondere an die Messeinrichtung gelangen. Ist der Empfänger die Quelle für die zur Verfügung gestellte Energie, so kann die Messelektronik unabhängig von dem Lade- und "Gesundheitszustand" des Energiespeicherpaketes betrieben werden. In einer Weiterentwicklung der vorliegenden Erfindung können besondere Bereiche der Messelektronik mit Energie, die aus dem Empfänger stammt, versorgt werden, während andere Bereiche der Messelektronik Energie bzw. eine Spannung aus dem Energiespeicherpaket beziehen.

**EP 2 770 605 B1**

Mit einem besonders einfach zu installierendem Batteriedatenerfassungssystem wird die Zuverlässigkeit der Notlichtbeleuchtungsanlage gesteigert. Eine Fehlerquelle bei der Wartung oder bei der Reparatur ist ausgeschlossen, wenn nicht noch zusätzliche Messleitungen richtig verdrahtet auf die Steuerungselektronik zu führen sind.

Es lassen sich Energieversorgungseinheiten durch die Überwachung der Energiespeicherpakete aufbauen, die sogar ohne kurzschlusssichere Symmetrieanschlussleitungen auskommen. Weil eine blockweise Überwachung möglich ist, kann die vorgestellte Energieversorgungseinheit unmittelbar, d. h. direkt, fehlerhafte Blöcke identifizieren. Wartungspersonal ist nicht mehr gezwungen, Fehlerstellen in dem Feld, in dem Array, der Energiespeicherpakete durch mehrere Messungen einzukreisen. Es erübrigt sich, die erhöhte Gefährdung für das Wartungspersonal ausführlich darzustellen, der sich bei fehlender Überwachung der Energiespeicherpakete das Wartungspersonal auszusetzen hat (hohe Spannungen mit sehr viel Ladungsenergie). Stattdessen ist eine Ferndiagnose möglich. Mit entsprechenden Web-Überwachungswerkzeugen kann eine Überwachung aus der Ferne durchgeführt werden. Ein unmittelbares Annähern des Wartungspersonal an die Energiespeicherpakete, wenn "nur" in regelmäßigen Wartungsabständen der Zustand der Energiespeicherpakete zu erheben ist, kann dank einer Fernüberwachung unterbleiben. Erst im Fehlerfall oder wenn Energiespeicherpakete zu tauschen oder zu reparieren sind, ist eine Person in den Raum oder zu dem Bereich mit den Energiespeicherpaketen zu schicken. Gelegentlich werden Notlichtbeleuchtungsanlagen über mehrere Räume verteilt, häufig sogar in mehreren voneinander beabstandeten Räumen aufgebaut, z. B. einem Batterieraum im Keller, einer Wartungswarte in einem Serverraum, der häufig in einem eigenen Gebäudeabschnitt steht, und einer allgemeinen Steuerungsstelle in einem zentralisierten Technikraum. Die für die Haustechnik zuständigen Mitarbeiter können dank der vorliegenden Erfindung von dem zentralisierten Technikraum heraus den Zustand der Energiespeicherpakete beobachten. Hierfür kann die Überwachungselektronik fernwartbare Zugänge wie Webanschlüsse, serielle oder parallele Schnittstellen aufweisen. In einer weiteren Ausgestaltung können auch einzelne Messelektroniken mit fernwartbaren Zugängen ausgestattet sein

Zur Förderung des Verständnisses sei ein Beispiel der Implementierung vorgestellt, das anhand von konkreten Zahlen die zuvor vorgestellte Lehre in einigen Aspekten eingehender darlegt. Jedem einzelnen Übertragungskanal wird ein Zeitschlitz ("time slot") in einem Zeitmultiplexverfahren zugeordnet. Mit anderen Worten, die Übertragungskanäle sind in einer zeitlichen Betrachtung zeitmultiplex angeordnet. Weiterhin ist es vorteilhaft, wenn die einzelnen Sendezeiten im Vergleich zu dem gesamten, durch alle Übertragungskanäle (ggf. zusätzlich mit einer Phase der "Nicht-Übertragung") beanspruchten Zeitfenster, sozusagen in Summe, als kurz bezeichnet werden kann (z. B. weniger als 10 % der Gesamtzeit). Mit diesen Vorgaben kann z. B. die nachfolgend eingehender dargelegte Übertragungsweise umgesetzt werden. So kann eine Schrittgeschwindigkeit von 10 kBd (kiloBaud) gewählt werden. Ein Datenpaket kann sich z. B. aus einer Energiespeicheridentifikation und einem Energiespeichertemperaturwert und einem Wert für eine gemessene Spannung zusammensetzen. Zusätzlich kann zur Steigerung der Übertragungssicherheit eine Prüfsumme, insbesondere eine Prüfsumme mit selbstkorrigierenden Codierungseigenschaften, dem Datenpaket hinzugesetzt werden. In einer günstigen Ausgestaltung kann die Energiespeicheridentifikation 20 Bit lang sein. Es können z. B. 10 Bit für den Energiespeichertemperaturwert vorgesehen werden. Es können z. B. 10 Bit für den Spannungswert vorgesehen werden. Die Prüfsumme kann z. B. 10 Bit lang sein. In Summe beträgt in einem solchen Fall das Datenpaket 50 Bit. Sollen noch genauer aufgelöste Messwerte übertragen werden, so können an Stelle von einer Datenlänge von 10 Bit auch 12 Bit, 15 Bit oder sogar 30 Bit vorgesehen werden. Die Zeitspanne, die für eine Übertragung von einem Datenpaket mit 50 Bit Information bei 10 kBd benötigt wird, beträgt nicht mehr als 5 Millisekunden. Nach einer Übertragung des Datenpakets, also nach der Zeitspanne von 5 Millisekunden, kann eine Datenübertragungspause für dieses Datenpaket eingelegt werden. Soll die Zeitspanne für die Übertragung der Datenpakete bei einer Schrittgeschwindigkeit von 10 kBd verkürzt werden, z. B. nur auf 3 Millisekunden, so kann die Energiespeicheridentifikation verkürzt werden und die Prüfsumme weg gelassen werden.

Um die weitere Betrachtung zu vereinfachen, ist überschlägig von einer sich gesamt bildenden Dauer von 10 Millisekunden aus einer Zeitspanne für die Übertragung des Datenpakets und aus einer Länge der Datenübertragungspause auszugehen, was z. B. als Datenratenzeitfenster bezeichnet werden kann. Weiterhin kann eine mittlere Mindestrate festgelegt werden. Die mittlere Mindestrate kann z. B. als die Wiederholrate angesehen werden, mit der von einer Messelektronik über deren Sender nach einem ersten Datenpaket ein zweites Datenpaket übertragen werden soll. Gibt es 18 Messelektroniken, die jeweils einen eigenen Sender haben, sind also insgesamt 18 Sender an den Energieleitungen aufgeschaltet, die in kürzeren Abständen als der mittleren Mindestrate senden sollen, jedoch die Mindestrate auch ausnutzen dürfen und folglich nicht häufiger senden müssen als die Mindestrate, so stehen z. B. 10 Sekunden für das Versenden aller Datenpakete eines Messzyklus, also jeweils eines Datenpakets pro Sender einer Messelektronik, zur Verfügung. Anhand der Mindestrate kann ein Schwellwert in Beziehung zu dieser Mindestrate für den Empfänger bestimmt werden. Wird der Schwellwert z. B. mit 12 festgesetzt, so ergeben sich bei 10 Sekunden für den (zeitlichen) Abstand zwischen einer ersten Übertragung eines Datenpakets von einer ersten Messelektronik und der Übertragung eines zweiten Datenpakets von derselben ersten Messelektronik ein einzuhaltendes Zeitfenster für den Empfänger von 2 Minuten. Der Empfänger kann mit einer Fehlererkennung ausgestattet sein. Die Fehlererkennung kann z. B. eine Programmroutine in einem Mikroprozessor des Empfängers sein. Die Fehlererkennung kann aber auch im Rahmen eines "Watch-Dogs" in eingestellten Abständen, z. B. in Abständen von 2 Minuten, immer wieder neu angestoßen werden. Empfängt der Empfänger von einem Sender innerhalb des eingestellten Abstands kein verwertbares Datenpaket, also ein Datenpaket, das der Empfänger für einen tatsächlichen Messwert hält, z. B. aufgrund eines Fehlers in der Prüfsumme oder aufgrund eines Messwerts außerhalb eines Akzeptanzbereichs für den Messwert, so geht der Empfänger von einer Störung aus. Ist innerhalb des Vielfachen, z. B. des Zwölffachen (Schwellwert entspricht 1/12), der mittleren Mindestrate kein Datenpaket von einer Messelektronik an dem Empfänger angekommen, so stuft der Empfänger das Energiespeicherpaket, von dem ein aktuelles Datenpaket fehlt, weil es nicht innerhalb des Zeitfenster aktualisiert wurde, und dessen Messelektronik als fehlerhaft ein.

Es sei zusätzlich gezeigt, dass die vorgestellte Implementierung sehr fehlerunanfällig ist. Theoretisch können Kollisionen bei dem Versuch der Übertragung eines Datenpakets dadurch auftreten, dass zwei Messelektroniken genau zeitgleich ihr jeweiliges Datenpaket losschicken wollen. Die Wahrscheinlichkeit für eine kollisionsfreie Kommunikation aller Datenpakete, wenn 18 Messelektroniken vorhanden sind, liegt bei

$$W = \prod_{i=0}^{(18-1)}(1 - i * 0,001) \approx 0,86.$$

Erkennt der Empfänger eine Störung, wenn nach 2 Minuten, also nach 12 * 10 Sekunden immer noch nicht ein vollwertiges, akzeptables oder mit einer Prüfsumme abgesichertes Datenpaket eingetroffen ist, so ist die Wahrscheinlichkeit, dass eine so gestaltete Energieversorgungseinrichtung, also unter Nutzung eines solchen Betriebsverfahrens, einen Fehlerfall eines Energiespeicherpakets annimmt, obwohl ein Übertragungsproblem auf den Energieversorgungsleitungen gegeben ist, mit

$$W(Fehler) = (1 - 0,86)^{12} \approx 6 * 10^{-11}$$

anzugeben. Das bedeutet, ein solcher Fall, dass alle Energiespeicherpakete einwandfrei arbeiten, jedoch eine Kollision auf den Energieleitungen dem Empfänger einen Fehlerfall vorgaukeln, tritt erst alle 35.000 Jahre auf.

Ein weiterer interessanter Aspekt liegt darin, dass die vorgestellte Implementierung mit 10 ms für ein Datenratenzeitfenster bei einer Fehlerfallannahme nach frühestens 2 Minuten tatsächlich 12.000 Übertragungskanäle bietet. Zugleich können aber wenigstens 30 Datenpakete pro Messelektronik in dem Empfänger empfangen und ggf. archiviert werden. Werden weitere Frequenzbänder zur Verfügung gestellt, z. B. ein erstes Frequenzband bei 140 kHz und ein zweites Frequenzband bei 200 kHz, oder wird zusätzlich ein Codemultiplexverfahren zur Verfügung gestellt, kann die Anzahl der Übertragungskanäle leicht erhöht werden. Jedoch muss in einem solchen Fall in dem Empfänger noch eine weitere Stufe vorgehalten werden, wodurch z. B. die unterschiedlichen Frequenzbänder abgehört werden.

Die vorgestellte Energieversorgungseinrichtung ist nahezu beliebig auf eine Anzahl in einem vierstelligen oder sogar fünfstelligen Bereich vorhandener Energiespeicherpakete, die ein Array bilden sollen, skalierbar.

In einer Ausgestaltung reagiert das Betriebsverfahren der Energieversorgungseinrichtung auf ein Absinken eines Energiespeicherpaketes unter eine Nennspannung. Die Nennspannung wird aus Spannungen mehrerer Energiespeicherpakete gebildet. Die Überwachungselektronik berechnet aus den einzelnen Spannungen eine Nennspannung. Weiterhin wird eine Ladevorrichtung betrieben. Idealerweise gibt es mehrere Ladevorrichtungen, jeweils eine pro Strang der Energiespeicherpakete. Zumindest eine Ladevorrichtung arbeitet in Abhängigkeit eines Messwertes bzw. einer Messinformation. Der Messwert bzw. die Messinformation wird an wenigstens einem Energiespeicherpaket erhoben. Die Energiespeicherpakete werden anhand von Messwerten wie einem Spannungswert oder einem Temperaturwert überwacht. Hieraus wird eine Ladungsenergie für die Energiespeicherpakete eingestellt. Die für die Energiespeicherpakete zur Verfügung zu stellende Ladungsenergie wird in Abhängigkeit der Messwerte eingestellt. Bei einer üblichen Betriebsspannung von 216 V im Notbetrieb hat es sich gezeigt, dass als Grenzwert zum Beispiel 12 Volt eine zuverlässige Größe darstellen, die als Threshold-Wert in der Überwachungselektronik einzuprogrammieren ist. Sinkt die Spannung um diesen Threshold-Wert ab, so wird Einfluss auf die Ladevorrichtung genommen.

Die Überwachungselektronik und die Messelektroniken sind vorteilhafterweise für den Betrieb in Notlichtbeleuchtungsanlagen bzw. stationären Energieversorgungseinrichtungen ausgelegt. Die Überwachungselektronik und die Messelektroniken sind für den Einsatz in stationären Energieversorgungseinrichtungen gestaltet. Bei mobilen Geräten steht häufig der zyklische Entladebetrieb im Vordergrund, wobei die Entladezeiten und die Ladezeiten auf die Betriebsphasen abgestimmt sind, z. B. eine Nachtladung bei Gabelstaplern, die am Tage immer wieder kurzphasig, d. h. für kurze Arbeitseinsätze, benutzt werden. Bei vielen Notlichtbeleuchtungsanlagen ist die Langzeitstabilität wichtig. Die Energiespeicherpakete müssen manchmal nur ein einziges Mal, dann aber zuverlässig, zur Verfügung stehen. Nur in einem Notfall ist eine (stationäre) Energieversorgungseinrichtung wie ein (Sicherheits-)Stromversorgungssystem zu entladen. Im regulären Betrieb, was in der Regel mit dem Netzbetrieb zusammenfällt, wird das Energieversorgungssystem aufgeladen betrieben bzw. elektrisch aufgeladen (elektrisch gesehen schlichtweg) mitgeführt. Erst im Notfall muss die Ladungskapazität, die Spannung und die Energie ausreichend abrufbar vorhanden sein, damit die Anforderungen, wie z. B. ein Betrieb über 1 h oder ein Betrieb sogar über 3 h, an Notlichtbeleuchtungsanlagen erfüllt sind. Die Energieversorgungseinrichtung liefert im Notfall Strom über wenigstens eine Stunde. Der Notfall tritt - üblicherweise - seltenst, d. h., erst nach vielen Wochen oder Monaten auf. Über viele Wochen oder Monate hinweg wird nur eine Erhaltungsladung an die Energieversorgungseinrichtung, insbesondere aus dem Versorgungsnetz, geliefert. Die Energiespeicherpakete werden - üblicherweise - in einem vollständig geladenen Zustand in einem Array einer Energieversorgungseinrichtung installiert. Die Ladeströme betragen (in Bezug auf die Kapazität der Energiespeicherpakete) im Vergleich mit dem Entladestrom nur einen Bruchteil, z. B. 1/10 des Entladestrom oder sogar weniger.

**Figurenkurzbeschreibung**

Die vorliegende Erfindung kann noch besser verstanden werden, wenn Bezug auf die beiliegenden Figuren genommen wird, die darüber hinaus zusätzliche, eigenständige, erfinderische Aspekte zeitigen können, wobei

Figur 1 eine erste Ausführungsform eines Arrays von Energiespeicherpaketen und einen Empfänger als Teile einer Energieversorgungseinrichtung zeigt,

Figur 2 eine zweite Ausführungsform eines Arrays von Energiespeicherpaketen, einen Empfänger und eine Ladungselektronik als Teil einer Energieversorgungseinrichtung zeigt,

Figur 3 in schematischer Darstellung ein Energiespeicherpaket mit einer Messelektronik zeigt,

Figur 4 in elektronischer schematischer Darstellung eine Messelektronik zeigt,

Figur 5 in schematischer Darstellung ein Energiespeicherpaket mit Batterieüberwachung zeigt,

Figur 6 als Blockschaltbild eine Überwachungselektronik und ein Energiespeicherpaket zeigt,

Figur 7 in Blockdarstellung eine Überwachungselektronik zeigt,

Figur 8 eine mögliche Manchester-Kodierung zur Übertragung von Messinformationen zeigt,

Figur 9 einen Zusammenhang zwischen Spannungsverlauf, Datenpaketübertragung und differenziertes Signal in der Batterieüberwachungselektronik zeigt,

Figur 10 eine Übertragung von Information zeigt, die insbesondere aus verschiedenen Datenpaketen zusammengesetzt ist

Figur 11 eine Ausführungsform ähnlich der Ausführungsform im Vergleich mit der Figur 1 zeigt, wobei zusätzliche Filter und ein Ladestromregler gezeigt sind,

Figur 12 eine Ausführungsform ähnlich der in Figur 2 gezeigten Ausführungsform, darüber hinaus aber mit nachrüstbaren Baugruppen von zusätzlichen Sender- und Empfängermodulen zeigt,

Figur 13 eine Ausführungsform ähnlich zu der in Figur 3 gezeigten, mit einem zusätzlichen Anschluss für einen Temperatursensor zeigt,

Figur 14 die Ausführungsform nach Figur 4 weiterentwickelt und einen zusätzlichen Temperatursensor zeigt,

Figur 15 eine Ausführungsform, vergleichbar mit Figur 5 zeigt, wobei außerdem eine akustische Meldeeinheit vorhanden ist,

Figur 16 eine Ausführungsform zeigt, die der nach Figur 6 ähnelt, wobei die Ausführungsform eine Gruppe von Energiespeicherpaketen aufweist,

Figur 17 eine Ausführungsform in Anlehnung an Figur 7 zeigt, wobei eine Auswerteeinheit vorgesehen ist, die Zugriff auf einen zusätzlichen Speicher hat,

Figur 18 eine weitere, mögliche Manchester-Kodierung zeigt, die ein zusätzliches Redundanzbit aufweist,

Figur 19 eine Variante des in Figur 9 gezeigten Sachverhalts zeigt, bei der jedes Datenpaket mit einer Quersumme übertragen wird, und

Figur 20 eine Weiterentwicklung der Informationsübertragung nach Figur 10 zeigt, wobei eine Berechnungseinheit eine Historieninformation bildet, die einer Überwachungselektronik zugeführt wird.

**Figurenbeschreibung**

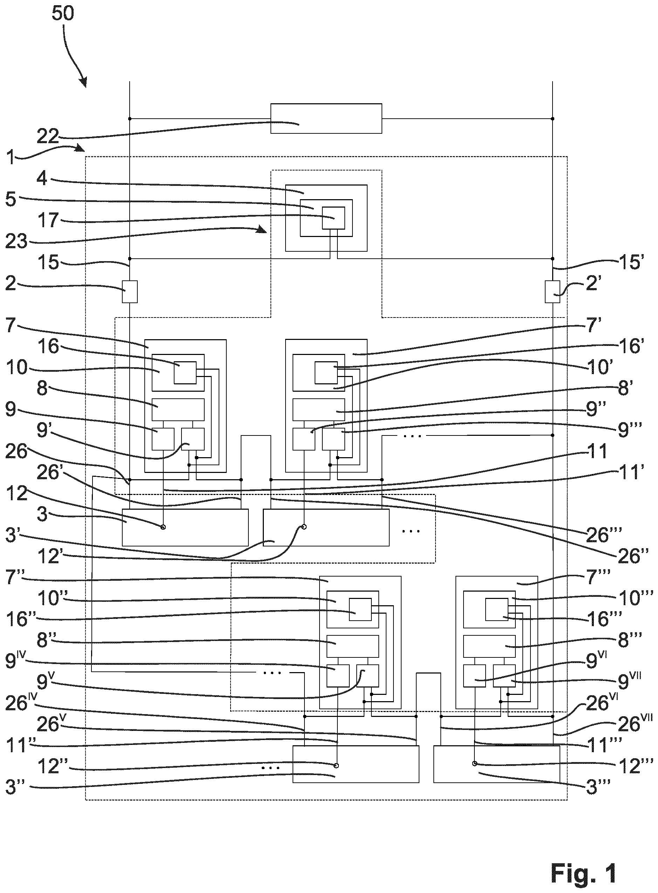

Figur 1 zeigt eine erste Ausführungsform eines Arrays von Energiespeicherpaketen 3, 3', 3", 3'" und einen Empfänger 5 als Teile einer Energieversorgungseinrichtung 1. Figur 1 zeigt auch eine Energieversorgungseinrichtung 1, die mit einer Batterieüberwachungseinrichtung 50 ausgestattet ist. Jenseits des Energieleitungsanschlusses 2, 2' befindet sich die Überwachungselektronik 4 mit dem Empfänger 5, wozu auch ein Demodulator 17 gehört. Auf der anderen Seite des Energieleitungsanschlusses 2, 2' sind wenigstens zwei Stränge Energiespeicherpakete 3, 3', 3", 3'" vorhanden, die zum Teil parallel zueinander und zum Teil seriell miteinander verschaltet sind.

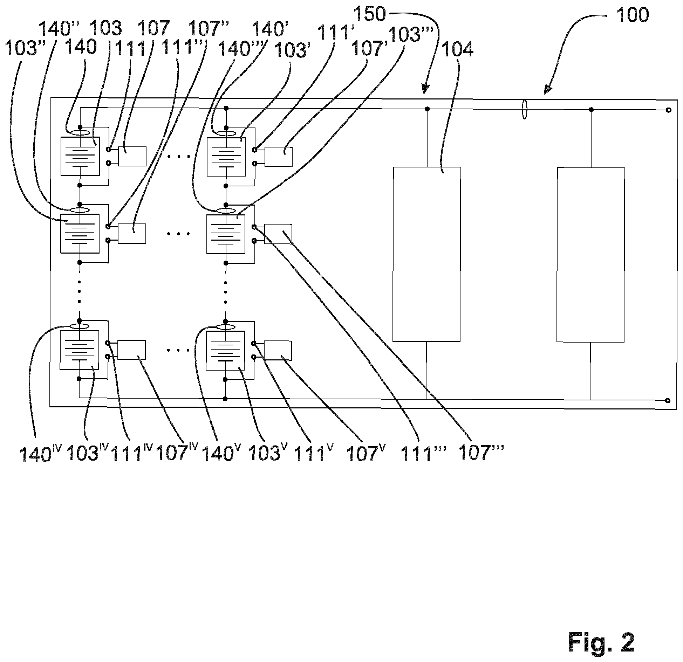

Figur 2 zeigt eine Energieversorgungseinrichtung 100, zu der die Batterieüberwachungseinrichtung 150 gehört.

Figur 2 zeigt auch eine zweite Ausführungsform eines Arrays von Energiespeicherpaketen 103, 103', 103", 103''', 103$^{IV}$, 103$^{V}$, einen Empfänger (ohne Bezugszeichen) und eine Ladungselektronik (ohne Bezugszeichen) als Teil der Energieversorgungseinrichtung 100.

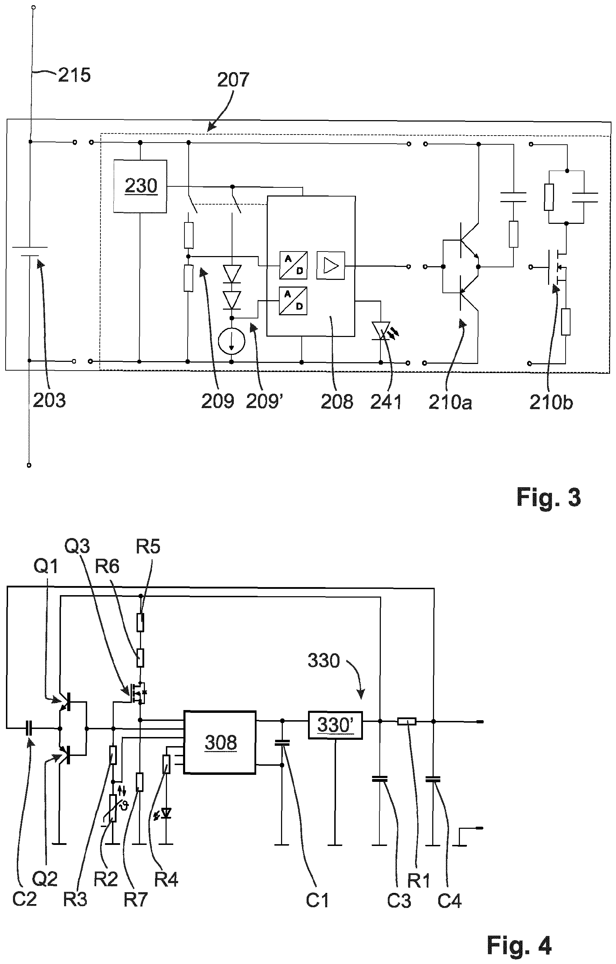

Figur 3 zeigt in schematischer Darstellung ein Energiespeicherpaket 203 mit einer Messelektronik 207 und außerdem die Anzeigeeinheit 241, angeschlossen an dem Mikrokontroller 208. Der Mikrokontroller 208 hat zwei Messeinrichtungen 209, 209'. Der Mikrokontroller 208 bezieht seine Versorgungsspannung aus dem Festspannungsregler 230, für den z. B. ein IC des Typs LP2950 eingesetzt werden kann. In Figur 3 werden zwei mögliche Endstufen 210a, 210b für einen Sender gezeigt

Figur 4 zeigt in elektronischer schematischer Darstellung eine Messelektronik (ohne Bezugszeichen) Figur 4 zeigt auch u. a. das Dämpfungselement 330, zu dem der Kondensator C3 und der Widerstand R1 gehören, sowie ein nachgeschalteter Querregler 330'.

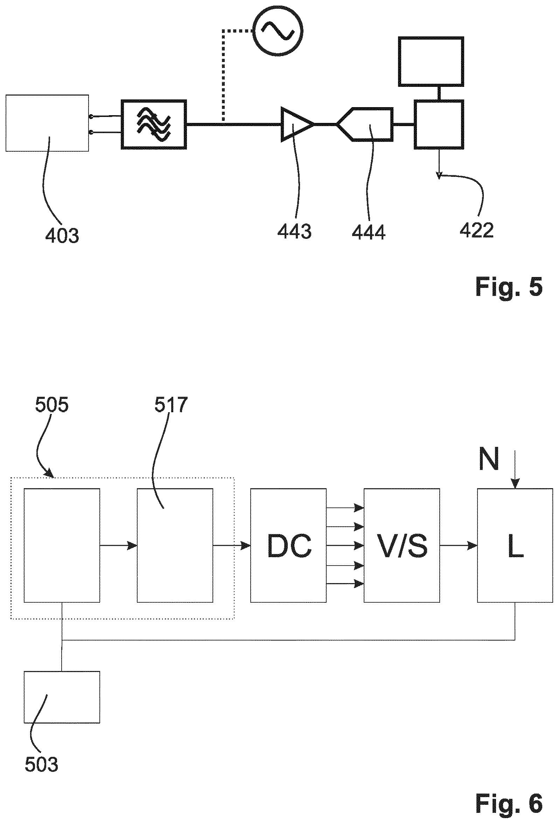

Figur 5 zeigt in schematischer Darstellung ein Energiespeicherpaket 403 mit Batterieüberwachung (ohne Bezugszeichen)

Figur 6 zeigt als Blockschaltbild eine Überwachungselektronik (ohne Bezugszeichen) und ein Energiespeicherpaket 503

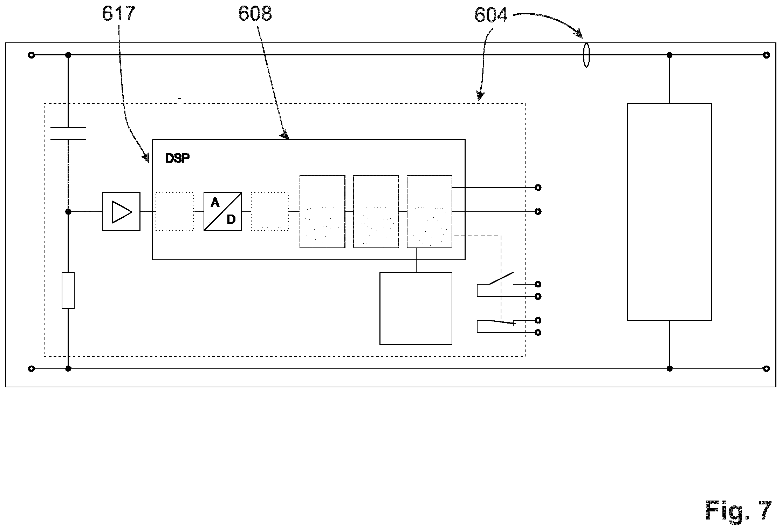

Figur 7 zeigt in Blockdarstellung eine Überwachungselektronik 604

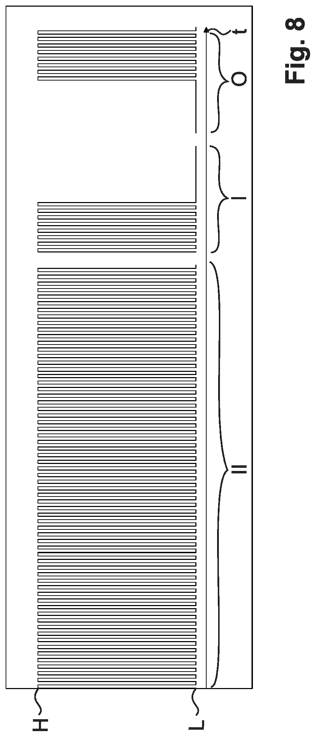

Figur 8 zeigt die Übertragung von Informationen auf Energieleitungen wie den Energieleitungen 15, 15' (siehe Figur 1) mittels einem Manchester-Code. Wie aus der Signalfolge gegenüber der x-Achse zu entnehmen ist, werden die einzelnen Bits wie "I" oder "O" mit einer Trägerfrequenz übertragen, die im vorliegenden Fall 140 kHz beträgt. Die Wechselspannung pendelt zwischen einem höheren Spannungswert H und einem niedrigeren Spannungswert L.

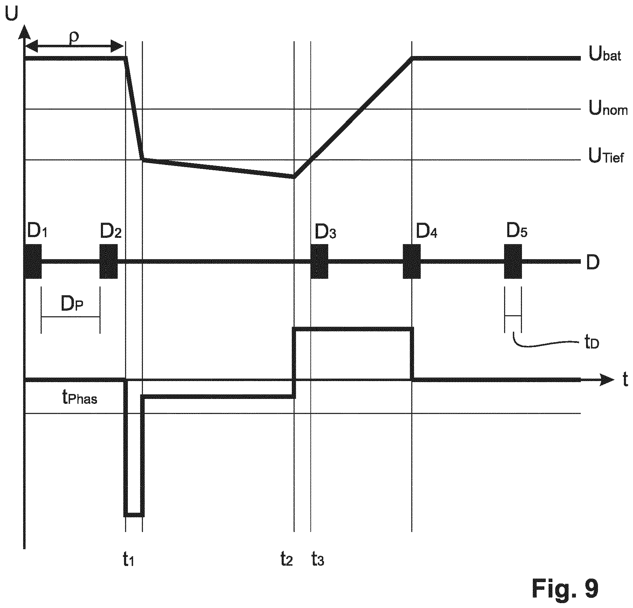

Figur 9 zeigt einen Zusammenhang zwischen Spannungsverlauf U, Datenpaketübertragung und differenziertem Signal in einer Batterieüberwachungselektronik. Es wird der zeitliche Verlauf einer Spannung U in der Energieversorgungseinrichtung zu unterschiedlichen Zeitpunkten $t_1$, $t_2$, $t_3$, gezeigt. Die Spannung $U_{bat}$, die z. B. an einem Energiespeicherpaket wie dem Energiespeicherpaket 203 (siehe Figur 3) abgenommen werden kann, unterschreitet in einer Phase einen Tiefentladungsschwellwert $U_{Tief}$. In dieser Phase gibt es keine Signalübertragung durch Datenpakete wie den Datenpaketen $D_1$, $D_2$, $D_3$, $D_4$, $D_5$. Die Datenpakete treten nur im Abstand von gewissen Pausen auf, solche Datenübertragungspausen $D_P$ dauern so lange an, solange die Spannung $U_{bat}$ unterhalb des Schwellwertes $U_{Tief}$ ist. Die Batterieüberwachung wie die Batterieüberwachungselektronik 4 (siehe Figur 1) arbeitet mit einer Differenzierung. Die einzelnen Datenpakete $D_1$, $D_2$, sofern sie von der gleichen Messelektronik stammen, treten mit einer Mindestrate p auf.

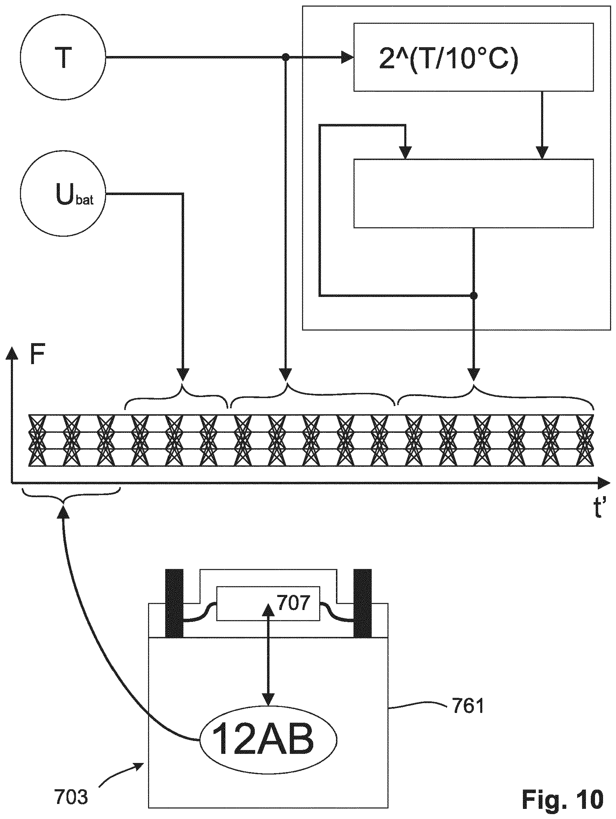

Figur 10 zeigt eine Übertragung von Information, die aus verschiedenen Datenpaketen F zusammengesetzt ist. Es ist gezeigt, wie Informationen F, die z. B. mit Bitdipolen, in denen unterschiedliche Informationen wie ein Identifikator (z. B. eine Energiespeicheridentifikation), eine Spannung, eine Temperatur oder eine Historie enthalten sind, frequenzmoduliert übertragen werden können. Zu jedem Zeitpunkt können also bis zu 4 Informationen übertragen werden.

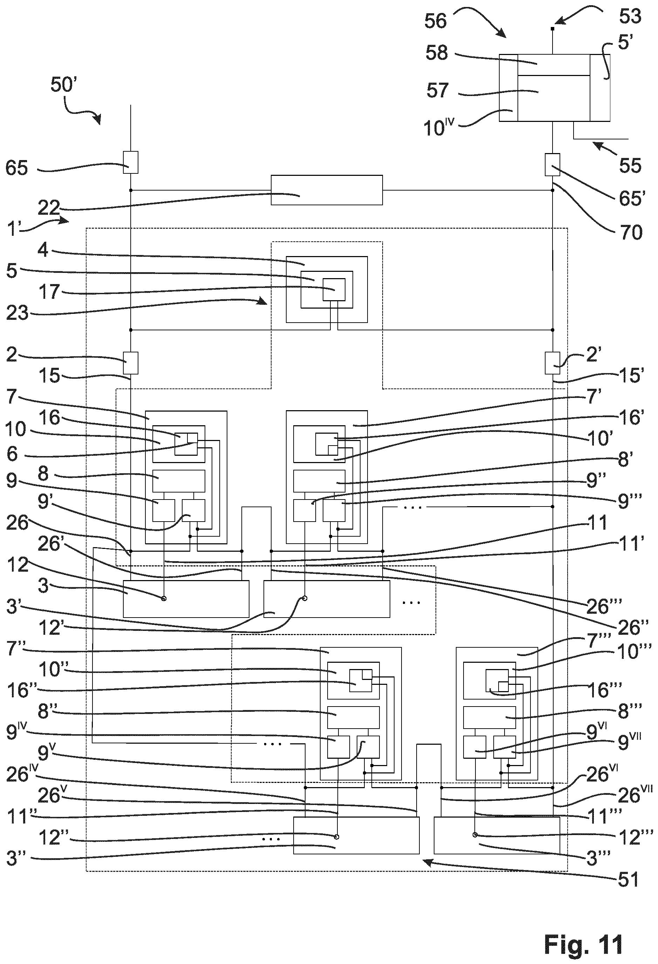

In dem Ausführungsbeispiel einer Energieversorgungseinrichtung 1' mit der Batterieüberwachungseinrichtung 50' von Figur 11 sind die Energiespeicherpakete 3, 3', 3", 3''' untereinander über ihre Energieanschlüsse 26, 26', 26", 26''', 26$^{IV}$, 26$^{V}$, 26$^{VI}$, 26$^{VII}$ verbunden. Die Energiespeicherpakete 3, 3' sind seriell verbunden und über die Energieleitung 15 zu dem Anschluss 2 und über die Energieleitung 15' zu dem Anschluss 2' verbunden. Weitere seriell zueinander angeordneten Energiespeicherpakete 3", 3''' sind parallel zu den Energiespeicherpaketen 3, 3' und ebenfalls mit dem Anschluss 2 und dem Anschluss 2' verdrahtet. Die Energiespeicherpakete 3, 3', 3", 3''' sind Komponenten der Zentralbatterieanlage 51.

Jedem Energiespeicherpaket 3, 3', 3", 3''' ist jeweils eine Messelektronik 7, 7', 7", 7''' zugeordnet. Die Messelektroniken 7, 7', 7", 7''' umfassen jeweils zwei Messeinrichtungen 9, 9'; 9", 9''', 9$^{IV}$, 9$^{V}$; 9$^{VI}$, 9$^{VII}$. Eine erste Messeinrichtung 9, 9", 9$^{IV}$, 9$^{VI}$ dient zur Temperaturüberwachung. Eine Temperaturinformation wird jeweils an einem Messpunkt 12, 12', 12", 12''' im Inneren des Energiespeicherpakets 3, 3', 3", 3''' abgegriffen und über einen jeweils zugeordneten Anschluss 11, 11', 11", 11''' an die erste Messeinrichtung 9, 9", 9$^{IV}$, 9$^{VI}$ geleitet. Eine zweite Messeinrichtung 9', 9''', 9$^{V}$, 9$^{VII}$ misst eine Spannung, die entweder an dem Energiespeicherpaket 3, 3', 3", 3''' anliegt (z. B. im Fall eines Ladebetriebs) oder die von dem jeweiligen Energiespeicherpaket 3, 3', 3", 3''' geliefert wird (z. B. im Fall eines Notbetriebs). Die zweite Messeinrichtung 9', 9''', 9$^{V}$, 9$^{VII}$ ist an den Paaren, jeweils gebildet aus den Energieanschlüssen 26, 26'; 26", 26'''; 26$^{IV}$, 26$^{V}$; 26$^{VI}$, 26$^{VII}$, also am Plus- und am Minuspol des jeweiligen Energiespeicherpakets 3, 3', 3", 3''', angeschlossen. Aus der gemessenen Spannung kann ein Zustand, wie ein Ladezustand, des Energiespeicherpakets 3, 3', 3", 3''' bestimmt werden. Die gemessene Spannung wird mit einer Nominalspannung und einer Tiefentladungsschwelle des Energiespeicherpakets 3, 3', 3", 3''' verglichen. Es kann beispielsweise durch den Vergleich der gemessen Spannung mit einer Sollspannung festgestellt werden, ob das Energiespeicherpaket 3, 3', 3", 3''' tiefentladen oder vollkommen geladen ist oder ob es einen Fehler, wie einen Kurzschluss, aufweist.

Die Daten der Messeinrichtungen 9, 9', 9", 9''', 9$^{IV}$, 9$^{V}$, 9$^{VI}$, 9$^{VII}$ werden von einem Mikrokontroller 8, 8', 8", 8''', der Bestandteil der Messelektronik 7, 7', 7", 7''' ist, verarbeitet. Der Mikrokontroller 8, 8', 8", 8''' umfasst eine Mikroprozessoreinheit (nicht dargestellt). Der Mikrokontroller 8, 8', 8", 8''' bereitet die Messergebnisse der Messeinrichtungen 9, 9', 9", 9''', 9$^{IV}$, 9$^{V}$, 9$^{VI}$, 9$^{VII}$ zu einem Datenpaket auf. Das Datenpaket wird von einem Modulator 16, 16', 16", 16''' in eine Wechselspannung umgewandelt. Der Mikrokontroller 8, 8', 8", 8'" steuert den Modulator 16, 16', 16", 16'". Ein Sender 10, 10', 10", 10'" speist die Wechselspannung an den Energieanschlüssen 26, 26', 26", 26'", 26$^{IV}$, 26$^V$, 26$^{VI}$, 26$^{VII}$ des Energiespeicherpakets 3, 3', 3", 3'" ein. Das Datenpaket gelangt als Leitungssignal über die Energieleitungen 15, 15' und zu den Anschlüssen 2, 2'.

Eine Messelektronik 7, 7', 7", 7'" umfasst also in einer erfindungsgemäßen Ausführungsform nach Figur 1 und Figur 11 jeweils zwei Messeinrichtungen 9, 9', 9", 9'", 9$^{IV}$, 9$^V$, 9$^{VI}$, 9$^{VII}$, einen Mikrokontroller 8, 8', 8", 8'", einen Modulator 16, 16', 16", 16'" und einen Sender 10, 10', 10", 10''".

Die Sender 10, 10', 10", 10'" sind elektrisch durch Energieleitungen 15, 15' direkt mit dem Energieleitungsanschlusses 2, 2' der Energieversorgungseinrichtung 1' verbunden, sodass Datenpakete nahezu verlustfrei auskoppelbar sind. Die Übertragung der Datenpakete erfolgt nahezu reflexionsfrei. Ein Sender, wie der Sender 10, hat zusätzlich eine Einheit, wie die Einheit 6, die mit dem Energieleitungsanschluss 15 verbunden ist. Durch die Einheit, wie die Einheit 6, z. B. eine Kondensatorschaltung, ist ein Signal direkt durch Modulation eines Trägersignals oder einer Trägerspannung auf den Energieleitungsanschluss 2, 2' zuführbar. Über den Energieleitungsanschluss 2, 2' werden Datenpakete über eine Energieversorgungsleitung 70 zu der Überwachungselektronik 4 weitergeleitet.

Die Überwachungselektronik 4 umfasst einen Empfänger 5 mit einem Demodulator 17. Der Empfänger 5 ist Bestandteil der Überwachungselektronik 4. Der Empfänger 5 ist so konzipiert, dass er ein Signal empfangen kann, das über die Energieleitungen 15, 15' und die Energieversorgungsleitung 70 in modulierter Weise, insbesondere mit einer angepassten Amplitude, wie eine Amplitude aufgeprägt auf einer Grundspannung, übertragen wird. Der Demodulator 17 kann eine Information aufnehmen, die von der Messelektronik 7, 7', 7", 7'" stammt. Der Signalmodulation ist von dem Demodulator 17 wieder eindeutig eine Information entnehmbar, die identisch mit der Ursprungsinformation der Messelektronik 7, 7', 7", 7'" ist, die in eine Signalmodulation gewandelt wurde. Eine Demodulation, wie sie vom Demodulator 17 ausführbar ist, kann auch als Entschlüsselung bezeichnet werden.

Eine weitere Komponente der Überwachungselektronik 4 ist eine Kommunikationsschnittstelle 22, insbesondere eine Ethernet-Schnittstelle. Durch die Kommunikationsschnittstelle 22 der Überwachungselektronik lässt sich der Zustand der Energieversorgungseinrichtung 1 per Fernwartung überwachen.

Die Messelektroniken 7, 7', 7", 7'" und die Überwachungselektronik 4 bilden gemeinsam die Batterieüberwachung 23.

Die Energieversorgungseinrichtung 1' ist an das öffentliche Stromnetz 53 über die Ladevorrichtung 56 angeschlossen. Die Ladevorrichtung 56 umfasst einen Gleichrichter 58, einen Sender 10$^{IV}$, insbesondere zur Mitteilung eines Netzzustands an den Empfänger 5, einen Empfänger 5' und einen Ladestromregler 57. Die Ladevorrichtung 56 steht in kommunikativer Verbindung mit der Überwachungselektronik 4, welche den Aufladungszustand der Energiespeicherpakete 3, 3', 3", 3'" kontrolliert. Bei Unterschreitung einer Mindestladung der Energiespeicherpakete 3, 3', 3", 3'" wird ein Aufladebefehl von der Überwachungselektronik 4 an den Empfänger 5' gesendet und der Ladestromregler 57 wird initiiert bzw. geht in einen Betriebszustand. Ausgangsfilter 65, 65', die an der Energieversorgungseinrichtung 1' elektronisch ausgangsseitig angebracht sind, verhindern den Austritt der von den Sendern 10, 10', 10", 10'" eingespeisten Modulation aus der Energieversorgungseinrichtung 1' in das Stromnetz 53. Der Ausgangsfilter 65' lässt ein Frequenzband für eine Signalübertragung zwischen Überwachungselektronik 4 und Ladevorrichtung 56 durch. Eine Last 55 kann wahlweise aus dem öffentlichen Stromnetz 53 oder aus der Energieversorgungseinrichtung 1' mit Strom versorgt werden.

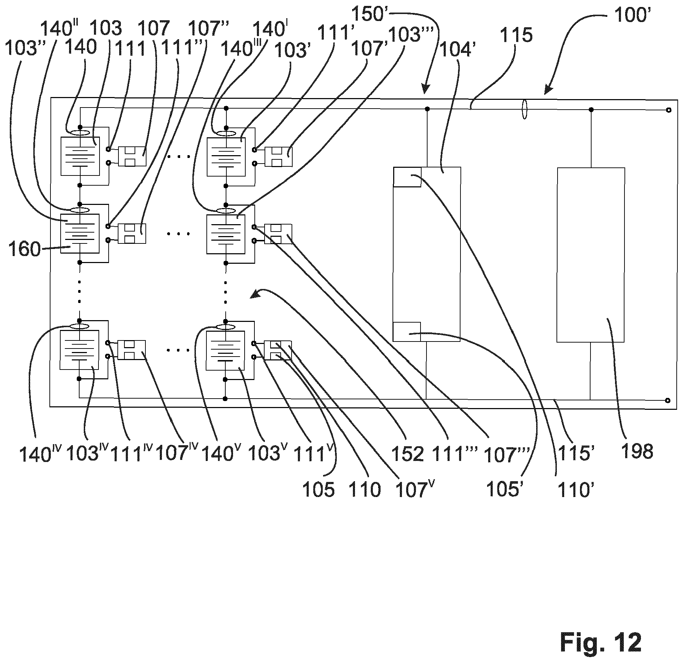

In einer Ausführungsform nach Figur 12 einer erfindungsgemäßen Energieversorgungseinrichtung 100' mit einer Batterieüberwachungseinrichtung 150' sind mehrere Energiespeicherpakete, wie die Energiespeicherpakete 103, 103', 103", 103'", 103$^{IV}$, 103$^V$, enthalten. Die Energiespeicherpakete 103, 103", 103$^{IV}$ sind zueinander seriell verschaltet. Dazu parallel verschaltet sind die untereinander seriell angeordneten Energiespeicherpakete 103', 103'", 103$^V$. Mit anderen Worten bilden die Energiespeicherpakete 103, 103" und 103$^{IV}$ sowie die Energiespeicherpakete 103', 103'" und 103$^V$ jeweils eine in Serie elektrisch verbundene Gruppe, wobei die Gruppen zueinander in elektrisch parallel verschalteter Anordnung stehen. Die Energiespeicherpakete 103, 103', 103", 103''", 103$^{IV}$, 103$^V$ bilden zusammen ein unterbrechungsfreies Stromversorgungssystem 152. An den Polen von jedem der Energiespeicherpakete 103, 103', 103", 103'", 103$^{IV}$, 103$^V$ wird die Spannung jeweils über ein Anschlusspaar, das jeweils einen Anschluss 111, 111', 111", 111'", 111$^{IV}$, 111$^V$ umfasst, abgegriffen und an eine dem jeweiligen Energiespeicherpaket 103, 103', 103", 103'", 103$^{IV}$, 103$^V$ zugeordnete Messelektronik 107, 107', 107", 107'", 107$^{IV}$, 107$^V$ übertragen. Jedes Energiespeicherpaket 103, 103', 103", 103'", 103$^{IV}$, 103$^V$ ist mit seiner eigenen, in Figur 12 nur symbolisch dargestellten, Messelektronik 107, 107', 107", 107'", 107$^V$, 107$^V$ ausgestattet.

An dem (Plus-)Pol jedes Energieversorgungspakets 103, 103', 103", 103'", 103$^{IV}$, 103$^V$ befindet sich ein Ferritring 140, 140', 140", 140'", 140$^{IV}$, 140$^V$, wobei ein Leitungsanschluss (ohne Bezugszeichen) zu dem Pol durch den Ferritring 140, 140', 140", 140'", 140$^{IV}$, 140$^V$ führt. Die Ferritringe 140, 140', 140", 140'", 140$^{IV}$, 140$^V$ nutzen ihre Induktivitäten, damit sie jeweils wie ein Tiefpassfilter wirken können. Die Impedanz des Stromkreises mit einem Ferritring 140, 140', 140", 140'", 140$^{IV}$, 140$^V$ steigt mindestens linear mit der Frequenz eines Wechselstromsignals an. Ein Gleichstrom, der von einem Energiespeicherpaket 103, 103', 103", 103'", 103$^{IV}$, 103$^V$ stammt, kann den Ferritring 140, 140', 140", 140'", 140$^{IV}$, 140$^V$ ohne zusätzlichen Widerstand passieren. Ein Wechselspannungssignal, das von der Messelektronik 107, 107', 107'', 107''', 107$^{IV}$, 107$^V$ auf eine Leitung 115, 115' aufgeprägt wird, kann abgeschwächt werden. Eine Signalstärke, die z. B. in der Amplitude auszudrücken ist, des Wechselspannungssignals reicht zur Signalübertragung aus. Das Wechselspannungssignal wird bei einem Stromfluss in Richtung auf ein Inneres 160 des Energieversorgungspakets bzw. Energiespeicherpakets 103 durch die zusätzliche Impedanz abgeschwächt. Störsignale mit einer höheren Frequenz als das Signal von der Messelektronik 107, 107', 107'', 107''', 107$^{IV}$, 107$^V$ werden von den Ferritringen 140, 140', 140'', 140''', 140$^{IV}$, 140$^V$ unterdrückt. Die Ferritringe 140, 140', 140'', 140''', 140$^{IV}$, 140$^V$ filtern Hochfrequenzsignale aus, also beispielsweise Signale oberhalb einer Frequenz von 500 MHz. Die Ferritringe 140, 140', 140'', 140''', 140$^{IV}$, 140$^V$ trennen Energieleitungen 115, 115' hochfrequenzmäßig von den Energiespeicherpaketen 103, 103', 103'', 103''', 103$^{IV}$, 103$^V$. Besonders vorteilhaft sind Filter, bei denen eine Funktion der Impedanz in Abhängigkeit von der Frequenz - in einer mathematischen Darstellung - eine Polstelle aufweist, also eine Stelle, an der die Funktion divergiert. Eine Messelektronik, wie die Messelektronik 107$^V$, umfasst als Komponente einen Sender, wie den Sender 110, und vorzugsweise einen Empfänger, wie den Empfänger 105.

Die Batterieüberwachungseinheit 150' umfasst eine zentrale Überwachungselektronik 104'. Die Überwachungselektronik 104' umfasst einen mehrkanaligen Sender 110' und einen mehrkanaligen Empfänger 105'. Ein Kanal ist beispielsweise einer Gruppe von Energiespeicherpaketen, wie den Energiespeicherpaketen 103, 103', 103'', 103'''', 103$^{IV}$, 103$^V$, zugeordnet. Die Überwachungselektronik 104' kann mehrere Gruppen überwachen. Die Überwachungselektronik 104' empfängt und dekodiert Signale, die jeweils von den Messelektroniken 107, 107', 107'', 107''', 107$^{IV}$, 107$^V$ stammend auf den Leitungen 115, 115' übertragen werden. Die Überwachungselektronik 104' ordnet die Signale eindeutig den jeweiligen Energiespeicherpaketen 103, 103', 103'', 103''', 103$^{IV}$, 103$^V$ zu. Die Signalübertragung, insbesondere von Ladesteuersignalen oder von Schaltsignalen, erfolgt von dem Sender 110' zu dem Empfänger 105. Der Sender 110' ist Teil der Überwachungselektronik 104'. Die Signalübertragung, insbesondere von Messsignalen, erfolgt von dem Sender 110 zu dem Empfänger 105'. Der Sender 110 ist Teil der Messelektronik 107$^V$.

An die Überwachungselektronik 104' schließt sich den elektrischen Leitungen 115, 115' weiter folgend ein Bereich an, der von der Energieversorgungseinrichtung 100' mit elektrischer Energie versorgt wird. In diesem Bereich befindet sich auch der Verbraucher 198, der die elektrische Energie aus den Energiespeicherpaketen 103, 103', 103'', 103''', 103$^{IV}$, 103$^V$ benutzen kann. Ein weiterer Ferritring (ohne Bezugszeichen) filtert vor dem speziell durch die Energiespeicherpakete 103, 103', 103'', 103''', 103$^{IV}$, 103$^V$ elektrisch versorgten Bereich auch die Signale heraus, die an die Überwachungseinrichtung 104' gesendet werden.

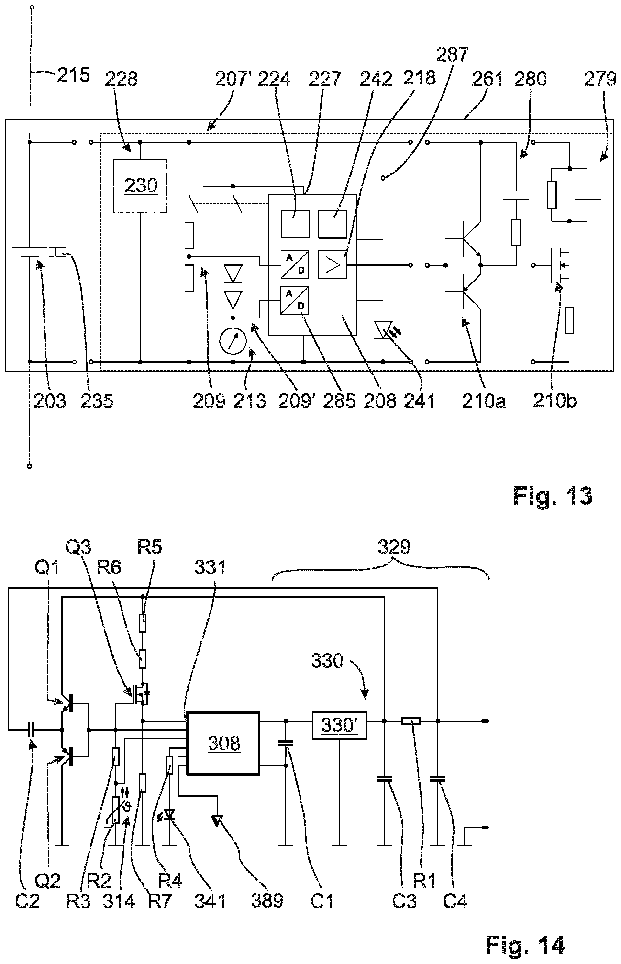

Figur 13 zeigt beispielhaft einen Aufbau einer Messelektronik 207'. Die Messelektronik 207' wird durch schematische Blockschaltbilder und vereinzelt durch elektrische Schaltsymbole dargestellt. Die Messelektronik 207' befindet sich mit einem Energiespeicherpaket 203 in einem gemeinsamen Gehäuse 261. Das Energiespeicherpaket 203 und die Messelektronik 207' bilden also ein Energiemodul. Die Spannung an einem Eingang der Messelektronik 207' entspricht - im regulären Betrieb - einer Nominalspannung 235, die das Energiespeicherpaket 203 zur Verfügung stellt (bzw. zur Verfügung stellen soll). Der Eingang der Messelektronik 207' liegt auf dem gleichen elektrischen Potenzial, wie ein elektrischer Pol des Energiespeicherpakets 203. Aus dem Gehäuse 261 führen Energieleitungen, wie die Energieleitung 215, heraus. Die Energieleitungen wie die Leitung 215 sind mit dem Energiespeicherpaket 203 elektrisch verbunden. Die Energieleitungen wie die Leitung 215 können zudem mit weiteren Modulen (nicht dargestellt) verbunden sein oder zu einem Energieleitungsanschluss (ohne Bezugszeichen) führen (vgl. auch Figur 1, Figur 2, Figur 11, Figur 12).

Wenn das Energiespeicherpaket 203 ausfällt, übernehmen die Energieleitungen 215 die Versorgung der Messelektronik 207' mit elektrischer Energie. Die Spannung, die an einem Versorgungsanschluss 227 eines Mikrokontrollers 208 anliegt, ist im Vergleich zu der Spannung an den Energieleitungen (z. B. der Energieleitung 215) über eine Spannungsherabsetzungsschaltung 228 herabgesetzt.

Der Mikrokontroller 208 ist eine aktive Komponente der Messelektronik 207'. Der Mikrokontroller 208 umfasst unter anderem einen Speicher 224, einen Zeitgeber 242, zwei Analog-Digitalwandler 285 zur Erfassung von Messdaten, die von Messeinrichtungen 209, 209' stammen, und einen Operationsverstärker, der Teil des Aufmodulierers 218 eines Signals ist. Der Mikrokontroller 208 bezieht seine Versorgungsspannung aus dem Festspannungsregler 230.

Die Messeinrichtungen 209, 209' erfassen Messdaten. Die Messeinrichtung 209 ist als Spannungsteilerschaltung mit zwei Widerständen dargestellt. Die Messeinrichtung 209 ermittelt einen um das Spannungsteilungsverhältnis verringerten Spannungswert. Mit der Messeinrichtung 209 wird die elektrische Spannung eines Energiespeicherpakets 203 erfasst. Die Messeinrichtung 209' ist als Zeigerinstrument symbolisiert und erfasst als Messinformation 213 einen Temperaturwert des Energiespeicherpakets 203. Der Temperaturwert wird über einen Spannungsabfall über zwei p-n-Übergänge, d. h., über zwei Dioden, gemessen. Es ist ein Anschlusspunkt 287 für einen weiteren Temperatursensor vorgesehen, der z. B. im Inneren des Energiespeicherpakets 203 angeordnet sein kann. Damit sind eine Differenzbildung bzw. Differenzberechnung von Temperaturen und eine schnelle Fehlererkennung möglich. Die Daten der Messeinrichtungen 209, 209' werden vom Mikrokontroller 208 über die Analog-Digitalwandler 285 erfasst. Der Mikrokontroller 208 legt die erfassten Messdaten in seinem Speicher 224 ab. Im Speicher 224 wird eine Historie der Messdaten in einem Protokoll abgelegt bzw. protokolliert.

Der Mikrokontroller 208 besitzt zudem die Fähigkeit, die im Speicher 224 abgelegten Messdaten statistisch auszuwerten. Der Mikrokontroller 208 stellt z. B. Abweichungen aktueller Messgrößen von einem über einen längeren Zeitraum, beispielsweise über mehrere Tage, Wochen oder gar Jahre, berechneten Mittelwert fest. Der Mikrokontroller 208 kann aus dem Vergleich aktueller Messdaten mit vorgegeben Solldaten, beispielsweise eine Tiefentladungsschwelle des Energiespeicherpakets 203, eine verfügbare elektrische Energie angeben. Der Mikrokontroller 208 kann auch aus dem Vergleich mit Mittelwerten einen Betriebszustand des Energiespeicherpakets 203 identifizieren. Ein Betriebszustand kann beispielsweise ein Normalbetrieb mit oder ohne einer vorhandenen Netzspannung zur Aufladung des Energiespeicherpakets 203 sein. Ein Betriebszustand kann auch einem Fehlerzustand entsprechen. Der Mikrokontroller 208 registriert auftretende Fehler des Energiespeicherpakets 203.

Durch den Mikrokontroller 208 festgestellte Fehler werden als Fehlermeldung oder als Alarm in das Protokoll auf dem Speicher 224 geschrieben. Die an den Mikrokontroller 208 angeschlossene Anzeigeeinheit 241, in Figur 13 durch eine LED dargestellt, visualisiert das Vorliegen eines Fehlerfalls. Es kann in einem Normalbetrieb eine grüne LED angesteuert sein, die während einer Datenübertragung blinkt. In einem Fehlerfall ist beispielsweise eine rote LED angesteuert oder ein spannungsabhängiger Wechsel einer Lichtabstrahlung einer angeschlossenen Leuchte, wie eine externe LED-Anordnung, wird veranlasst.

Im Speicher 224 ist auch eine vorherbestimmte Zeichenkombination, beispielsweise eine Seriennummer der Energiespeichereinheit 203, abgelegt. Die im Speicher 224 abgelegte Zahl ist der Zeichenkombination und damit dem Energiespeicherpaket 203 eineindeutig zugeordnet.

Ein weiterer Bestandteil des Mikrokontrollers ist der Zeitgeber 242. Der Zeitgeber 242 steuert die Messeinrichtungen 209, 209' an. Die Messeinrichtungen 209, 209' führen nur dann Messungen durch, wenn sie ein anweisendes Signal, d. h. eine Aufforderung zur Messung, von dem Zeitgeber 242 erhalten. Der Zeitgeber 242 veranlasst Messungen und bestimmt Messpausen. Die Dauer der Messpausen hängt auch von der im Speicher 224 abgelegten vorherbestimmten Zahl ab, oder anders gesagt, von der jeweiligen Energiespeichereinheit, wie der Energiespeichereinheit 203. Die jeweils neu ermittelten Messdaten wie die Messinformation 213 werden durch den Zeitgeber 242 in regelmäßigen Abständen, sofern ein regulärer Betriebszustand für den Mikrokontroller 208 vorliegt, als Datenpakete über eine Endstufe des Senders 210a oder 210b auf die Leitung 215 übertragen.

In Figur 13 werden zwei mögliche Endstufen 210a, 210b für einen Sender gezeigt. Eine der beiden möglichen Endstufen des Senders 210a, 210b umfasst einen Doppeltransistorschalter, der von dem Mikrokontroller 208 angesteuert wird, und einen Kondensator mit mindestens einem Widerstand. Der Sender 210a ist als Class-B-Verstärker mit einem Transistor für jeden Halbwellenbereich des Ansteuersignals realisiert. Der Widerstand sorgt dafür, dass der Kondensator als Zeitglied arbeiten kann. Ein Anschluss des Kondensators steht mit dem Pluspol des Energiespeicherpakets 203 in Verbindung und liegt deshalb auf gleichem Potenzial wie die eine Seite des Energiespeicherpakets. In der Endstufe 210a sind der Kondensator und der Widerstand in Reihe geschaltet. Der Anschluss des Kondensators, der nicht mit dem Pluspol in Verbindung steht, ist mit dem Widerstand verbunden. In dem Sender 210a liegt der Widerstand selbst an einem Kontakt zwischen dem Emitter eines ersten Transistors, insbesondere eines NPN-Transistors, und dem Kollektor eines zweiten Transistors, insbesondere eines PNP-Transistors. In der Endstufe 210b ist ein MOS-FET mit isolierter Gate-Elektrode verwendet. Der Widerstand und der Kondensator sind parallel geschaltet. Wenn der Mikrokontroller 208 den Schalter, wie oben zu der Endstufe 210b beschrieben, öffnet, lädt sich der Kondensator um. Dadurch wird ein Schaltsignal auf die Energieleitung 215 durch eine zusätzliche Spannung aufgeprägt. Die Endstufe 210a des Senders überträgt vorzugsweise einen logischen Pegel, die Endstufe 210b überträgt vorzugsweise eine kurze Flanke. Wird der Schalter wieder geschlossen, so kann der Kondensator geladen werden. Die Endstufe 210a ist in der Form eines Bandpassfilters 280 betreibbar. Die Endstufe 210b funktioniert als Bandfilter 279, der nur außerhalb einer festgelegten Bandbreite durchlässig ist.

Figur 14 zeigt u. a. das Dämpfungselement 330, zu dem der Kondensator C3 und der Widerstand R1 gehören, sowie ein nachgeschalteter Querregler 330'. Das Dämpfungselement 330 mit dem Querregler 330' dient dazu, eine Versorgungsspannung eines Mikrokontrollers 308 zu steuern. Der Querregler 330', die Kondensatoren C1, C3 und C4 und der Widerstand R1 wirken als Niedervoltschaltung 329. Der Mikrokontroller 308 hat mehrere Ausgänge. Ein Ausgang steuert über einen Widerstand R4 ein Anzeigeelement 341. Ein weiterer Ausgang des Mikrokontrollers 308 steuert eine Basis jedes der Transistoren Q1 und Q2 an. Die Transistoren Q1 und Q2 bilden gemeinsam mit einem Kondensator C2 eine Sendeeinheit. Über den Transistor Q3, der als Schaltsignal das Ausgangssignal des Mikrokontrollers 308 erhält, das auch die Transistoren Q1 und Q2 steuert, wird eine Erfassung von Messdaten an einem Eingangspin 331 des Mikrokontrollers 308 freigeschaltet. Die Widerstände R5, R6 und R7 bilden hierzu eine Spannungsteilerschaltung zur Messung einer Versorgungsspannung. Aus dem Widerstand R3 und dem veränderlichen Widerstand R2, der von einer zweiten Messgröße 314 abhängt, lässt sich die zweite Messgröße 314, beispielsweise eine Temperatur, wie symbolisch dargestellt, oder ein pH-Wert (als mögliche Alternative) ermitteln. Zusätzlich kann mit dem Temperatursensor 389 eine Referenztemperatur erhoben werden.

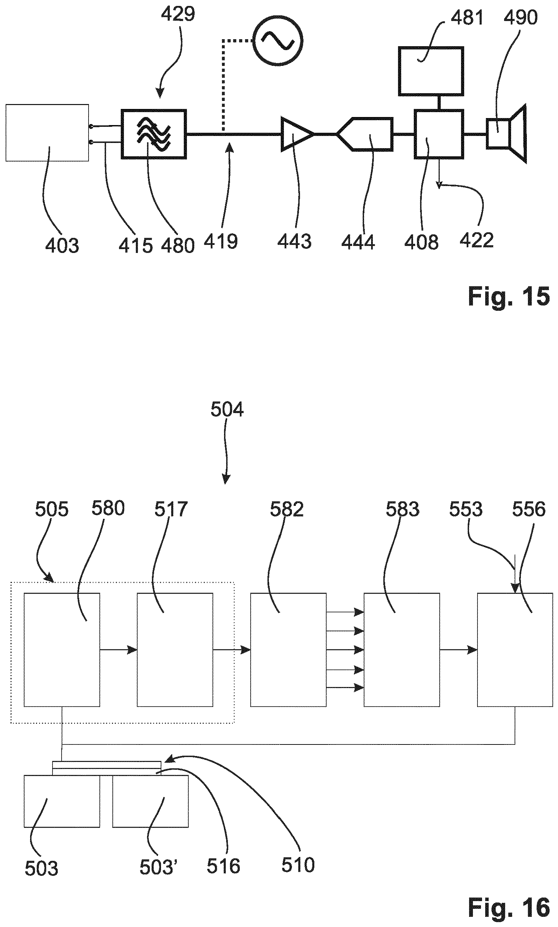

Figur 15 zeigt ein Energiespeicherpaket 403 mit einer Batterieüberwachung, insbesondere eine Empfängerseite einer Batterieüberwachung. Die Batterieüberwachung wird über Leitungen, wie die Leitung 415, mit Energie versorgt. Über einen Bandpassfilter 480 wird ein Gleichspannungsanteil eines Signals 419, das über die Leitungen 415 übertragen wird reduziert. Der Bandpassfilter 480 wirkt als Niedervoltschaltung 429, weil er die Versorgungsgleichspannung des Energiespeicherpakets 403, die für einen Betrieb des Mikrokontrollers 408 zu hoch ist, unterdrückt und nur die Signalwechselspannung durchlässt. Die Signalwechselspannung ist um mindestens den Faktor 0,5 kleiner als die Nominalspannung des Energiespeicherpakets 403. Die Amplitude des Signals 419 ist also höchstens halb so groß wie die Gleichspannung, die das Energiespeicherpaket 403 nominell liefern soll. Die Batterieüberwachung weist ein Zeitdiskretisierungsglied 443 auf. Das Zeitdiskretisierungsglied 443 gibt der Batterieüberwachung eine Taktfrequenz vor. Die Überwachung wird in diskretisierten Signalen, also in einzelnen, auflösbaren Schritten, die sich mit der Taktfrequenz wiederholen, durchgeführt. Die Batterieüberwachung empfängt mit der vorgegebenen Taktfrequenz Messsignale. Ein Digitalisierungsglied 444 wandelt die analogen Messspannungen in digitale Signale um. Das Digitalisierungsglied 444 erhält das gleichspannungsreduzierte Signal 419 und gibt die Information als digitale Daten an einen Mikrokontroller 408 weiter. Die Batterieüberwachung bzw. der Mikrokontroller 408 weist eine Kommunikationsschnittstelle 422 wie einen Ethernet- oder ein USB-Anschluss auf. Außerdem ist mit dem Mikrokontroller 408 eine Visualisierung 481 verbunden, die einen Monitor und eine Software zur Anzeige umfasst. Die Visualisierung 481 zeigt einen Status aller Einheiten an, von denen Signale 419 empfangen werden. Wenn von einer Einheit über einen Zeitraum, der länger ist als ein Schwellwert einer Mindestsenderate, kein Status empfangen wird, dann wird die betreffende Einheit als fehlerbehaftet eingestuft. Die Batterieüberwachung erstellt beispielsweise eine Fehlermeldung "keine Kommunikation". Über die Visualisierung 481 wird ein Benutzer aufgefordert, das entsprechende Energiespeicherpaket 403 zu überprüfen. Eine Dringlichkeit eines Fehlers kann auch mit einem akustischen Melder 490, z. B. nach Art einer Sirene, der an den Mikrokontroller 408 angeschlossen ist, hörbar gemacht werden.

Figur 16 zeigt eine weitere, mögliche Überwachungseinheit bzw. Überwachungselektronik 504. Die Überwachungseinheit umfasst einen Empfänger 505 mit einem Demodulator 517 und einem Bandpassfilter 580. Der Demodulator 517 digitalisiert ein gefiltertes Signal, das der Empfänger 505 empfängt. Das digitalisierte Signal wird in einem Dekodierer 582 entschlüsselt. Der Dekodierer 582 erstellt ein inverses Abbild eines von einem Modulator kodierten Signals. Das entschlüsselte Signal, das auch als transskribiertes Signal bezeichnet werden kann, wird von einer Steuerung 583 verarbeitet. In der Steuerung 583 ist eine Visualisierung integriert. Das Signal hat seinen Ursprung in den Energiespeicherpaketen 503, 503'. Die zwei Energiespeicherpakete 503, 503' werden gemeinsam von einer Messelektronik mit einer Mehrzahl von Messeinrichtungen (nicht dargestellt) überwacht und die Messergebnisse werden über einen Modulator 516 durch den Sender 510 zum Empfänger 505 über eine Leitungsverbindung (ohne Bezugszeichen) versendet. Der Steuerung 583 wird ein Zustand einzelner Energiespeicherpakete 503, 503' übermittelt. Die Steuerung 583 gibt Anweisungen an eine Ladevorrichtung 556 aus. Die Ladevorrichtung 556 wird von einem Versorgungsnetz 553, insbesondere einem öffentlichen Stromnetz, mit elektrischer Energie versorgt. Je nach Ladezustand eines Energiespeicherpakets 503, 503' veranlasst die Ladevorrichtung 556 die Einleitung eines Aufladevorgangs für das entsprechende Energiespeicherpaket 503, 503'. Die Steuerung 583 sorgt für optimale Ladezyklen und für eine Erhöhung der Lebensdauer des Energiespeicherpakets 503, 503'.

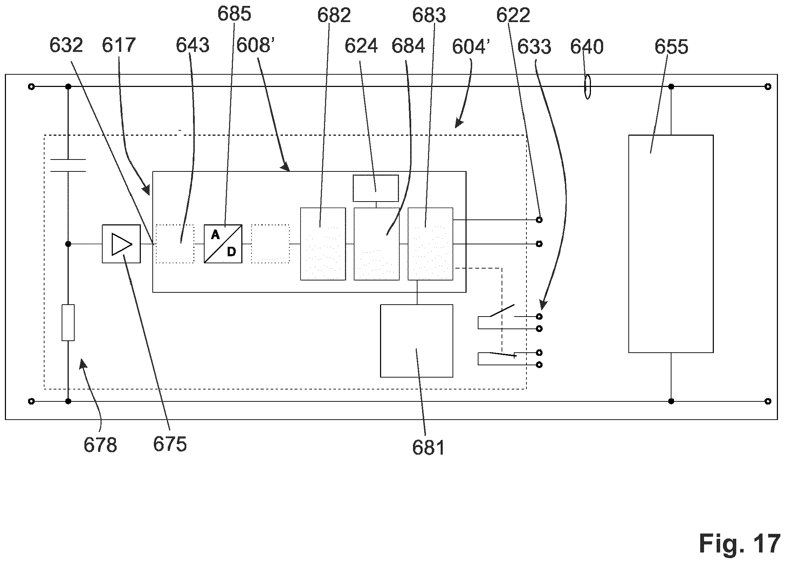

Figur 17 zeigt schematisch einen Aufbau einer Überwachungselektronik 604'. Die Überwachungselektronik 604' umfasst einen Mikrokontroller 608'. Als Mikrokontroller 608' ist ein digitaler Signalprozessor (DSP) vorgesehen. Einem Signaleingang 632 des Mikrokontrollers 608' ist ein Hochpassfilter 678, bestehend aus einem Kondensator und einem ohmschen Widerstand, vorgeschaltet. Der Hochpassfilter 678 filtert einen Gleichstromanteil heraus, der von einem Energiespeicherpaket (in Figur 7 nicht dargestellt) stammt. Der Hochpassfilter 678 lässt nur ein hochfrequentes Wechselspannungssignal an den Signaleingang 632 des Mikrokontrollers 608' gelangen. Vor Verarbeitung des Wechselspannungssignals im Mikrokontroller 608' wird das Signal durch einen Operationsverstärker 675 verstärkt. Die Verarbeitung des Signals in einem DSP ermöglicht eine einfache, aus wenigen Bauteilen aufgebaute Filterschaltung am Signaleingang 632.

Der Mikrokontroller 608' enthält einen Analog-Digital-Wandler 685 und eine Zeitdiskretisierung 643, die hinter dem Signaleingang 632 angeordnet sind. Die Zeitdiskretisierung 643 und der Analog-Digital-Wandler 685 sind Teil eines Demodulators 617. Das Signal wird innerhalb des Mikrokontrollers 608' von einem Dekodierer 682 entschlüsselt und in einer Auswerteeinheit 684 gelesen. Anschließend werden die Daten den einzelnen Energiespeicherpaketen (in Figur 7 nicht dargestellt), beispielsweise anhand einer Identifikationsnummer, zugeordnet. Die Auswerteeinheit 684 ist mit einem elektronischen Speicher 624 verbunden, in dem Messdaten und Konfigurationsdaten, wie Positionsnummern oder Seriennummern, abgelegt sind. Die Zustände der Energiespeicherpakete werden mit Hilfe einer Visualisierung 681 angezeigt und können über die Kommunikationsschnittstelle 622 per Fernwartung übertragen werden. Aus den Zustandsinformationen der Energiespeicherpakete errechnet der Mikrokontroller 608' Steuersignale, beispielsweise für eine Ladeeinrichtung oder eine Warnhupe mit Alarmlampe. Der Mikrokontroller 608' umfasst also auch eine Steuerung 683.

Die in der Beschreibung zu Figur 16 angesprochene Ladevorrichtung 556 für die Energiespeicherpakete ist in Figur 17 durch von dem Mikrokontroller 608' angesteuerte Schalter 633 symbolisiert. Selbstverständlich kann die Steuerung auch andere Elemente - je nach ausgewertetem Signal - ansteuern.

Nach der Überwachungselektronik 604' folgt ein Anschluss für einen regulären Stromkreis mit einer Last 655. Der reguläre Stromkreis ist von der Überwachungselektronik 604' durch einen Ferritring 640 abgeschirmt. Der Ferritring 640 unterdrückt eine störende Wirkung gesendeter Hochfrequenzsignale auf den Laststromkreis.

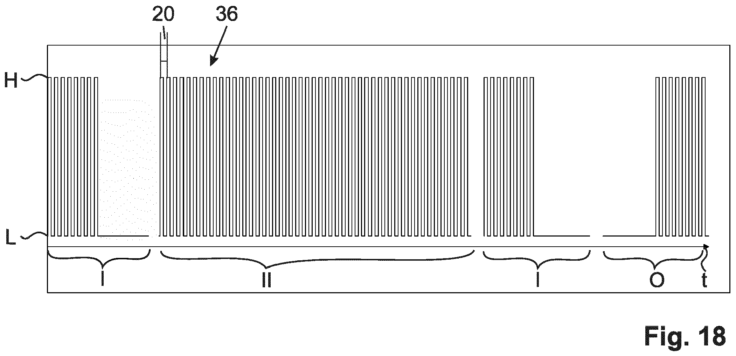

Figur 18 zeigt die Übertragung von Informationen auf Energieleitungen wie den Energieleitungen 115, 115' (siehe Figur 12) mittels einem Manchester-Code. Wie aus der Signalfolge in der zeitlichen Entwicklung auf der t-Achse zu entnehmen ist, werden die einzelnen Bits wie "I" oder "O" mit einer Trägerfrequenz 20 übertragen, die im vorliegenden Fall 140 kHz beträgt. Die Wechselspannung 36 oszilliert zwischen einem höheren Spannungswert H und einem niedrigeren Spannungswert L. Die Übertragung der Wechselspannung 36 erfolgt mit Unterbrechungen, die auch als Amplitudenmodulation der Wechselspannung 36 bezeichnet werden können. Aus Figur 18 lässt sich eine Trägerfrequenz 20, genauer gesagt, die dazu gehörige Periodendauer, als Kehrwert einer Wechselspannung 36 entnehmen.

Bei einer Nutzung der in Figur 18 und auch in Figur 8 dargestellten Manchester-Codierung werden Informationen auf redundante Weise übertragen. Einem Spannungswert H bzw. L muss der entgegengesetzte Spannungswert L bzw. H folgen. Das Bit "I" wird durch die Spannungswertfolge H, gefolgt von L dargestellt. Beim Bit "O" sind die Spannungswerte L, H genau umgekehrt gereiht als beim Bit "I". Ein Beginn einer Informationsübertragung wird einer Überwachungselektronik durch eine Phase II, die selbst keine Information enthält, signalisiert. Senden zwei Messelektroniken wie die Messelektroniken 7, 7' oder 107", 107''' (vgl. Figuren 1 und 2) gleichzeitig, werden deren Spannungen addiert. Die Überwachungselektronik, wie z. B. die Überwachungselektronik 104 (gezeigt in Figur 2), erkennt in diesem Fall, dass beispielsweise dem Spannungswert H nicht der Spannungswert L folgt und verwirft die übertragene Information als ungültig. Durch redundante Informationsübertragung kann die Überwachungselektronik 104 die erhaltene Information auf Plausibilität prüfen. Wie in Figur 18 gezeigt ist, kann den Abschluss einer Datenübertragung vor der Phase II ein sogenanntes Kontrollbit bilden, mit welcher ein Sender, z. B. der Sender 10 aus Figur 1, im Falle eines Wertes "I" eine fehlerfreie Signalmodulation durch einen Modulator anzeigt.

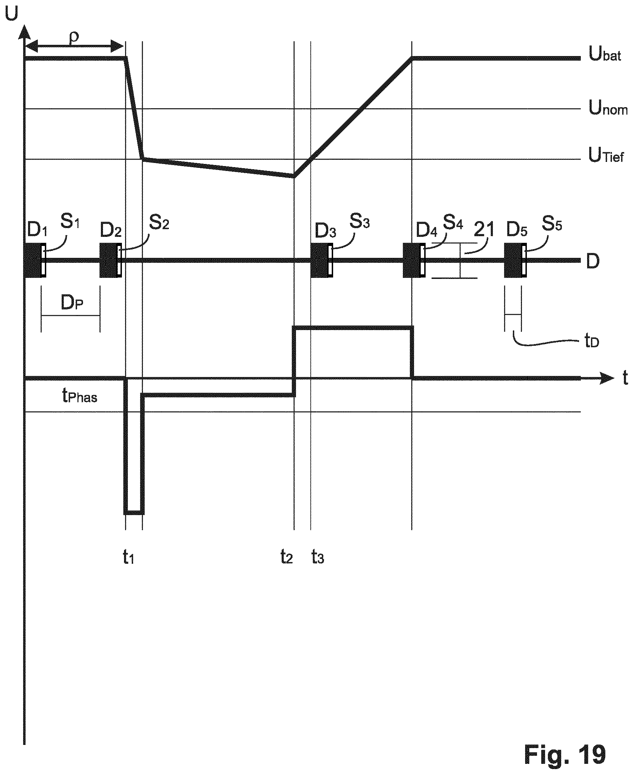

Figur 19 zeigt einen Zusammenhang bzw. eine Wechselwirkung zwischen Spannungsverlauf U und Datenpaketübertragung D und zeigt hierzu ein differenziertes Signal in einer Batterieüberwachungselektronik im zeitlichen Ablauf t. Für die Spannung U in der Energieversorgungseinrichtung sind die unterschiedlichen Zeitpunkte $t_1$, $t_2$, $t_3$, markiert. Die Spannung $U_{bat}$, die z. B. an einem Energiespeicherpaket wie dem Energiespeicherpaket 103 (siehe Figur 2) abgenommen werden kann, unterschreitet in einer Phase einen Tiefentladungsschwellwert $U_{Tief}$. In dieser Phase gibt es keine Signalübertragung durch Datenpakete wie den Datenpaketen $D_1$, $D_2$, $D_3$, $D_4$, $D_5$. Die Datenpakete treten nur im Abstand von gewissen Pausen auf, solche Datenübertragungspausen $D_P$ dauern an, solange die Spannung $U_{bat}$ unterhalb des Schwellwertes $U_{Tief}$ ist. Die Batterieüberwachung wie die Batterieüberwachungselektronik 104 (siehe Figur 2) arbeitet mit einer Differenzierung. Die einzelnen Datenpakete $D_1$, $D_2$, sofern sie von der gleichen Messelektronik stammen, treten mit einer Mindestrate p auf. Jedem der Datenpakete $D_1$, $D_2$, $D_3$, $D_4$, $D_5$ ist als zusätzliche Redundanzinformation jeweils eine Quersumme $S_1$, $S_2$, $S_3$, $S_4$, $S_5$ angefügt, die vor dem Versenden in einem Mikrokontroller berechnet wurde. Die Übereinstimmung der übertragenen Quersumme $S_1$, $S_2$, $S_3$, $S_4$, $S_5$ mit einer nach dem Empfang der Datenpakete $D_1$, $D_2$, $D_3$, $D_4$, $D_5$ und der Demodulation berechneten Quersumme ist ein Indiz für eine fehlerfreie Übertragung.

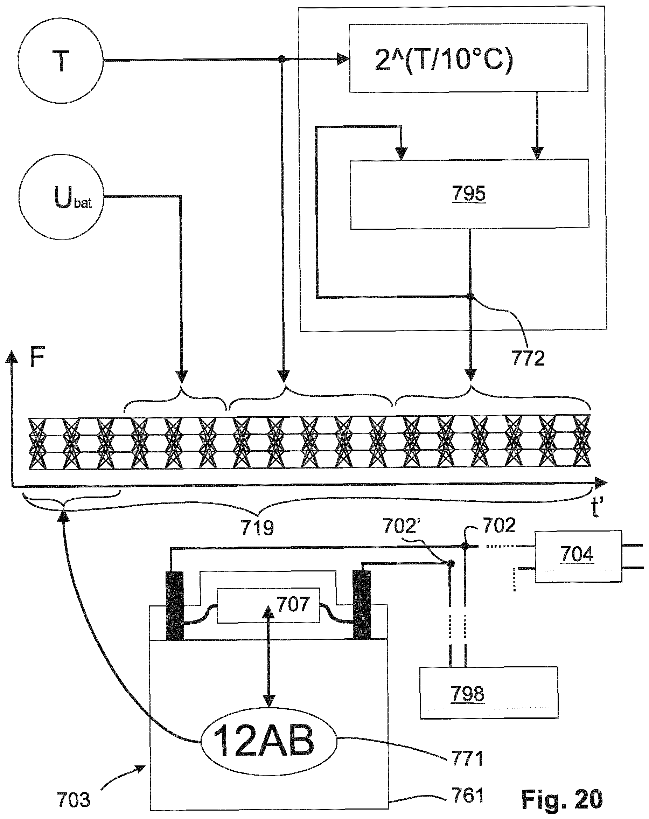

Die Batteriespannung $U_{bat}$ weist eine zeitliche Änderung auf, die von einer Batterieüberwachung ausgewertet wird. Zur Auswertung der gespeicherten zeitlichen Änderung der Batteriespannung $U_{bat}$, die auch als Historie der elektrischen Spannung bezeichnet wird, und zur Darstellung eines Aspekts der Historie ist die Differenzierung möglich, nämlich die mathematische Bildung der Ableitung nach der Zeit. Die Berechnung kann z. B. in einer Überwachungselektronik oder einer Messelektronik, insbesondere schaltungstechnisch, durchgeführt werden. Die unterste Kurve in Figur 19 sowie in Figur 9 stellen eine Ableitung der Batteriespannung $U_{bat}$ nach der Zeit t dar. Anfangs ist die Batteriespannung konstant. Zum Zeitpunkt $t_1$ tritt ein Ereignis, wie beispielsweise ein Kurzschluss oder ein Stromausfall, ein. Das Energiespeicherpaket, z. B. das Energiespeicherpaket 703 (siehe Figur 20), wird entladen; die Spannung fällt konstant ab. Die zeitliche Ableitung ergibt einen negativen Wert. Sobald die Tiefentladungsschwelle $U_{Tief}$ erreicht ist, greift ein Schutzschalter bzw. eine Strombegrenzung in eine Leitungsverbindung ein, sodass die Entladung des Energiespeicherpakets langsamer vonstattengeht. Die zeitliche Ableitung der Batteriespannung $U_{bat}$ ergibt immer noch einen negativen, allerdings betragsmäßig kleineren Wert. Zum Zeitpunkt $t_2$ wird das Energiespeicherpaket wieder geladen. Die Ladung erfolgt, wenn z. B. der zum Zeitpunkt $t_1$ eingetretene Stromausfall beendet ist. Die zeitliche Ableitung der Batteriespannung $U_{bat}$ ergibt einen positiven Wert. Die Spannung $U_{bat}$ steigt an. Zum Zeitpunkt $t_3$ liegt die Spannung $U_{bat}$ wieder über der Tiefentladungsschwelle $U_{Tief}$. Nach einem weiteren Zeitintervall erreicht die Spannung $U_{bat}$ wieder die Nominalspannung $U_{nom}$ des Energiespeicherpakets. Der schematisch dargestellte, quasi lineare Anstieg setzt sich weiter fort, bis ein Maximum erreicht ist, bei dem z. B. der Ladevorgang beendet wird. Die Spannung $U_{bat}$ verbleibt in dieser Zeit auf konstantem Niveau und die Ableitung von $U_{bat}$ ergibt Null.

In einer Zeitspanne zwischen $t_1$ und $t_3$ ist ein Senden von Datenpaketen unterdrückt. Das Energiespeicherpaket wird vor weiterer Entladung durch eine Senderfunktion der Messelektronik geschützt. Zu den übrigen Zeiten wie $t_{Phas}$ oder t, die später als $t_3$ liegen, kann ein Senden von Datenpaketen $D_1$, $D_2$, $D_3$, $D_4$, $D_5$, das sich mit Datenübertragungspausen $D_P$ abwechselt, erfolgen.

Die Datenpakete $D_1$, $D_2$, $D_3$, $D_4$, $D_5$ werden als Wechselspannungen übertragen. Eine Informationsübertragung findet in frequenzmodulierter Weise statt. Die Übertragung eines Datenpakets $D_1$, $D_2$, $D_3$, $D_4$, $D_5$ benötigt eine Zeitspanne

bzw. eine Dauer $t_D$ von beispielweise 10 ms. Eine Amplitude 21 einer in einem Datenpaket $D_1$, $D_2$, $D_3$, $D_4$, $D_5$ aufmodulierten Spannung bleibt konstant. An einem Energieanschluss, wie beispielsweise dem Energieanschluss 26, 26', 26", 26"', $26^{IV}$, $26^V$ (bekannt aus Figur 1), liegt eine Spannung an, die sich durch Addition der Batteriespannung $U_{bat}$ und der Amplitude 21 eines Datenpakets $D_1$, $D_2$, $D_3$, $D_4$, $D_5$ ergibt. Die ausgegebene Spannung ist die Summe aus der Batteriespannung $U_{bat}$ als Gleichspannung und der aufmodulierten Wechselspannung der Datenpakete $D_1$, $D_2$, $D_3$, $D_4$, $D_5$. Ein Empfänger trennt die aufmodulierte Wechselspannung von der Gleichspannung und demoduliert die Datenpakete $D_1$, $D_2$, $D_3$, $D_4$, $D_5$, um deren Information zu extrahieren.

Figur 20 zeigt, wie Informationen F, die z. B. mit Bitdipolen, in denen unterschiedliche Informationen wie ein Identifikator 771 (z. B. eine Energiespeicheridentifikation), eine Spannung, eine Temperatur bzw. ein Temperaturmesswert T oder eine Historie 772 enthalten sind, frequenzmoduliert übertragen werden können. Zu jedem Zeitpunkt können also mindestens 4 Informationen übertragen werden.

Bitdipole sind durch vier verschiedene Frequenzen oder einnehmbare Zustände, durch die gesendet wird, realisiert. Alternativ oder zusätzlich kann auch eine Amplitudenmodulation verwendet werden, bei der Bitdipole durch unterschiedliche Spannungsniveaus realisiert sind.

Figur 20 zeigt beispielhaft einen Aufbau eines Datenpakets F. Das Datenpaket F, das in einer zeitlichen Anordnung mit dem Zeitverlauf t' gesendet wird, hat eine vorgegebene Länge und Form. Zuerst wird ein Identifikator 771 gesendet. Drei Bitdipole mit jeweils 4 Informationen (also zwei Bits) sind für einen Identifikator 771 reserviert. Der Identifikator 771 ist ein eindeutiges Zeichen, das jedem Energiespeicherpaket 703 zugeordnet ist, wie beispielsweise eine aus Buchstaben "AB" und Zahlen "12" bestehende Seriennummer des Energiespeicherpakets 703. Der Identifikator 771 ist an einem Gehäuse 761 des Energiespeicherpakets 703 von außen sichtbar angebracht. Zusätzlich ist der Identifikator 771 in einem Speicher einer Messelektronik 707 abgelegt und wird von dort in das zu sendende Datenpaket F geschrieben.

Die auf den Identifikator 771 folgenden Bitdipole sind für aktuelle Messergebnisse, wie eine Spannung $U_{bat}$ und eine Temperatur T des Energiespeicherpakets 703, reserviert. Abschließend werden noch Daten aus einer im Speicher abgelegten Historie 772, wie frühere Messwerte, Statistiken oder Fehlerzustände, in das Datenpaket F geschrieben. Die Berechnungseinheit 795 in der Messelektronik 707 kann z. B. eine Historie 772 nach Art eines gleitenden Mittelwertes aus im Speicher abgelegten Messwerten berechnen. Das Datenpaket F wird als Signal 719 moduliert und versendet.

Die Messelektronik 707 und das Energiespeicherpaket 703 sind als Modul innerhalb des gleichen Gehäuses 761 angeordnet. Das versendete Datenpaket F gelangt von der Messelektronik 707 zu den Energieleitungsanschlüssen 702, 702' und weiter zu der Überwachungselektronik 704. Die Überwachungselektronik 704 stellt die Stromversorgung der Notlichtlampen 798 insbesondere aus dem Energiespeicherpaket 703 sicher. Filter (nicht dargestellt) unterdrücken die Weiterleitung des Datenpakets F zu den Notlichtlampen 798.

## Bezugszeichenliste

| Bezugzeichen | Bedeutung |
|---|---|
| 1, 1' 100, 100' | Energieversorgungseinrichtung |
| 2, 2', 702, 702' | Energieleitungsanschluss |
| 3, 3', 3", 3"', | Energiespeicherpaket |
| 103, 103', 103", 103"', $103^{IV}$, $103^V$, 203, 403, 503, 503', 703 4, 104, 104', 504, 604, 604', 704 | Überwachungselektronik |
| 5, 5', 105, 105', 505 | Empfänger |
| 6 | Einheit |
| 7, 7', 7", 7"', | Messelektronik |
| 107, 107', 107", 107"', $107^{IV}$, $107^V$, 207, 207', 707 8, 8', 8", 8"', 208, 308, 408, 608, 608' | Mikrokontroller, insbesondere mit einer Mikroprozessoreinheit |
| 9, 9', 9", 9"', $9^{IV}$, $9^V$, $9^{VI}$, $9^{VII}$, | Messeinrichtung |
| 209, 209' 10, 10', 10", 10"', $10^{IV}$, 110, | Sender |
| 110', 210a, 210b, 510 11, 11',11", 11"', 111, 111', 111", 111"', $111^{IV}$, $111^V$ | Anschluss |
| 12, 12', 12", 12"' | Messpunkt |

| | |
|---|---|
| 213 | Messinformation |
| 314 | Messgröße |
| 15, 15', 115, 115', 215, 415 | Leitungen, insbesondere Energieleitungen |
| 16, 16', 16", 16''', 516 | Modulator |
| 17, 517, 617 | Demodulator |
| 218 | Aufmodulierer |
| 419, 719 | Signal |
| 20 | Trägerfrequenz |
| 21 | Amplitude |
| 22, 422, 622 | Kommunikationsschnittstelle |
| 23 | Batterieüberwachung |
| 224, 624 | Speicher |
| 26, 26', 26", 26''', 26$^{IV}$, 26$^V$, 26$^{VI}$, 26$^{VII}$ 227 | Energieanschluss Versorgungsspannungsanschluss |
| 228 | Spannungsherabsetzungsschaltung |
| 329, 429 | Niedervoltschaltung |
| 230, 330 | Dämpfungselement, insbesondere als Spannungsregler |
| 330' | Querregler |
| 331 | Eingangspin |
| 632 | Signaleingang |
| 633 | Schalter |
| 235 | Nominalspannung |
| 36 | Wechselspannung |
| 140, 140$^I$, 140", 140$^{III}$, 140$^{IV}$, 140$^V$, 640 241, 341 | Ferritring Anzeigeelement |
| 242 | Zeitgeber |
| 443, 643 | Zeitdiskretisierungsglied |
| 444 | Digitalisierungsglied |
| 50, 50', 150, 150' | Batterieüberwachungseinrichtung |
| 51 | Zentralbatterieanlage |
| 152 | Stromversorgungssystem |
| 53, 553 | Versorgungsnetz, insbesondere öffentliches Stromnetz |
| 55, 655 | Last |
| 56, 556 | Ladevorrichtung, insbesondere Ladungselektronik |
| 57 | Ladestromregler |
| 58 | Gleichrichter |
| 160 | Inneres |
| 261, 761 | Gehäuse |
| 65, 65' | Ausgangsfilter, insbesondere Rauschunterdrückung |
| 70 | Energieversorgungs- |

| | |
|---|---|
| | leitung |
| 771 | Identifikator |
| 772 | Historie |
| 675 | Operationsverstärker |
| 678 | Hochpassfilter |
| 279 | Bandfilter |
| 280, 480, 580 | Bandpassfilter |
| 481, 681 | Visualisierung |
| 582, 682 | Dekodierer |
| 583, 683 | Steuerung |
| 684 | Auswerteeinheit |
| 285, 685 | Analog-Digital-Wandler |
| 287 | Anschlusspunkt für Sensor |
| 389 | Temperatursensor |
| 490 | akustischer Melder |
| 795 | Berechnungseinheit |
| 198, 798 | Verbraucher, insbesondere Notlichtlampe |

| | |
|---|---|
| C1, C2, C3, C4 | Kondensator |
| R1, R2, R3, R4, R5, R6, R7 | Widerstand |
| Q1, Q2, Q3 | Transistor |
| D | Datenpaketübertragung |
| $D_1, D_2, D_3, D_4, D_5$ | Datenpaket |
| $D_p$ | Datenübertragungspause |
| $S_1, S_2, S_3, S_4, S_5$ | Quersumme |
| F | Datenpakete bzw. Datensignal |
| H | ein hoher Pegel |
| L | ein niedriger Pegel |
| I | ein Bit mit Wert "1" bzw. Phase eines Bits mit der Information "1" |
| II | Phase, insbesondere ohne Informationsübertragung |
| O | ein Bit mit Wert "O" bzw. Phase eines Bits mit der Information "O" |
| T | Temperaturmesswert |
| t, t' | Zeit bzw. Zeitverlauf |
| $t_1, t_2, t_3$ | Zeitpunkt |
| $t_D$ | Dauer einer Datenübertragung |
| $t_{Phas}$ | Zeit, in der eine Datenübertragung oder eine Datenübertragungspause auftreten |
| U | Spannung |
| $U_{bat}$ | Spannung, insbesondere eines Energiespeicherpakets |
| $U_{nom}$ | Spannung, insbesondere nominelle Spannung eines Energiespeicherpakets |
| $U_{Tief}$ | Spannung, insbesondere Spannungspegel einer Tiefentladungsschwelle |

p    Datenrate, insbesondere mittlere Datenrate

**Patentansprüche**

1. Energieversorgungseinrichtung (1, 1', 100, 100') mit Batterieüberwachung (23), Energieleitungsanschluss (2, 2', 702, 702') und
mehrere elektrochemische Energiespeicherpakete (3, 3', 3", 3'", 103, 103', 103", 103'", 103$^{IV}$, 103$^V$, 203, 403, 503, 703), wobei jedes dieser Energiespeicherpakete (3, 3', 3", 3'", 103, 103', 103", 103'", 103$^{IV}$, 103$^V$, 203, 403, 503, 703) wenigstens zwei Energieanschlüsse (26, 26', 26", 26'", 26$^{IV}$, 26$^V$, 26$^{VI}$, 26$^{VII}$) hat, von denen die einzelnen Energiespeicherpakete (3, 3', 3", 3'", 103, 103', 103", 103'", 103$^{IV}$, 103$^V$, 203, 403, 503, 703) entweder untereinander oder mit dem Energieleitungsanschluss (2, 2', 702, 702') elektrisch verbunden sind,

wobei die Batterieüberwachung (23) Bauteile oder Baugruppen, der Art nach eine Überwachungselektronik (4, 104, 104', 604, 604', 704) mit einem Empfänger (5, 5', 105, 105', 505) und

mehrere, von der Überwachungselektronik (4, 104, 104', 604, 604', 704) räumlich separiert angeordnete Messelektroniken (7, 7', 7", 7''', 107, 107', 107", 107''', 107$^{IV}$, 107$^V$, 207, 207', 707), jeweils zur Messung wenigstens einer Messinformation (213) zu einem Zustand des Energiespeicherpaketes (3, 3', 3", 3''',103, 103', 103", 103''', 103$^{IV}$, 103$^V$, 203, 403, 503, 703), hat,

und jede der Messelektroniken (7, 7', 7", 7''', 107, 107', 107", 107''', 107$^{IV}$, 107$^V$, 207, 207', 707) jeweils eine eigene Messeinrichtung (9, 9', 9", 9''', 9$^{IV}$, 9$^V$, 9$^{VI}$, 9$^{VII}$, 209, 209') und einen Sender (10, 10', 10", 10''', 10$^{IV}$, 110, 110', 210a, 210b) umfasst,

und wobei wenigstens zwei Energiespeicherpaketen (3, 3', 3", 3''', 103, 103', 103", 103''', 103$^{IV}$, 103$^V$, 203, 403, 503, 703) jeweils eine eigene Messeinrichtung (9, 9', 9", 9''', 9$^{IV}$, 9$^V$, 9$^{VI}$, 9$^{VII}$, 209, 209') zugeordnet ist,

und wobei der Empfänger (5, 5', 105, 105', 505) einen Demodulator (17, 517, 617) umfasst,

der an Leitungen (15, 15", 115, 115', 215, 415), die an dem Energieleitungsanschluss (2, 2', 702, 702') angeschlossen sind, angeschlossen ist,

wobei jeweils eine Messeinrichtung (9, 9", 9$^{IV}$, 9$^{VI}$) nur an jeweils einem Energiespeicherpaket (3, 3', 3", 3''', 103, 103', 103", 103''', 103$^{IV}$, 103$^V$, 203, 403, 503, 703) über einen Anschluss (11, 11', 11", 11''', 111, 111', 111", 111''', 111$^{IV}$, 111$^V$) elektrisch angeschlossen ist und

der Anschluss (11, 11', 11", 11''', 111, 111', 111", 111''', 111$^{IV}$, 111$^V$) für die jeweilige Messeinrichtung (9, 9", 9$^{IV}$, 9$^{VI}$) jeweils einen Messpunkt (12, 12', 12", 12''') in einem einzigen Energiespeicherpaket (3, 3', 3", 3''', 103, 103', 103", 103''', 103$^{IV}$, 103$^V$, 203, 403, 503, 703) bildet, an dem (12, 12', 12", 12''') eine elektrische Spannung messbar ist, und wobei jede Messelektronik (7, 7', 7", 7''', 107, 107', 107", 107''', 107$^{IV}$, 107$^V$, 207, 207', 707) weiterhin ihren eigenen Mikrokontroller (8, 8', 8", 8''', 208, 308, 408, 608, 608') aufweist,

und wobei jeder Sender (10, 10', 10", 10''', 10$^{IV}$, 110, 110', 210a, 210b) der Messelektroniken (7, 7', 7", 7''', 107, 107', 107", 107''', 107$^{IV}$, 107$^V$, 207, 207', 707) einen mittels des Mikrokontrollers (8, 8', 8", 8''', 208, 308, 408, 608, 608') der Messelektronik (7, 7', 7", 7''', 107, 107', 107", 107''', 107$^{IV}$, 107$^V$, 207, 207', 707) steuerbaren Modulator (16, 16', 16", 16''') hat,

wobei wenigstens ein Modulator (16, 16', 16", 16''') elektrisch mit dem Energieleitungsanschluss (2, 2', 702, 702') in Verbindung steht und eine Einheit (6) umfasst,

durch die ein Aufmodulieren eines Signals (419, 719) auf den Energieleitungsanschluss (2, 2', 702, 702') durchführbar ist,

wobei in dem Signal (419, 719) eine von der Messelektronik (7, 7', 7", 7''', 107, 107', 107", 107''', 107$^{IV}$, 107$^V$, 207, 207', 707) ermittelte Information (213) kodiert ist, das über den Energieleitungsanschluss (2, 2', 702, 702') übertragbar ist,

und wobei der Demodulator (17, 517, 617) des Empfängers (5, 5', 105, 105', 505) für einen Empfang des auf den Energieleitungen (15, 15', 115, 115', 215, 415) aufmodulierten Signals (419, 719) gestaltet ist,

sodass der Empfänger (5, 5', 105, 105', 505) die von der Messelektronik (7, 7', 7", 7''', 107, 107', 107", 107''', 107$^{IV}$, 107$^V$, 207, 207', 707) stammende Information (213) empfangen und dekodieren kann,

**dadurch gekennzeichnet, dass**

die Messelektronik (7, 7', 7", 7''', 107, 107', 107", 107''', 107$^{IV}$, 107$^V$, 207, 207', 707) dazu eingerichtet ist,

den Zustand des Energiespeicherpakets (3, 3', 3", 3''', 103, 103', 103", 103''', 103$^{IV}$, 103$^V$, 203, 403, 503, 703) anhand einer gemessenen Spannung zu bestimmen,

indem die gemessene Spannung mit einer Nominalspannung und einer Tiefentladungsschwelle des Energiespeicherpakets (3, 3', 3", 3''', 103, 103', 103", 103''', 103$^{IV}$, 103$^V$, 203, 403, 503, 703) verglichen wird,

und wobei die Messelektronik (7, 7', 7", 7''', 107, 107', 107", 107''', 107$^{IV}$, 107$^V$, 207, 207', 707) ferner dazu eingerichtet ist, in Phasen erhöhter Belastung des Energiespeicherpakets (3, 3', 3", 3''', 103, 103', 103", 103''', 103$^{IV}$, 103$^V$, 203, 403, 503, 703), insbesondere aufgrund von Teilschädigungen, eines Memoryeffekts oder besonders starker Entladung, ein Senden von Datenpaketen ($F_1$, $D_1$, $D_2$, $D_3$, $D_4$, $D_5$) zu reduzieren und im Fall einer Tiefentladung des Energiespeicherpaketes (3, 3', 3", 3''', 103, 103', 103", 103''', 103$^{IV}$, 103$^V$, 203, 403, 503, 703) das Senden von Datenpaketen ($F_1$, $D_1$, $D_2$, $D_3$, $D_4$, $D_5$) zu unterbrechen.

2. Energieversorgungseinrichtung (1, 1', 100, 100') nach Anspruch 1,
**dadurch gekennzeichnet, dass**
der Modulator (16, 16', 16", 16''') zur Aufmodulation einer Wechselspannung (36) zur Umwandlung der Information (213) in ein Signal (419, 719) gestaltet ist,
wobei die aufmodulierte Wechselspannung (36) eine Trägerfrequenz (20) in einem Bereich oberhalb von 10 kHz oder eine Amplitude (21) der aufmodulierten Wechselspannung mindestens 1 μV beträgt.

3. Energieversorgungseinrichtung (1, 1', 100, 100') nach Anspruch 2, **dadurch gekennzeichnet, dass** die aufmodulierte Wechselspannung (36) eine Trägerfrequenz (20) in einem Bereich zwischen 140 kHz und 90 MHz aufweist und eine Amplitude (21) der aufmodulierten Wechselspannung mindestens 1 μV bei einer Standardamplitude auf dem Energieleitungsanschluss (2, 2', 702, 702') von mindestens 1 mV beträgt.

4. Energieversorgungseinrichtung (1, 1', 100, 100') nach Anspruch 2 oder 3, **dadurch gekennzeichnet, dass** der Modulator (16, 16', 16", 16''') für eine aufmodulierte Wechselspannung in frequenzmodulierender Weise gestaltet ist.

5. Energieversorgungseinrichtung (1, 1', 100, 100') nach einem der vorhergehenden Ansprüche, **dadurch gekennzeichnet, dass** die Messelektronik (7, 7', 7", 7''', 107, 107', 107", 107''', 107$^{IV}$, 107$^V$, 207, 207', 707) eine Spannungsherabsetzungsschaltung (228) umfasst, die mit einem Versorgungsspannungsanschluss (227) des Mikrokontrollers (8, 8', 8", 8''', 208, 308, 408, 608, 608') verbunden ist.

6. Energieversorgungseinrichtung (1, 1', 100, 100') nach Anspruch 5, **dadurch gekennzeichnet, dass** eine der Leitungen (15, 15", 115, 115', 215, 415) als eine Energieversorgungsquelle des Mikrokontrollers (8, 8', 8", 8''', 208, 308, 408, 608, 608') nutzbar ist.

7. Energieversorgungseinrichtung (1, 1', 100, 100') nach einem der vorhergehenden Ansprüche, **dadurch gekennzeichnet, dass** der Modulator (16, 16', 16", 16''') jedes Energiespeicherpaketes (3, 3', 3", 3''', 103, 103', 103", 103''', 103$^{IV}$, 103$^V$, 203, 403, 503, 703) an den Energieanschlüssen (26, 26', 26", 26''', 26$^{IV}$, 26$^V$, 26$^{VI}$, 26$^{VII}$) des Energiespeicherpaketes (3, 3', 3", 3''', 103, 103', 103", 103''', 103$^{IV}$, 103$^V$, 203, 403, 503, 703) angeschlossen ist.

8. Energieversorgungseinrichtung (1, 1', 100, 100') nach einem der vorhergehenden Ansprüche, **dadurch gekennzeichnet, dass** die Überwachungselektronik (4, 104, 104', 604, 604', 704) mindestens eine serielle Kommunikationsschnittstelle (22, 422, 622) wie eine RS-232- oder eine Ethernet-Schnittstelle besitzt.

9. Energieversorgungseinrichtung (1, 1', 100, 100') nach einem der vorhergehenden Ansprüche, **dadurch gekennzeichnet, dass** die Überwachungselektronik (4, 104, 104', 604, 604', 704) mit einem Speicher (224) ausgerüstet ist.

10. Energieversorgungseinrichtung (1, 1', 100, 100') nach einem der vorhergehenden Ansprüche, **dadurch gekennzeichnet, dass** die Messelektronik (7, 7', 7", 7''', 107, 107', 107", 107''', 107$^{IV}$, 107$^V$, 207, 207', 707) über mindestens eine Messeinrichtung (9, 9', 9", 9''', 9$^{IV}$, 9$^V$, 9$^{VI}$, 9$^{VII}$, 209, 209') für eine Temperaturmessung (287, 389) oder eine Spannungsmessung oder einen Innenwiderstand des Energiespeicherpaketes (3, 3', 3", 3''', 103, 103', 103", 103''', 103$^{IV}$, 103$^V$, 203, 403, 503, 703) verfügt.

11. Energieversorgungseinrichtung (1, 1', 100, 100') nach einem der vorhergehenden Ansprüche, **dadurch gekennzeichnet, dass** die Messelektronik (7, 7', 7", 7''', 107, 107', 107", 107''', 107$^{IV}$, 107$^V$, 207, 207', 707) einen Zeitgeber (242) aufweist, durch den (242) ein Zustandswechsel aus oder in eine Messpause der Messelektronik (7, 7', 7", 7''', 107, 107', 107", 107''', 107$^{IV}$, 107$^V$, 207, 207', 707) erwirkbar ist.

12. Energieversorgungseinrichtung (1, 1', 100, 100') nach Anspruch 11, **dadurch gekennzeichnet, dass** die Messelektronik (7, 7', 7", 7''', 107, 107', 107", 107''', 107$^{IV}$, 107$^V$, 207, 207', 707) einen Speicher (224) mit einer dem Energiespeicherpaket (3, 3', 3", 3''', 103, 103', 103", 103''', 103$^{IV}$, 103$^V$, 203, 403, 503, 703) zugeordneten, beliebig vorbestimmbaren Zahl aufweist, die dem Zeitgeber (242) in einer Bestimmung einer Sendepausendauer zur Verfügung steht.

13. Energieversorgungseinrichtung (1, 1', 100, 100') nach einem der vorhergehenden Ansprüche, **dadurch gekennzeichnet, dass** der Empfänger (5, 5', 105, 105', 505) eine Niedervoltschaltung (429), ein Zeitdiskretisierungsglied (443, 643) und ein Digitalisierungsglied (444) umfasst.

**14.** Energieversorgungseinrichtung (1, 1', 100, 100') nach Anspruch 13, **dadurch gekennzeichnet, dass** das Signal (419, 719), das durch Kontaktierung zweier Energieleitungen (15, 15', 115, 115', 215, 415) zum Bilden einer Signalspannung aus der Subtraktion von zwei Potenzialdifferenzen, wobei jeweils eine der zwei Potenzialdifferenzen einer der zwei Energieleitungen zugeordnet ist, ableitbar ist, als gleichspannungsreduziertes Signal dem Digitalisierungsglied (444) darbietbar ist, wobei das Signal (419, 719) nach Durchlauf durch das Digitalisierungsglied (444) als digitalisiertes Signal ein Signalwert ist, der in eine Stufe führbar ist, die eine Additionseinheit für Signalwerte und einen Speicher für mehrere der Signalwerte zur Verknüpfung einiger der mehreren Signalwerte umfasst.

**15.** Energieversorgungseinrichtung (1, 1', 100, 100') nach einem der vorhergehenden Ansprüche, **dadurch gekennzeichnet, dass** ein Gehäuse (261, 761) vorgesehen ist, in welchem die Messelektronik (7, 7', 7", 7''', 107, 107', 107", 107''', $107^{IV}$, $107^V$, 207, 207', 707) und ein Energiespeicherpaket (3, 3', 3", 3''', 103, 103', 103", 103''', $103^{IV}$, $103^V$, 203, 403, 503, 703) angeordnet sind.

**16.** Energieversorgungseinrichtung (1, 1', 100, 100') nach einem der vorhergehenden Ansprüche 10 bis 15, **dadurch gekennzeichnet, dass** die Messelektronik über mindestens eine Messeinrichtung (9, 9', 9", 9''', $9^{IV}$, $9^V$, $9^{VI}$, $9^{VII}$, 209, 209') für eine Temperaturmessung (287, 389) und eine Spannungsmessung und/oder einen Innenwiderstand des Energiespeicherpaketes (3, 3', 3", 3''', 103, 103', 103", 103''', $103^{IV}$, $103^V$, 203, 403, 503, 703) und über Messeinrichtungen (9, 9', 9", 9''', $9^{IV}$, $9^V$, $9^{VI}$, $9^{VII}$, 209, 209') zur Messung einer Säurekonzentration und/oder einzelner Zellspannungen des Energiespeicherpaketes (3, 3', 3", 3''', 103, 103', 103", 103''', $103^{IV}$, $103^V$, 203, 403, 503, 703) verfügt.

**17.** Energieversorgungseinrichtung (1, 1', 100, 100') nach einem der vorhergehenden Ansprüche 5 bis 16, **dadurch gekennzeichnet, dass** ein Filter (480, 580) vorhanden ist, der zur Reduktion des Signals (419, 719) vor einer Zuleitung an den Mikrokontroller (8, 8', 8", 8''', 208, 308, 408, 608, 608') ausgestaltet ist.

**18.** Energieversorgungseinrichtung (1, 1', 100, 100') nach einem der vorhergehenden Ansprüche, **dadurch gekennzeichnet, dass** die Leitungen (15, 15", 115, 115', 215, 415), die an dem Energieleitungsanschluss (2, 2', 702, 702') angeschlossen sind, elektrisch aus der Zentralbatterieanlage oder dem unterbrechungsfreien Stromversorgungssystem mit Batterieüberwachung herausführen.

**19.** Energieversorgungseinrichtung (1, 1', 100, 100') nach einem der vorhergehenden Ansprüche, **dadurch gekennzeichnet, dass** der Mikrokontroller (8, 8', 8", 8''', 208, 308, 408, 608, 608') ein Bestimmungsglied zur Bestimmung eines Übertragungskanals für den Sender (10, 10', 10", 10''', $10^{IV}$, 110, 110', 210a, 210b) ist.

**20.** Betriebsverfahren einer Batterieüberwachungseinrichtung (50, 50', 150, 150') mit wenigstens einer Messelektronik (7, 7', 7", 7''', 107, 107', 107", 107''', $107^{IV}$, $107^V$, 207, 207', 707),
die einen Sender (10, 10', 10", 10''', $10^{IV}$, 110, 110', 210a, 210b) umfasst und an einem Energiespeicherpaket (3, 3', 3", 3''', 103, 103', 103", 103''', $103^{IV}$, $103^V$, 203, 403, 503, 703) Messungen durchführt,
bei der Energiespeicherpaketen (3, 3', 3", 3''', 103, 103', 103", 103''', $103^{IV}$, $103^V$, 203, 403, 503, 703) jeweils eine Messelektronik (7, 7', 7", 7''', 107, 107', 107", 107''', $107^{IV}$, $107^V$, 207, 207', 707) mit jeweils wenigstens einer Messeinrichtung (9, 9', 9", 9''', $9^{IV}$, $9^V$, $9^{VI}$, $9^{VII}$, 209, 209') und jeweils einem Sender (10, 10', 10", 10''', 10a, 10b) zugeordnet sind,
wobei eine Übertragung (D) von Informationen (213) leitungsgebunden über Energieleitungen (15, 15', 115, 115', 215, 415) durch jeden Sender (10, 10', 10", 10''', $10^{IV}$, 110, 110', 210a, 210b) wiederholt in aufeinanderfolgenden, zeitlich begrenzten Datenpaketen (F, $D_1$, $D_2$, $D_3$, $D_4$, $D_5$) erfolgt,
wobei eine Datenrate (p), mit der Datenpakete (F, $D_1$, $D_2$, $D_3$, $D_4$, $D_5$) gesendet werden, kleiner ist als eine Taktrate eines in der Messelektronik (7, 7', 7", 7''', 107, 107', 107", 107''', $107^{IV}$, $107^V$, 207, 207', 707) integrierten Mikroprozessors (8, 8', 8", 8''', 208, 308, 408, 608, 608')
**dadurch gekennzeichnet, dass**
die Messelektronik (7, 7', 7", 7''', 107, 107', 107", 107''', $107^{IV}$, $107^V$, 207, 207', 707) dazu eingerichtet ist, einen Zustand des Energiespeicherpakets (3, 3', 3", 3''', 103, 103', 103", 103''', $103^{IV}$, $103^V$, 203, 403, 503, 703) anhand einer gemessenen Spannung zu bestimmen, indem die gemessene Spannung mit einer Nominalspannung und einer Tiefentladungsschwelle des Energiespeicherpakets (3, 3', 3", 3''', 103, 103', 103", 103''', $103^{IV}$, $103^V$, 203, 403, 503, 703) verglichen wird, und wobei die Messelektronik (7, 7', 7", 7''', 107, 107', 107", 107''', $107^{IV}$, $107^V$, 207, 207', 707) ferner dazu eingerichtet ist, die Datenrate (p) in Abhängigkeit von dem Zustand des Energiespeicherpakets (3, 3', 3", 3'", 103, 103', 103", 103'", 103$^{IV}$, 103$^V$, 203, 403, 503, 703) anzupassen,

in Phasen erhöhter Belastung des Energiespeicherpakets (3, 3', 3", 3'", 103, 103', 103", 103'", 103$^{IV}$, 103$^V$, 203, 403, 503, 703), insbesondere aufgrund von Teilschädigungen, eines Memoryeffekts oder besonders starker Entladungen, ein Senden von Datenpaketen (F, $D_1$, $D_2$, $D_3$, $D_4$, $D_5$) zu reduzieren und im Fall einer Tiefentladung des Energiespeicherpakets (3, 3', 3", 3'", 103, 103', 103", 103'", 103$^{IV}$, 103$^V$, 203, 403, 503, 703) ein Senden von Datenpaketen (F, $D_1$, $D_2$, $D_3$, $D_4$, $D_5$) zu unterbrechen.

21. Betriebsverfahren einer Batterieüberwachungseinrichtung (50, 50', 150, 150') nach Anspruch 20, **dadurch gekennzeichnet, dass**

das Betriebsverfahren in einer Zentralbatterieanlage (51) oder einem unterbrechungsfreien Stromversorgungssystem (152) mit Batterieüberwachung (23) nach einem der Ansprüche 1 bis 19 ausgeführt wird.

22. Betriebsverfahren einer Batterieüberwachungseinrichtung (50, 50', 150, 150') nach Anspruch 20 oder 21, **dadurch gekennzeichnet, dass**

eine Sendespannung für die Datenpakete (F, $D_1$, $D_2$, $D_3$, $D_4$, $D_5$) kleiner ist als ein 0,5-faches einer Nominalspannung (235) des Energiespeicherpakets (3, 3', 3", 3'", 103, 103', 103", 103'", 103$^{IV}$, 103$^V$, 203, 403, 503, 703).

23. Betriebsverfahren einer Batterieüberwachungseinrichtung (50, 50', 150, 150') nach einem der Ansprüche 20 bis 22, **dadurch gekennzeichnet, dass**

ein Zeitpunkt der Versendung der Datenpakete (F, $D_1$, $D_2$, $D_3$, $D_4$, $D_5$) durch jede Messelektronik (7, 7', 7", 7'", 107, 107', 107", 107'", 107$^{IV}$, 107$^V$, 207, 207', 707) selbständig gesteuert wird.

24. Betriebsverfahren einer Batterieüberwachungseinrichtung (50, 50', 150, 150') nach Anspruch 23, **dadurch gekennzeichnet, dass**

die selbständige Steuerung des Zeitpunkts der Versendung der Datenpakete (F, $D_1$, $D_2$, $D_3$, $D_4$, $D_5$) durch jede Messelektronik (7, 7', 7", 7'", 107, 107', 107", 107'", 107$^{IV}$, 107$^V$, 207, 207', 707) durch Verwendung eines in der Messelektronik (7, 7', 7", 7'", 107, 107', 107", 107'", 107$^{IV}$, 107$^V$, 207, 207', 707) vorhandenen, autark laufenden Zeitgebers (242) und von in der Messelektronik (7, 7', 7", 7'", 107, 107', 107", 107'", 107$^{IV}$, 107$^V$, 207, 207', 707) abgelegten Betriebsparametern erfolgt.

25. Betriebsverfahren einer Batterieüberwachungseinrichtung (50, 50', 150, 150') nach einem der Ansprüche 20 bis 24, **dadurch gekennzeichnet, dass**

jede Messelektronik (7, 7', 7", 7'", 107, 107', 107", 107'", 107$^{IV}$, 107$^V$, 207, 207', 707) mittels der Messeinrichtung (9, 9', 9", 9'", 9$^{IV}$, 9$^V$, 9$^{VI}$, 9$^{VII}$, 209, 209') an dem elektrisch angebundenen Energiespeicherpaket (3, 3', 3", 3'", 103, 103', 103", 103'", 103$^{IV}$, 103$^V$, 203, 403, 503, 703) die Informationen (213) erfasst.

26. Betriebsverfahren einer Batterieüberwachungseinrichtung (50, 50', 150, 150') nach Anspruch 25, **dadurch gekennzeichnet, dass**

die erfassten Informationen (213) mindestens eine mehrwertige Messgröße (314), nämlich ein mehrwertiger Spannungswert oder ein mehrwertiger Temperaturwert, sind.

27. Betriebsverfahren einer Batterieüberwachungseinrichtung (50, 50', 150, 150') nach einem der Ansprüche 20 bis 26, **dadurch gekennzeichnet, dass**

von jeder Messelektronik (7, 7', 7", 7'", 107, 107', 107", 107'", 107$^{IV}$, 107$^V$, 207, 207', 707) übertragene Datenpakete (F, $D_1$, $D_2$, $D_3$, $D_4$, $D_5$) mit einer Energiespeicheridentifikation (771) versehen sind.

28. Betriebsverfahren einer Batterieüberwachungseinrichtung (50, 50', 150, 150') nach einem der Ansprüche 20 bis 27, **dadurch gekennzeichnet, dass**

das Senden durch ein Hochfrequenzsignal mit wenigstens einer Redundanzinformation stattfindet.

29. Betriebsverfahren einer Batterieüberwachungseinrichtung (50, 50', 150, 150') nach Anspruch 28, **dadurch gekennzeichnet, dass**

das Senden unter Nutzung einer Manchester-Kodierung stattfindet.

30. Betriebsverfahren einer Batterieüberwachungseinrichtung (50, 50', 150, 150'), nach einem der Ansprüche 20 bis 29, **dadurch gekennzeichnet, dass**

die Messelektronik (7, 7', 7", 7'", 107, 107', 107", 107'", 107$^{IV}$, 107$^V$, 207, 207', 707) während einer Normalbetriebsphase ($t_{Phas}$) Datenpakete (F, $D_1$, $D_2$, $D_3$, $D_4$, $D_5$) unter Einhaltung einer mittleren Mindestrate (p) versendet und ein Empfänger (5, 5', 105, 105', 505) einen Empfang von Datenpaketen (F, $D_1$, $D_2$, $D_3$, $D_4$, $D_5$), die als verwertbare Datenpakete (F, $D_1$, $D_2$, $D_3$, $D_4$, $D_5$) bewertet sind, empfangen mit einer geringeren Rate als ein Schwellwert der Mindestrate (p), als eine Störung einstuft.

31. Betriebsverfahren einer Batterieüberwachungseinrichtung (50, 50', 150, 150') nach einem der Ansprüche 20 bis 30, **dadurch gekennzeichnet, dass**
ein Senden von Datenpaketen (F, $D_1$, $D_2$, $D_3$, $D_4$, $D_5$) in Phasen erhöhter Belastung des Energiespeicherpakets (3, 3', 3", 3"', 103, 103', 103", 103"', $103^{IV}$, $103^V$, 203, 403, 503, 703) ausgesetzt wird.

32. Betriebsverfahren einer Batterieüberwachungseinrichtung (50, 50', 150, 150') nach einem der Ansprüche 20 bis 31, **dadurch gekennzeichnet, dass**
das Senden der Datenpakete (F, $D_1$, $D_2$, $D_3$, $D_4$, $D_5$) durch mindestens eine Messelektronik (7, 7', 7", 7"', 107, 107', 107", 107"', $107^{IV}$, $107^V$, 207, 207', 707) in variierenden Zeitabständen, auch als Datenübertragungspausen ($D_p$) bezeichnet, erfolgt.

33. Betriebsverfahren einer Batterieüberwachungseinrichtung (50, 50', 150, 150'), nach einem der Ansprüche 20 bis 32, **dadurch gekennzeichnet, dass**
die Datenrate (p) in Abhängigkeit von einem Ladezustand des Energiespeicherpakets (3, 3', 3", 3"', 103, 103', 103", 103"', $103^{IV}$, $103^V$, 203, 403, 503, 703) angepasst wird.

**Claims**

1. Power supply device (1, 1', 100, 100') with battery monitoring (23), power line connection (2, 2', 702, 702') and several electrochemical power storage packs (3, 3', 3", 3"', 103, 103', 103", 103"', $103^{IV}$, $103^V$, 203, 403, 503, 703), whereby each of these power storage packs (3, 3', 3", 3"', 103, 103', 103", 103"', $103^{IV}$, $103^V$, 203, 403, 503, 703) has at least two power connections (26, 26', 26", 26"', $26^{IV}$, $26^V$, $26^{VI}$, $26^{VII}$), from which the individual power storage packs (3, 3', 3", 3"', 103, 103', 103", 103"', $103^{IV}$, $103^V$, 203, 403, 503, 703) are either linked with one another or are electrically connected to the power line connection (2, 2', 702, 702'),
whereby the battery monitoring (23) has components or modules by type an electronic monitoring system (4, 104, 104', 604, 604', 704) with a receiver (5, 5', 105, 105', 505) and
several measurement electronics (7, 7', 7", 7"', 107, 107', 107", 107"', $107^{IV}$, $107^V$, 207, 207', 707) spatially separated from the electronic monitoring system positioned (4, 104, 104', 604, 604', 704), respectively to measure at least one item of measurement information (213) about the status of the power storage pack (3, 3', 3", 3"', 103, 103', 103", 103"', $103^{IV}$, $103^V$, 203, 403, 503, 703),
and each of the measurement electronics (7, 7', 7", 7"', 107, 107', 107", 107"', $107^{IV}$, $107^V$, 207, 207', 707) respectively comprises
its own measuring device (9, 9', 9", 9"', $9^{IV}$, $9^V$, $9^{VI}$, $9^{VII}$, 209, 209') and a transmitter (10, 10', 10", 10"', $10^{IV}$, 110, 110', 210a, 210b),
and whereby at least two power storage packs (3, 3', 3", 3"', 103, 103', 103", 103"', $103^{IV}$, $103^V$, 203, 403, 503, 703) are respectively allocated their own measuring device (9, 9', 9", 9"', $9^{IV}$, $9^V$, $9^{VI}$, $9^{VII}$, 209, 209') and whereby the receiver (5, 5', 105, 105', 505) comprises a demodulator (17, 517, 617),
that is connected to lines (15, 15", 115, 115', 215, 415) that are connected to the power line connection (2, 2', 702, 702'),
whereby respectively one measuring device (9, 9", $9^{IV}$, $9^V$) is only electrically connected respectively to one power storage pack (3, 3', 3", 3"', 103, 103', 103", 103"', $103^{IV}$, $103^V$, 203, 403, 503, 703) through a connection (11, 11', 11 ", 11"', 111, 111', 111", 111"', $111^{IV}$, $111^V$) and
the connection (11, 11', 11 ", 11"', 111, 111', 111", 111"', $111^{IV}$, $111^V$) for the respective measuring device (9, 9", $9^{IV}$, $9^V$) respectively forms a measuring point (12, 12', 12", 12"') in a single power storage pack (3, 3', 3", 3"', 103, 103', 103", 103"', $103^{IV}$, $103^V$, 203, 403, 503, 703), where (12, 12', 12", 12"') an electrical voltage can be measured
and whereby each of the measurement electronics (7, 7', 7", 7"', 107, 107', 107", 107"', $107^{IV}$, $107^V$, 207, 207', 707) also comprises its own microcontroller (8, 8', 8", 8"', 208, 308, 408, 608, 608'),
and whereby each transmitter (10, 10', 10", 10"', $10^{IV}$, 110, 110', 210a, 210b) of the measurement electronics (7, 7', 7", 7"', 107, 107', 107", 107"', $107^{IV}$, $107^V$, 207, 207', 707) has a modulator (16, 16', 16", 16"') controllable by means of the microcontroller (8, 8', 8", 8"', 208, 308, 408, 608, 608') of the measurement electronics (7, 7', 7", 7"', 107, 107', 107", 107"', $107^{IV}$, $107^V$, 207, 207', 707),
whereby at least one modulator (16, 16', 16", 16"') is electrically connected to the power line connection (2, 2', 702, 702') and comprises a unit (6),

by which a signal (419, 719) can be modulated on to the power line connection (2, 2', 702, 702'),

whereby in the signal (419, 719), information (213) ascertained by the measurement electronics (7, 7', 7", 7''', 107, 107', 107", 107''', 107$^{IV}$, 107$^V$, 207, 207', 707) is encoded, that can be transferred through the power line connection (2, 2', 702, 702'),

and whereby the demodulator (17, 517, 617) of the receiver (5, 5', 105, 105', 505) is designed to receive the signal (419, 719) modulated on the power lines (15, 15', 115, 115', 215, 415),

so that the receiver (5, 5', 105, 105', 505) can receive and decode the information (213) coming from the measurement electronics (7, 7', 7", 7''', 107, 107', 107", 107''', 107$^{IV}$, $^1$07V, 207, 207', 707),

**characterised in that**

the measurement electronics (7, 7', 7", 7''', 107, 107', 107", 107''', 107$^{IV}$, 107$^V$, 207, 207', 707) is configured to determine

the status of the power storage pack (3, 3', 3", 3''', 103, 103', 103", 103''', 103$^{IV}$, 103$^V$, 203, 403, 503, 703) using a measured voltage, by comparing the measured voltage with a nominal voltage and a deep discharge threshold of the power storage pack (3, 3', 3", 3''', 103, 103', 103", 103''', 103$^{IV}$, 103$^V$, 203, 403, 503, 703),

and whereby the measurement electronics (7, 7', 7", 7''', 107, 107', 107", 107''', 107$^{IV}$, 107$^V$, 207, 207', 707) is furthermore configured in phases of increased load of the power storage pack (3, 3', 3", 3''', 103, 103', 103", 103''', 103$^{IV}$, 103$^V$, 203, 403, 503, 703), in particular because of partial damage, a memory effect or an especially strong discharge, to reduce the transmission of data packs ($F_1$, $D_1$, $D_2$, $D_3$, $D_4$, $D_5$) and to interrupt the sending of data packs ($F_1$, $D_1$, $D_2$, $D_3$, $D_4$, $D_5$) in the event of a deep discharge of the power storage pack (3, 3', 3", 3''', 103, 103', 103", 103''', 103$^{IV}$, 103$^V$, 203, 403, 503, 703).

2. Power supply device (1, 1', 100, 100') according to claim 1, **characterised in that** the modulator (16, 16', 16", 16''') is designed to modulate an alternating current voltage (36) to convert the information (213) into a signal (419, 719), whereby the modulated alternating current voltage (36) has a carrier frequency (20) in a range above 10 kHz, or an amplitude (21) of the modulated alternating current voltage is at least 1 $\mu$V.

3. Power supply device (1, 1', 100, 100') according to claim 2, **characterised in that** the modulated alternating current voltage (36) has a character frequency (20) in a range between 140 kHz and 90 MHz and amounts to an amplitude (21) of the modulated alternating current voltage of at least 1 $\mu$V at a standard amplitude on the power line connection (2, 2', 702, 702') of at least 1 mV.

4. Power supply device (1, 1', 100, 100') according to claims 2 or 3, **characterised in that** the modulator (16, 16', 16", 16''') is designed for a modulated alternating current voltage in a frequency modulating manner.

5. Power supply device (1, 1', 100, 100') according to one of the preceding claims, **characterised in that** the measurement electronics (7, 7', 7", 7''', 107, 107', 107", 107''', 107$^{IV}$, 107$^V$, 207, 207', 707) comprises a voltage reduction circuit (228) that is connected to a supply voltage connection (227) of the microcontroller (8, 8', 8", 8''', 208, 308, 408, 608, 608').

6. Power supply device (1, 1', 100, 100') according to claim 5, **characterised in that** one of the lines (15, 15", 115, 115', 215, 415) can be used as a power supply source for the microcontroller (8, 8', 8", 8''', 208, 308, 408, 608, 608').

7. Power supply device (1, 1', 100, 100') according to one of the preceding claims, **characterised in that** the modulator (16, 16', 16", 16''') of each power storage pack (3, 3', 3", 3''', 103, 103', 103", 103''', 103$^{IV}$, 103$^V$, 203, 403, 503, 703) is connected to the power connections (26, 26', 26", 26''', 26$^{IV}$, 26$^V$, 26$^{VI}$, 26$^{VII}$) of the power storage pack (3, 3', 3", 3''', 103, 103', 103", 103''', 103$^{IV}$, 103$^V$, 203, 403, 503, 703).

8. Power supply device (1, 1', 100, 100') according to one of the preceding claims, **characterised in that** the electronic monitoring system (4, 104, 104', 604, 604', 704) possesses at least one serial communications interface (22, 422, 622) such as an RS-232 interface or an Ethernet interface.

9. Power supply device (1, 1', 100, 100') according to one of the preceding claims, **characterised in that** the electronic monitoring system (4, 104, 104', 604, 604', 704) is equipped with a memory (224).

10. Power supply device (1, 1', 100, 100') according to one of the preceding claims, **characterised in that** the measurement electronics (7, 7', 7", 7''', 107, 107', 107", 107''', 107$^{IV}$, 107$^V$, 207, 207', 707) has at least one measuring device (9, 9', 9", 9''', 9$^{IV}$, 9$^V$, 9$^{VI}$, 9$^{VII}$, 209, 209') for a temperature measurement (287, 389) or a voltage measurement or an internal resistance of the power storage pack (3, 3', 3", 3''', 103, 103', 103", 103''', 103$^{IV}$, 103$^V$,

203, 403, 503, 703).

**11.** Power supply device (1, 1', 100, 100') according to one of the preceding claims, **characterised in that** the measurement electronics (7, 7', 7", 7"', 107, 107', 107", 107"', 107$^{IV}$, 107$^V$, 207, 207', 707) has a timer (242), through which (242) a status change from or into a measurement break of the measurement electronics (7, 7', 7", 7"', 107, 107', 107", 107"', 107$^{IV}$, 107$^V$, 207, 207', 707) can be obtained.

**12.** Power supply device (1, 1', 100, 100') according to claim 11, **characterised in that** the measurement electronics (7, 7', 7", 7"', 107, 107', 107", 107"', 107$^{IV}$, 107$^V$, 207, 207', 707) has a memory (224) with any preset number assigned to the power storage pack (3, 3', 3", 3"', 103, 103', 103", 103"', 103$^{IV}$, 103$^V$, 203, 403, 503, 703), the number being available to the timer (242) when determining the duration of a transmission break.

**13.** Power supply device (1, 1', 100, 100') according to one of the preceding claims, **characterised in that** the receiver (5, 5', 105, 105', 505) comprises a low voltage circuit (429), a time discretisation element (443, 643) and a digitisation element (444).

**14.** Power supply device (1, 1', 100, 100') according to claim 13, **characterised in that** the signal (419, 719) derivable by contacting two of the power lines (15, 15', 115, 115', 215, 415) to form a signal voltage from the subtraction of two potential differences, whereby respectively one of the two potential differences is assigned to one of the two power lines, can be presented as a direct current voltage reduced signal to the digitisation element (444), whereby the signal (419, 719) after going through the digitisation element (444) as a digitised signal is a signal value which can be steered at a stage which comprises an addition unit for signal values and a memory for several of the signal values to connect some of the several signal values.

**15.** Power supply device (1, 1', 100, 100') according to one of the preceding claims, **characterised in that** a housing (261, 761) is provided, in which the measurement electronics (7, 7', 7", 7"', 107, 107', 107", 107"', 107$^{IV}$, 107$^V$, 207, 207', 707) and a power storage pack (3, 3', 3", 3"', 103, 103', 103", 103"', 103$^{IV}$, 103$^V$, 203, 403, 503, 703) are positioned.

**16.** Power supply device (1, 1', 100, 100') according to one of preceding claims 10 to 15, **characterised in that** the measurement electronics has at least one measuring device (9, 9', 9", 9"', 9$^{IV}$, 9$^V$, 9$^{VI}$, 9$^{VII}$, 209, 209') for a temperature measurement (287, 389) and a voltage measurement and/or for an internal resistance of the power storage pack (3, 3', 3", 3"', 103, 103', 103", 103"', 103$^{IV}$, 103$^V$, 203, 403, 503, 703) and has measuring devices (9, 9', 9", 9"', 9$^{IV}$, 9$^V$, 9$^{VI}$, 9$^{VII}$, 209, 209') to measure an acid concentration and/or individual cell voltages of the power storage pack (3, 3', 3", 3"', 103, 103', 103", 103"', 103$^{IV}$, 103$^V$, 203, 403, 503, 703).

**17.** Power supply device (1, 1', 100, 100') according to one of preceding claims 5 to 16, **characterised in that** a filter (480, 580) is present that is equipped to reduce the signal (419, 719) prior to supplying the microcontroller (8, 8', 8", 8"', 208, 308, 408, 608, 608').

**18.** Power supply device (1, 1', 100, 100') according to one of the preceding claims, **characterised in that** the lines (15, 15", 115, 115', 215, 415) connected to the power line connection (2, 2', 702, 702') lead out electrically from the central battery system or the uninterruptible power supply system with battery monitoring device.

**19.** Power supply device (1, 1', 100, 100') according to one of the preceding claims, **characterised in that** the microcontroller (8, 8', 8", 8"', 208, 308, 408, 608, 608') is a determination means for designation of a transmission channel for the transmitter (10, 10', 10", 10"', 10$^{IV}$, 110, 110', 210a, 210b).

**20.** Operating process of a battery monitoring device (50, 50', 150, 150') with at least one item of measurement electronics (7, 7', 7", 7"', 107, 107', 107", 107"', 107$^{IV}$, 107$^V$, 207, 207', 707), comprising a transmitter (10, 10', 10", 10"', 10$^{IV}$, 110, 110', 210a, 210b) and which carries out measurements on a power storage pack (3, 3', 3", 3"', 103, 103', 103", 103"', 103$^{IV}$, 103$^V$, 203, 403, 503, 703), in which power storage packs (3, 3', 3", 3"', 103, 103', 103", 103"', 103$^{IV}$, 103$^V$, 203, 403, 503, 703) are assigned respectively to an item of measurement electronics (7, 7', 7", 7"', 107, 107', 107", 107"', 107$^{IV}$, 107$^V$, 207, 207', 707) with respectively at least one measurement device (9, 9', 9", 9"', 9$^{IV}$, 9$^V$, 9$^{VI}$, 9$^{VII}$, 209, 209') and respectively one transmitter (10, 10', 10", 10"', 10a, 10b), whereby information (213) is repeatedly transferred (D), grid-bound via power lines (15, 15', 115, 115', 215, 415) through each transmitter (10, 10', 10", 10"', 10$^{IV}$, 110, 110', 210a, 210b) repeatedly in sequential, time-delimited,

data packs (F, $D_1$, $D_2$, $D_3$, $D_4$, $D_5$), whereby a data rate (p) of transmission of the data packs (F, $D_1$, $D_2$, $D_3$, $D_4$, $D_5$), is less than a cycle speed of a microprocessor (8, 8', 8", 8"', 208, 308, 408, 608, 608') integrated into an item of measurement electronics (7, 7', 7", 7"', 107, 107', 107", 107"', $107^{IV}$, $107^V$, 207, 207', 707),
**characterised in that**
the measurement electronics (7, 7', 7", 7"', 107, 107', 107", 107"', $107^{IV}$, $107^V$, 207, 207', 707) is set up to determine a status of the power storage pack (3, 3', 3", 3"', 103, 103', 103", 103"', $103^{IV}$, $103^V$, 203, 403, 503, 703) by means of a measured voltage, by comparing the measured voltage with a nominal voltage and a deep discharge threshold of the energy storage pack (3, 3', 3", 3"', 103, 103', 103", 103"', $103^{IV}$, $103^V$, 203, 403, 503, 703), and whereby the measurement electronics (7, 7', 7", 7"', 107, 107', 107", 107"', $107^{IV}$, $107^V$, 207, 207', 707) is furthermore set up, to adapt the data rate (p) depending on the status of the power storage pack (3, 3', 3", 3"', 103, 103', 103", 103"', $103^{IV}$, $103^V$, 203, 403, 503, 703), to reduce the sending of data packs (F, $D_1$, $D_2$, $D_3$, $D_4$, $D_5$) in phases of increased load of the power storage pack (3, 3', 3", 3"', 103, 103', 103", 103"', $103^{IV}$, $103^V$, 203, 403, 503, 703), in particular because of partial damage, a memory effect or especially strong discharging, and in the event of a deep discharge of the power storage pack (3, 3', 3", 3"', 103, 103', 103", 103"', $103^{IV}$, $103^V$, 203, 403, 503, 703), to interrupt the sending of data packs (F, $D_1$, $D_2$, $D_3$, $D_4$, $D_5$).

21. Operating process of a battery monitoring device (50, 50', 150, 150') according to claim 20, **characterised in that** the operating process is undertaken in a central battery system (51) or an uninterruptible power supply system (152) with battery monitoring device (23) according to one of the claims 1 to 19.

22. Operating process of a battery monitoring device (50, 50', 150, 150') according to claim 20 or 21, **characterised in that** a transmission voltage for the data packs (F, $D_1$, $D_2$, $D_3$, $D_4$, $D_5$) is less than 0.5 times a nominal voltage (235) of the power storage pack (3, 3', 3", 3"', 103, 103', 103", 103"', $103^{IV}$, $103^V$, 203, 403, 503, 703).

23. Operating process of a battery monitoring device (50, 50', 150, 150') according to one of claims 20 to 22, **characterised in that** a moment in time for transmitting the data packs (F, $D_1$, $D_2$, $D_3$, $D_4$, $D_5$) is independently controlled by each item of measurement electronics (7, 7', 7", 7"', 107, 107', 107", 107"', $107^{IV}$, $107^V$, 207, 207', 707).

24. Operating process of a battery monitoring device (50, 50', 150, 150') according to claim 23, **characterised in that** the independent control of the moment in time for transmitting the data packs (F, $D_1$, $D_2$, $D_3$, $D_4$, $D_5$) through each item of measurement electronics (7, 7', 7", 7"', 107, 107', 107", 107"', $107^{IV}$, $107^V$, 207, 207', 707) is carried out by using a self-sufficient timer (242) present in the measurement electronics (7, 7', 7", 7"', 107, 107', 107", 107"', $107^{IV}$, $107^V$, 207, 207', 707) and operating parameters stored in the measurement electronics (7, 7', 7", 7"', 107, 107', 107", 107"', $107^{IV}$, $107^V$, 207, 207', 707).

25. Operating process of a battery monitoring device (50, 50', 150, 150') according to one of claims 20 to 24, **characterised in that** each item of measurement electronics (7, 7', 7", 7"', 107, 107', 107", 107"', $107^{IV}$, $107^V$, 207, 207', 707) records the information (213) by means of the measuring device (9, 9', 9", 9"', $9^{IV}$, $9^V$, $9^{VI}$, $9^{VII}$, 209, 209') on the electrically-connected power storage pack (3, 3', 3", 3"', 103, 103', 103", 103"', $103^{IV}$, $103^V$, 203, 403, 503, 703).

26. Operating process of a battery monitoring device (50, 50', 150, 150') according to claim 25, **characterised in that** the information (213) recorded is at least one multivalent parameter (314), namely a multivalent voltage or a multivalent temperature.

27. Operating process of a battery monitoring device (50, 50', 150, 150') according to one of claims 20 to 26, **characterised in that** data packs (F, $D_1$, $D_2$, $D_3$, $D_4$, $D_5$) are provided by each item of measurement electronics (7, 7', 7", 7"', 107, 107', 107", 107"', $107^{IV}$, $107^V$, 207, 207', 707) with an power storage pack identifier (771).

28. Operating process of a battery monitoring device (50, 50', 150, 150') according to one of claims 20 to 27, **characterised in that** the transmission takes place using high frequency signal with at least one item of redundant information.

29. Operating process of a battery monitoring device (50, 50', 150, 150') according to claim 28, **characterised in that** transmission takes place using Manchester encoding.

**30.** Operating process of a battery monitoring device (50, 50', 150, 150') according to one of claims 20 to 29, **characterised in that**

the measurement electronics (7, 7', 7", 7'", 107, 107', 107", 107'", $107^{IV}$, $107^V$, 207, 207', 707) transmits data packs (F, $D_1$, $D_2$, $D_3$, $D_4$, $D_5$) during a normal operating phase ($t_{Phas}$), keeping to an average minimum rate (p), and a receiver (5, 5', 105, 105', 505) classifies as an error receipt of data packs (F, $D_1$, $D_2$, $D_3$, $D_4$, $D_5$), evaluated as usable data packs (F, $D_1$, $D_2$, $D_3$, $D_4$, $D_5$), received with a rate lower than a threshold of the minimum rate (p).

**31.** Operating process of a battery monitoring device (50, 50', 150, 150') according to one of claims 20 to 30, **characterised in that**

a transmission of data packs (F, $D_1$, $D_2$, $D_3$, $D_4$, $D_5$) in phases of increased load of the power storage packs (3, 3', 3", 3'", 103, 103', 103", 103'", $103^{IV}$, $103^V$, 203, 403, 503, 703) is suspended.

**32.** Operating process of a battery monitoring device (50, 50', 150, 150') according to one of claims 20 to 31, **characterised in that**

the transmission of the data packs (F, $D_1$, $D_2$, $D_3$, $D_4$, $D_5$) takes place by at least one item of measurement electronics(7, 7', 7", 7'", 107, 107', 107", 107'", $107^{IV}$, $107^V$, 207, 207', 707) at varying time intervals, also designated as data transmission breaks ($D_p$).

**33.** Operating process of a battery monitoring device (50, 50', 150, 150') according to one of claims 20 to 32, **characterised in that**

the data rate (p) is adjusted depending on a charge status of the power storage pack (3, 3', 3", 3'", 103, 103', 103", 103'", $103^{IV}$, $103^V$, 203, 403, 503, 703).

**Revendications**

**1.** Dispositif d'alimentation en énergie (1, 1', 100, 100') avec surveillance de batterie (23), raccord de conduction d'énergie (2, 2', 702, 702') et plusieurs ensembles électrochimiques d'accumulation d'énergie (3, 3', 3", 3'", 103, 103', 103", 103'", $103^{IV}$, $103^V$, 203, 403, 503, 703), cependant que chacun de ces ensembles d'accumulation d'énergie (3, 3', 3", 3'", 103, 103', 103", 103'", $103^{IV}$, $103^V$, 203, 403, 503, 703) a au moins deux raccordements d'énergie (26, 26', 26", 26'", $26^{IV}$, $26^V$, $26^V$, $26^{VII}$) à partir desquels les différents ensembles d'accumulation d'énergie (3, 3', 3", 3'", 103, 103', 103", 103'", $103^{IV}$, $103^V$, 203, 403, 503, 703) sont reliés électriquement soit entre eux, soit au raccord de conduction d'énergie (2, 2', 702, 702'),

cependant que la surveillance de batterie (23) a des composants ou des sous-ensembles, selon le type un système électronique de surveillance (4, 104, 104', 604, 604', 704) avec un récepteur (5, 5', 105, 105', 505) et plusieurs systèmes électroniques de mesure (7, 7', 7", 7'", 107, 107', 107", 107'", $107^{IV}$, $107^V$, 207, 207', 707) placés séparés spatialement du système électronique de surveillance (4, 104, 104', 604, 604', 704), respectivement pour la mesure d'au moins une information de mesure (213) sur un état de l'ensemble d'accumulation d'énergie (3, 3', 3", 3'", 103, 103', 103", 103'", $103^{IV}$, $103^V$, 203, 403, 503, 703) et que chacun des systèmes électroniques de mesure (7, 7', 7", 7'", 107, 107', 107", 107'", $107^{IV}$, $107^V$, 207, 207', 707) comprend respectivement un dispositif de mesure propre (9, 9', 9", g'", $9^{IV}$, $9^V$, $9^{VI}$, $9^{VII}$, 209, 209') et un émetteur (10, 10', 10", 10'", $10^{IV}$, 110, 110', 210a, 210b)

et cependant que respectivement un dispositif de mesure propre (9, 9', 9", 9'", $9^{IV}$, $9^V$, $9^{VI}$, $9^{VII}$, 209, 209') est associé à au moins deux ensembles d'accumulation d'énergie (3, 3', 3", 3'", 103, 103', 103", 103'", $103^{IV}$, $103^V$, 203, 403, 503, 703)

et cependant que le récepteur (5, 5', 105, 105', 505) comprend un démodulateur (17, 517, 617) qui est raccordé à des conduites (15, 15", 115, 115', 215, 415) qui sont raccordées au raccord de conduction d'énergie (2, 2', 702, 702'), cependant que respectivement un dispositif de mesure (9, 9", $9^{IV}$, $9^{VI}$) n'est raccordé électriquement qu'à respectivement un ensemble d'accumulation d'énergie (3, 3', 3", 3'", 103, 103', 103", 103'", $103^{IV}$, $103^V$, 203, 403, 503, 703) par un raccord (11, 11', 11", 11'", 111, 111', 111", 111'", $111^{IV}$, $111^V$) et

que le raccord (11, 11', 11", 11'", 111, 111', 111", 111'", $111^{IV}$, $111^V$) pour le dispositif de mesure respectif (9, 9", $9^{IV}$, $9^{VI}$) forme respectivement un point de mesure (12, 12', 12", 12'") dans un seul ensemble d'accumulation d'énergie (3, 3', 3", 3'", 103, 103', 103", 103'", $103^{IV}$, $103^V$, 203, 403, 503, 703) sur lequel (12, 12', 12", 12'") une tension électrique peut être mesurée et cependant que chaque système électronique de mesure (7, 7', 7", 7'", 107, 107', 107", 107'", $107^{IV}$, $107^V$, 207, 207', 707) présente de plus son propre microcontrôleur (8, 8', 8", 8'", 208, 308, 408, 608, 608')

et cependant que chaque émetteur (10, 10', 10", 10'", $10^{IV}$, 110, 110', 210a, 210b) des systèmes électroniques de mesure (7, 7', 7", 7'", 107, 107', 107", 107'", $107^{IV}$, $107^V$, 207, 207', 707) a un modulateur (16, 16', 16", 16'") qui peut être commandé au moyen du microcontrôleur (8, 8', 8", 8'", 208, 308, 408, 608, 608') du système électronique de mesure (7, 7', 7", 7''', 107, 107', 107", 107''', 107$^{IV}$, 107$^V$, 207, 207', 707),
cependant qu'au moins un modulateur (16, 16', 16", 16''') est en relation électrique avec le raccord de conduction d'énergie (2, 2', 702, 702') et comprend une unité (6) par laquelle une modulation d'un signal (419, 719) peut être exécutée sur le raccord de conduction d'énergie (2, 2', 702, 702'),
cependant qu'une information (213) détectée par le système électronique de mesure (7, 7', 7", 7''', 107, 107', 107", 107''', 107$^{IV}$, 107$^V$, 207, 207', 707) est codée dans le signal (419, 719) qui peut être transmis par le raccord de conduction d'énergie (2, 2', 702, 702')
et cependant que le démodulateur (17, 517, 617) du récepteur (5, 5', 105, 105', 505) est configuré pour une réception du signal (419, 719) modulé sur les conduites d'énergie (15, 15", 115, 115', 215, 415) si bien que le récepteur (5, 5', 105, 105', 505) peut recevoir et décoder l'information (213) provenant du système électronique de mesure (7, 7', 7", 7''', 107, 107', 107", 107''', 107$^{IV}$, 107$^V$, 207, 207', 707),
**caractérisé en ce que** le système électronique de mesure (7, 7', 7", 7''', 107, 107', 107", 107''', 107$^{IV}$, 107$^V$, 207, 207', 707) est agencé pour déterminer l'état de l'ensemble d'accumulation d'énergie (3, 3', 3", 3''', 103, 103', 103", 103''', 103$^{IV}$, 103$^V$, 203, 403, 503, 703) à l'aide d'une tension mesurée, la tension mesurée étant comparée à une tension nominale et à un seuil de décharge totale de l'ensemble d'accumulation d'énergie (3, 3', 3", 3''', 103, 103', 103", 103''', 103$^{IV}$, 103$^V$, 203, 403, 503, 703)
et cependant que le système électronique de mesure (7, 7', 7", 7''', 107, 107', 107", 107''', 107$^{IV}$, 107$^V$, 207, 207', 707) est de plus agencé pour réduire un envoi de paquets de données (F$_1$, D$_1$, D$_2$, D$_3$, D$_4$, D$_5$) dans des phases de charge accrue de l'ensemble d'accumulation d'énergie (3, 3', 3", 3''', 103, 103', 103", 103''', 103$^{IV}$, 103$^V$, 203, 403, 503, 703), en particulier en raison de détériorations partielles d'un effet mémoire ou d'une décharge particulièrement forte et pour interrompre l'envoi de paquets de données (F$_1$, D$_1$, D$_2$, D$_3$, D$_4$, D$_5$) dans le cas d'une décharge totale de l'ensemble d'accumulation d'énergie (3, 3', 3", 3''', 103, 103', 103", 103''', 103$^{IV}$, 103$^V$, 203, 403, 503, 703).

2. Dispositif d'alimentation en énergie (1, 1', 100, 100') selon la revendication 1, **caractérisé en ce que** le modulateur (16, 16', 16", 16''') est configuré pour la modulation d'une tension alternative (36) pour la transformation de l'information (213) en un signal (419, 719), cependant que la tension alternative modulée (36) est une fréquence porteuse (20) dans une plage supérieure à 10 kHz ou une amplitude (21) de la tension alternative modulée est d'au moins 1 µV.

3. Dispositif d'alimentation en énergie (1, 1', 100, 100') selon la revendication 2, **caractérisé en ce que** la tension alternative modulée (36) présente une fréquence porteuse (20) dans une plage entre 140 kHz et 90 MHz et une amplitude (21) de la tension alternative modulée est d'au moins 1 µV pour une amplitude standard sur le raccord de conduction d'énergie (2, 2', 702, 702') d'au moins 1 µV.

4. Dispositif d'alimentation en énergie (1, 1', 100, 100') selon la revendication 2 ou 3, **caractérisé en ce que** le modulateur (16, 16', 16", 16''') est configuré pour une tension alternative modulée à fréquence modulée.

5. Dispositif d'alimentation en énergie (1, 1', 100, 100') selon l'une des revendications précédentes, **caractérisé en ce que** le système électronique de mesure (7, 7', 7", 7''', 107, 107', 107", 107''', 107$^{IV}$, 107$^V$, 207, 207', 707) comprend un circuit de réduction de tension (228) qui est relié à un raccord de tension d'alimentation (227) du microcontrôleur (8, 8', 8", 8''', 208, 308, 408, 608, 608').

6. Dispositif d'alimentation en énergie (1, 1', 100, 100') selon la revendication 5, **caractérisé en ce qu'**une des conduites (15, 15", 115, 115', 215, 415) peut être utilisée comme une source d'alimentation en énergie du microcontrôleur (8, 8', 8", 8''', 208, 308, 408, 608, 608').

7. Dispositif d'alimentation en énergie (1, 1', 100, 100') selon l'une des revendications précédentes, **caractérisé en ce que** le modulateur (16, 16', 16", 16''') de chaque ensemble d'accumulation d'énergie (3, 3', 3", 3''', 103, 103', 103", 103''', 103$^{IV}$, 103$^V$, 203, 403, 503, 703) est raccordé aux raccordements d'énergie (26, 26', 26", 26''', 26$^{IV}$, 26$^V$, 26$^{VI}$, 26$^{VII}$) de l'ensemble d'accumulation d'énergie (3, 3', 3", 3''', 103, 103', 103", 103''', 103$^{IV}$, 103$^V$, 203, 403, 503, 703).

8. Dispositif d'alimentation en énergie (1, 1', 100, 100') selon l'une des revendications précédentes, **caractérisé en ce que** le système électronique de surveillance (4, 104, 104', 604, 604', 704) possède au moins une interface de communication série (22, 422, 622) comme une interface RS-232 ou une interface éthernet.

9. Dispositif d'alimentation en énergie (1, 1', 100, 100') selon l'une des revendications précédentes, **caractérisé en ce que** le système électronique de surveillance (4, 104, 104', 604, 604', 704) est équipé d'une mémoire (224).

10. Dispositif d'alimentation en énergie (1, 1', 100, 100') selon l'une des revendications précédentes, **caractérisé en ce que** le système électronique de mesure (7, 7', 7'', 7''', 107, 107', 107'', 107''', 107$^{IV}$, 107$^V$, 207, 207', 707) dispose d'au moins un dispositif de mesure (9, 9', 9'', g''', 9$^{IV}$, 9$^V$, 9$^{VI}$, 9$^{VII}$, 209, 209') pour une mesure de la température (287, 389) ou une mesure de la tension ou une résistance intérieure de l'ensemble d'accumulation d'énergie (3, 3', 3'', 3''', 103, 103', 103'', 103''', 103$^{IV}$, 103$^V$, 203, 403, 503, 703).

11. Dispositif d'alimentation en énergie (1, 1', 100, 100') selon l'une des revendications précédentes, **caractérisé en ce que** le système électronique de mesure (7, 7', 7'', 7''', 107, 107', 107'', 107''', 107$^{IV}$, 107$^V$, 207, 207', 707) présente un minuteur (242) par lequel (242) un changement d'état peut être obtenu à partir de ou en une pause de mesure du système électronique de mesure (7, 7', 7'', 7''', 107, 107', 107'', 107''', 107$^{IV}$, 107$^V$, 207, 207', 707).

12. Dispositif d'alimentation en énergie (1, 1', 100, 100') selon la revendication 11, **caractérisé en ce que** le système électronique de mesure (7, 7', 7'', 7''', 107, 107', 107'', 107''', 107$^{IV}$, 107$^V$, 207, 207', 707) présente une mémoire (224) avec un chiffre associé à l'ensemble d'accumulation d'énergie (3, 3', 3'', 3''', 103, 103', 103'', 103''', 103$^{IV}$, 103$^V$, 203, 403, 503, 703), qui peut être prédéfini quelconque, qui est disponible pour le minuteur (242) dans la détermination d'une durée de pause d'envoi.

13. Dispositif d'alimentation en énergie (1, 1', 100, 100') selon l'une des revendications précédentes, **caractérisé en ce que** le récepteur (5, 5', 105, 105', 505) comprend un circuit basse tension (429), un élément de discrétisation temporelle (443, 643) et un élément de numérisation (444).

14. Dispositif d'alimentation en énergie (1, 1', 100, 100') selon la revendication 13, **caractérisé en ce que** le signal (419, 719) qui peut être dérivé par la mise en contact de deux conduites d'énergie (15, 15', 115, 115', 215, 415) pour former une tension de signal à partir de la soustraction de deux différences de potentiel, cependant que respectivement l'une des deux différences de potentiel est associée à l'une des deux conduites d'énergie, peut être présenté à l'élément de numérisation (444) en tant que signal à tension continue réduite, cependant que le signal (419, 719) est, après être passé par l'élément de numérisation (444) en tant que signal numérisé, une valeur de signal qui peut être menée dans un étage qui comprend une unité d'addition pour des valeurs de signal et une mémoire pour plusieurs valeurs de signal pour combiner quelques unes des plusieurs valeurs de signal.

15. Dispositif d'alimentation en énergie (1, 1', 100, 100') selon l'une des revendications précédentes, **caractérisé en ce qu'**un boîtier (261, 761) est prévu dans lequel sont placés le système électronique de mesure (7, 7', 7'', 7''', 107, 107', 107'', 107''', 107$^{IV}$, 107$^V$, 207, 207', 707) et un ensemble d'accumulation d'énergie (3, 3', 3'', 3''', 103, 103', 103'', 103''', 103$^{IV}$, 103$^V$, 203, 403, 503, 703).

16. Dispositif d'alimentation en énergie (1, 1', 100, 100') selon l'une des revendications précédentes 10 à 15, **caractérisé en ce que** le système électronique de mesure dispose d'au moins un dispositif de mesure (9, 9', 9'', 9''', 9$^{IV}$, 9$^V$, 9$^{VI}$, 9$^{VII}$, 209, 209') pour une mesure de la température (287, 389) et une mesure de la tension et/ou une résistance intérieure de l'ensemble d'accumulation d'énergie (3, 3', 3'', 3''', 103, 103', 103'', 103''', 103$^{IV}$, 103$^V$, 203, 403, 503, 703) et de dispositifs de mesure (9, 9', 9'', 9''', 9$^{IV}$, 9$^V$, 9$^{VI}$, 9$^{VII}$, 209, 209') pour la mesure d'une concentration d'acide et/ou de différentes tensions de pile de l'ensemble d'accumulation d'énergie (3, 3', 3'', 3''', 103, 103', 103'', 103''', 103$^{IV}$, 103$^V$, 203, 403, 503, 703).

17. Dispositif d'alimentation en énergie (1, 1', 100, 100') selon l'une des revendications précédentes 5 à 16, **caractérisé en ce qu'**il existe un filtre (480, 580) qui est configuré pour la réduction du signal (419, 719) avant une conduite d'alimentation vers le microcontrôleur (8, 8', 8'', 8''', 208, 308, 408, 608, 608').

18. Dispositif d'alimentation en énergie (1, 1', 100, 100') selon l'une des revendications précédentes, **caractérisé en ce que** les conduites (15, 15'', 115, 115', 215, 415) qui sont raccordées au raccord de conduction d'énergie (2, 2', 702, 702') sortent électriquement de l'unité centrale de batterie ou du système d'alimentation en courant sans interruption avec surveillance de batterie.

19. Dispositif d'alimentation en énergie (1, 1', 100, 100') selon l'une des revendications précédentes, **caractérisé en ce que** le microcontrôleur (8, 8', 8'', 8''', 208, 308, 408, 608, 608') est un élément de détermination pour la détermination d'un canal de transmission pour l'émetteur (10, 10', 10'', 10''', 10$^{IV}$, 110, 110', 210a, 210b).

20. Procédé d'exploitation d'un dispositif de surveillance de batterie (50, 50', 150, 150') avec au moins un système électronique de mesure (7, 7', 7'', 7''', 107, 107', 107'', 107''', 107$^{IV}$, 107$^V$, 207, 207', 707) qui comprend un émetteur (10, 10', 10'', 10''', 10$^{IV}$, 110, 110', 210a, 210b) et qui exécute des mesures sur un ensemble d'accumulation d'énergie (3, 3', 3'', 3''', 103, 103', 103'', 103''', 103$^{IV}$, 103$^V$, 203, 403, 503, 703),

pour lequel un système électronique de mesure (7, 7', 7'', 7''', 107, 107', 107'', 107''', 107$^{IV}$, 107$^V$, 207, 207', 707) avec respectivement au moins un dispositif de mesure (9, 9', 9'', g''', 9$^{IV}$, 9$^V$, 9$^{VI}$, 9$^{VII}$, 209, 209') et respectivement un émetteur (10, 10', 10'', 10''', 10$^{IV}$, 110, 110', 210a, 210b) sont associés à des ensembles d'accumulation d'énergie (3, 3', 3'', 3''', 103, 103', 103'', 103''', 103$^{IV}$, 103$^V$, 203, 403, 503, 703),

cependant qu'une transmission (D) d'informations (213) se fait de manière câblée par l'intermédiaire de conduites d'énergie (15, 15'', 115, 115', 215, 415) par chaque émetteur (10, 10', 10'', 10''', 10$^{IV}$, 110, 110', 210a, 210b) de manière répétée en paquets de données successifs, limités dans le temps ($F_1$, $D_1$, $D_2$, $D_3$, $D_4$, $D_5$),

cependant qu'un débit de données (p) avec lequel des paquets de données ($F_1$, $D_1$, $D_2$, $D_3$, $D_4$, $D_5$) sont envoyés est plus petit qu'une fréquence d'horloge d'un microprocesseur (8, 8', 8'', 8''', 208, 308, 408, 608, 608') intégré dans le système électronique de mesure (7, 7', 7'', 7''', 107, 107', 107'', 107''', 107$^{IV}$, 107$^V$, 207, 207', 707),

**caractérisé en ce que** le système électronique de mesure (7, 7', 7'', 7''', 107, 107', 107'', 107''', 107$^{IV}$, 107$^V$, 207, 207', 707) est agencé pour déterminer l'état de l'ensemble d'accumulation d'énergie (3, 3', 3'', 3''', 103, 103', 103'', 103''', 103$^{IV}$, 103$^V$, 203, 403, 503, 703) à l'aide d'une tension mesurée, la tension mesurée étant comparée à une tension nominale et à un seuil de décharge totale de l'ensemble d'accumulation d'énergie (3, 3', 3'', 3''', 103, 103', 103'', 103''', 103$^{IV}$, 103$^V$, 203, 403, 503, 703) et cependant que le système électronique de mesure (7, 7', 7'', 7''', 107, 107', 107'', 107''', 107$^{IV}$, 107$^V$, 207, 207', 707) est de plus agencé pour adapter le débit de données (p) en fonction de l'état de l'ensemble d'accumulation d'énergie (3, 3', 3'', 3''', 103, 103', 103'', 103''', 103$^{IV}$, 103$^V$ 203, 403, 503, 703), pour réduire un envoi de paquets de données ($F_1$, $D_1$, $D_2$, $D_3$, $D_4$, $D_5$) dans des phases de charge accrue de l'ensemble d'accumulation d'énergie (3, 3', 3'', 3''', 103, 103', 103'', 103''', 103$^{IV}$ 103$^V$ 203, 403, 503, 703), en particulier en raison de détériorations partielles, d'un effet mémoire ou de décharges particulièrement fortes, et pour interrompre un envoi de paquets de données ($F_1$, $D_1$, $D_2$, $D_3$, $D_4$, $D_5$) dans le cas d'une décharge totale de l'ensemble d'accumulation d'énergie (3, 3', 3'', 3''', 103, 103', 103'', 103''', 103$^{IV}$, 103$^V$, 203, 403, 503, 703).

21. Procédé d'exploitation d'un dispositif de surveillance de batterie (50, 50', 150, 150') selon la revendication 20, **caractérisé en ce que** le procédé d'exploitation est exécuté dans une unité centrale de batterie (51) ou un système d'alimentation en courant sans interruption (152) avec surveillance de batterie (23) selon l'une des caractéristiques 1 à 19.

22. Procédé d'exploitation d'un dispositif de surveillance de batterie (50, 50', 150, 150') selon la revendication 20 ou 21, **caractérisé en ce qu'**une tension d'émission pour les paquets de données ($F_1$, $D_1$, $D_2$, $D_3$, $D_4$, $D_5$) est plus petite que 0,5 fois la tension nominale (235) de l'ensemble d'accumulation d'énergie (3, 3', 3'', 3''', 103, 103', 103'', 103''', 103$^{IV}$, 103$^V$, 203, 403, 503, 703).

23. Procédé d'exploitation d'un dispositif de surveillance de batterie (50, 50', 150, 150') selon l'une des revendications 20 à 22, **caractérisé en ce qu'**un moment de l'envoi des paquets de données ($F_1$, $D_1$, $D_2$, $D_3$, $D_4$, $D_5$) est commandé de manière indépendante par chaque système électronique de mesure (7, 7', 7'', 7''', 107, 107', 107'', 107''', 107$^{IV}$, 107$^V$, 207, 207', 707).

24. Procédé d'exploitation d'un dispositif de surveillance de batterie (50, 50', 150, 150') selon la revendication 23, **caractérisé en ce que** la commande indépendante du moment de l'envoi des paquets de données ($F_1$, $D_1$, $D_2$, $D_3$, $D_4$, $D_5$) par chaque système électronique de mesure (7, 7', 7'', 7''', 107, 107', 107'', 107''', 107$^{IV}$, 107$^V$, 207, 207', 707) est effectuée par l'utilisation d'un minuteur (242) existant dans le système électronique de mesure (7, 7', 7'', 7''', 107, 107', 107'', 107''', 107$^{IV}$, 107$^V$, 207, 207', 707), fonctionnant de manière autonome, et par des paramètres de fonctionnement enregistrés dans le système électronique de mesure (7, 7', 7'', 7''', 107, 107', 107'', 107''', 107$^{IV}$, 107$^V$, 207, 207', 707).

25. Procédé d'exploitation d'un dispositif de surveillance de batterie (50, 50', 150, 150') selon l'une des revendications 20 à 24, **caractérisé en ce que** chaque système électronique de mesure (7, 7', 7'', 7''', 107, 107', 107'', 107''', 107$^{IV}$, 107$^V$, 207, 207', 707) saisit les informations (213) au moyen du dispositif de mesure (9, 9', 9'', 9''', 9$^{IV}$, 9$^V$, 9$^{VI}$, 9$^{VII}$, 209, 209') sur l'ensemble d'accumulation d'énergie (3, 3', 3'', 3''', 103, 103', 103'', 103''', 103$^{IV}$, 103$^V$, 203, 403, 503, 703) raccordé électriquement.

26. Procédé d'exploitation d'un dispositif de surveillance de batterie (50, 50', 150, 150') selon la revendication 25, **caractérisé en ce que** les informations saisies (213) sont au moins une grandeur de mesure à plusieurs valeurs (314), à savoir une valeur de tension à plusieurs valeurs ou une valeur de température à plusieurs valeurs.

**27.** Procédé d'exploitation d'un dispositif de surveillance de batterie (50, 50', 150, 150') selon l'une des revendications 20 à 26, **caractérisé en ce que** des paquets de données ($F_1$, $D_1$, $D_2$, $D_3$, $D_4$, $D_5$) transmis par chaque système électronique de mesure (7, 7', 7", 7''', 107, 107', 107", 107''', $107^{IV}$, $107^V$, 207, 207', 707) sont pourvus d'une identification d'accumulateur d'énergie (771).

**28.** Procédé d'exploitation d'un dispositif de surveillance de batterie (50, 50', 150, 150') selon l'une des revendications 20 à 27, **caractérisé en ce que** l'envoi a lieu par un signal haute fréquence avec au moins une information de redondance.

**29.** Procédé d'exploitation d'un dispositif de surveillance de batterie (50, 50', 150, 150') selon la revendication 28, **caractérisé en ce que** l'envoi a lieu en utilisant un codage Manchester.

**30.** Procédé d'exploitation d'un dispositif de surveillance de batterie (50, 50', 150, 150') selon l'une des revendications 20 à 29, **caractérisé en ce que** le système électronique de mesure (7, 7', 7", 7''', 107, 107', 107", 107''', $107^{IV}$, $107^V$, 207, 207', 707) envoie des paquets de données ($F_1$, $D_1$, $D_2$, $D_3$, $D_4$, $D_5$) pendant une phase de fonctionnement normal ($t_{Phas}$) en respectant un débit minimal moyen (p) et un récepteur (5, 5', 105, 105', 505) classe une réception de paquets de données ($F_1$, $D_1$, $D_2$, $D_3$, $D_4$, $D_5$) qui sont évalués comme des paquets de données ($F_1$, $D_1$, $D_2$, $D_3$, $D_4$, $D_5$) exploitables, reçus avec un débit plus faible qu'une valeur seuil du débit minimal (p), comme étant une perturbation.

**31.** Procédé d'exploitation d'un dispositif de surveillance de batterie (50, 50', 150, 150') selon l'une des revendications 20 à 30, **caractérisé en ce qu'**un envoi de paquets de données ($F_1$, $D_1$, $D_2$, $D_3$, $D_4$, $D_5$) est suspendu dans des phases de charge accrue de l'ensemble d'accumulation d'énergie (3, 3', 3", 3''', 103, 103', 103", 103''', $103^{IV}$, $103^V$, 203, 403, 503, 703).

**32.** Procédé d'exploitation d'un dispositif de surveillance de batterie (50, 50', 150, 150') selon l'une des revendications 20 à 31, **caractérisé en ce que** l'envoi de paquets de données ($F_1$, $D_1$, $D_2$, $D_3$, $D_4$, $D_5$) se fait par au moins un système électronique de mesure (7, 7', 7", 7''', 107, 107', 107", 107''', $107^{IV}$, $107^V$, 207, 207', 707) à des intervalles qui varient, également désignés de pauses de transmission de données ($D_p$).

**33.** Procédé d'exploitation d'un dispositif de surveillance de batterie (50, 50', 150, 150') selon l'une des revendications 20 à 32, **caractérisé en ce que** le débit de données (p) est adapté en fonction d'un état de charge de l'ensemble d'accumulation d'énergie (3, 3', 3", 3''', 103, 103', 103", 103''', $103^{IV}$, $103^V$, 203, 403, 503, 703).

**Fig. 1**

140'' 103 107 107'' 140' 111' 150 103'''
103'' 140 111 111'' 140''' 103' 107' 103''' 104 100

140^IV 103^IV 111^IV 107^IV 140^V 103^V 111^V 107^V 111''' 107'''

Fig. 2

Fig. 3

Fig. 4

**Fig. 5**

**Fig. 6**

Fig. 7

Fig. 8

Fig. 9

Fig. 10

Fig. 11

**Fig. 12**

**Fig. 13**

**Fig. 14**

**Fig. 15**

**Fig. 16**

Fig. 17

Fig. 18

Fig. 19

Fig. 20

**EP 2 770 605 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2081415 B1
- DE 102008017533 B3
- DE 102007062957 A1
- AT 506780 B1
- DE 19836141 C1
- EP 0980131 B1
- US 2009140870 A1
- US 2008129522 A1
- CN 101349738 A
- JP 2000123883 A
- US 2003175560 A1, Hun-June Kim
- US 2012116699 A1
- US 2008094068 A1
- EP 2434583 A1
- US 20130002208 A1
- DE 4306185 C2
- DE 60128601 T2
- DE 69629470 T2
- EP 1462813 B1
- EP 0832391 B1
- WO 96041408 A1